# EUROPEAN PATENT APPLICATION

(11) **EP 2 862 902 A1**
(43) Date of publication of application: **22.04.2015**
(21) Application number: 13182245.4
(22) Date of filing: 29.08.2013
(51) Int. Cl.: C09B 67/22

(54) **Dye mixtures of metal free reactive dyes, production and use**

(71) Applicant: DyStar Colours Distribution GmbH, 65479 Raunheim (DE)
(72) Inventor: Barbieru, Roxana,, Unit 331C, Singapore 117468 (SG); Han, Yuan, Jurong West Street 81, Singapore 640837 (SG); Connoly, Brian,, 53797 Lohmar (DE); Murgatroyd, Adrian,, 65929 Frankfurt (DE); Grund, Clemens, 65795 Hattersheim (DE)
(74) Representative: Weingarten, Ulrich

(57) **Abstract**

The present invention is directed to dye mixture(s) comprising at least one dye of general formula (I) 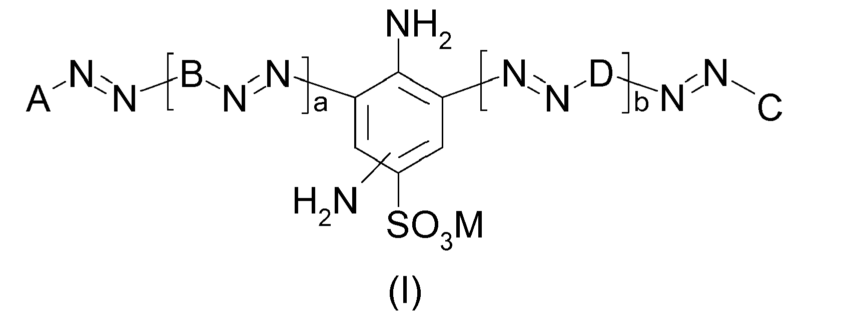 and at least one dye selected from the group consisting of the dyes of formula (IIa)-(IIf) 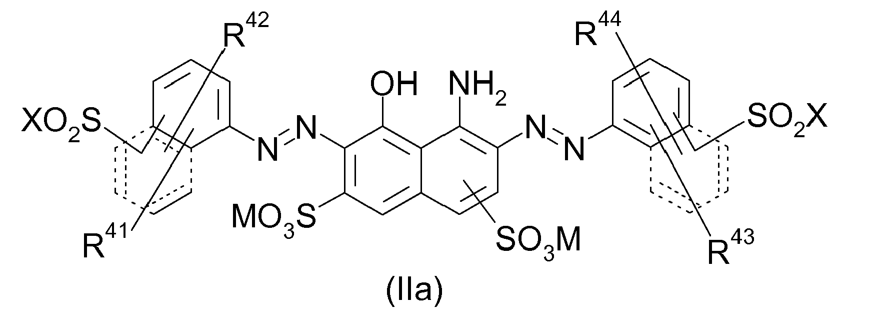 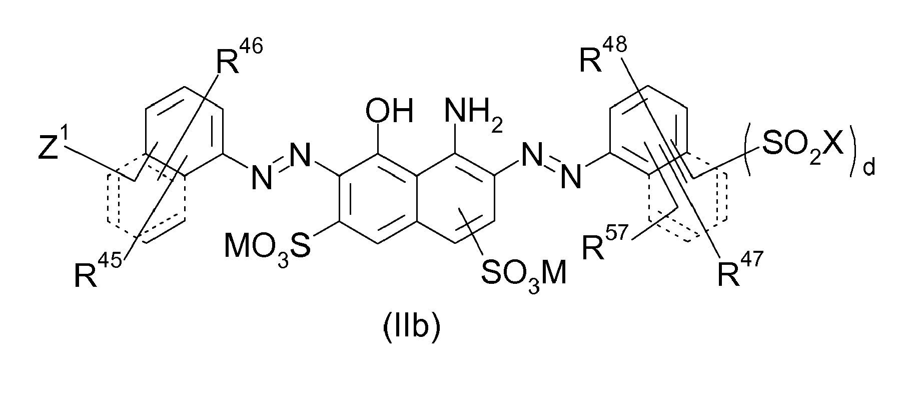 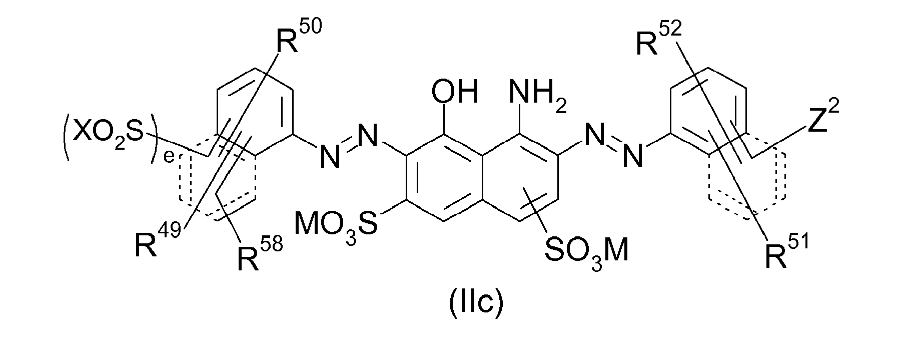 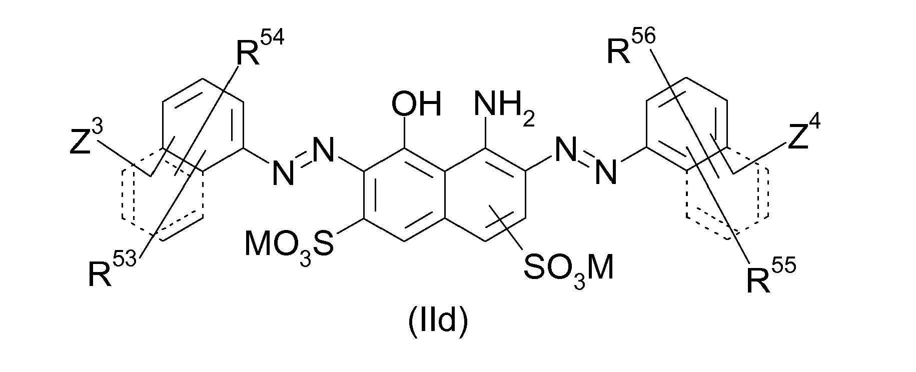 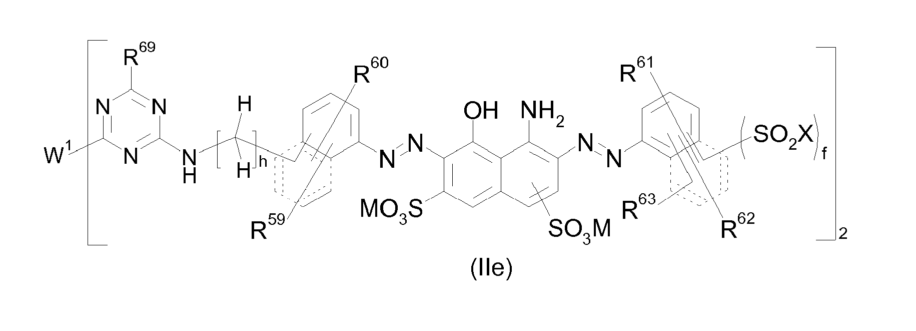 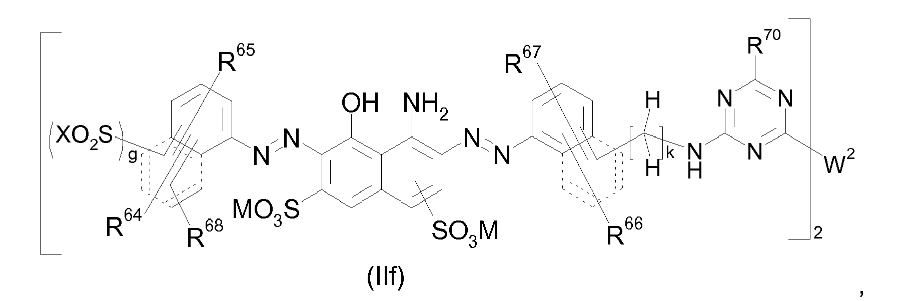 process for their production and their use for dying fibers and textiles.

## Description

The present invention relates to the technical field of metal free reactive dyes.

Mixed metal free reactive dyes and their use for dyeing and printing of hydroxyl-, amino-, and/or carboxamido-containing material in black and dark brown shades are known from prior art and can be used as colorants in different applications, see for example US 5,445,654, US 5,611,821, KR 94-2560, Sho 58-160362 and EP 0 870 807. However, they have a number of technical disadvantages such as unsatisfactory light fastness and insufficient or unlevel color build-up.

Consequently, there is a continuous demand for novel reactive dyes or reactive dye mixtures having improved properties, such as deep color build-up coupled with good fastness properties. Surprisingly, it has now been found that the dye mixtures described in the present invention show these above-mentioned properties to a high degree. The novel dye mixtures are remarkable for high build-up, excellent light fastness and good overall fastness properties on the materials mentioned above and on blends containing them. Most importantly, the dye mixtures described in the present invention are metal free and thus superior in ecological performance and provide dyeings that are of very good levelness.

The present invention accordingly provides dye mixtures comprising at least one dye of general formula (I) 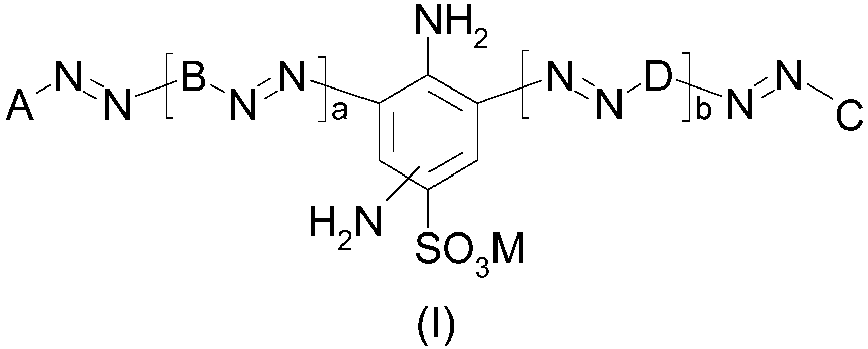 and at least one dye selected from the group consisting of the dyes of formula (IIa)-(IIf) 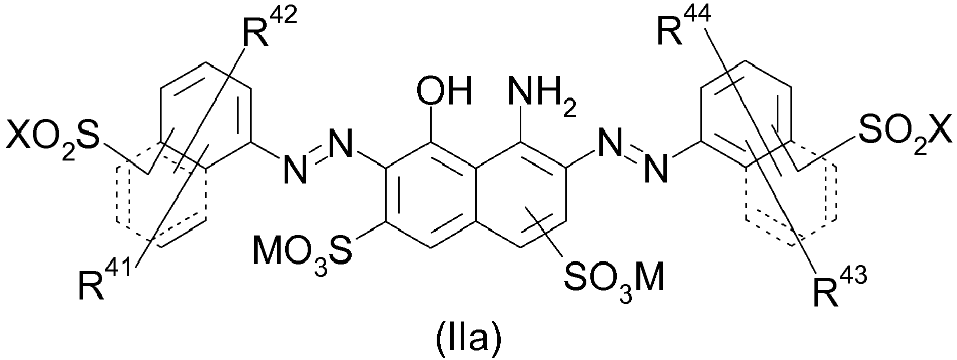 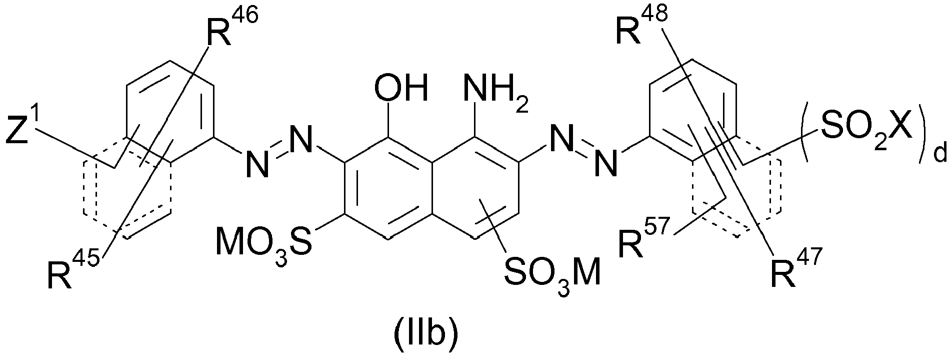 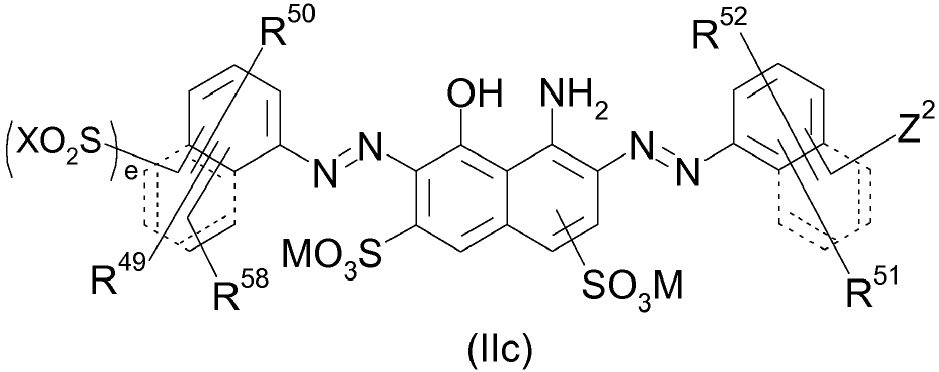 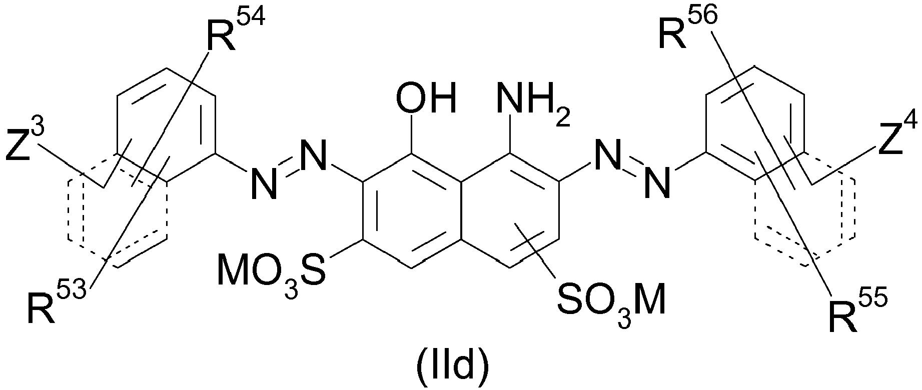 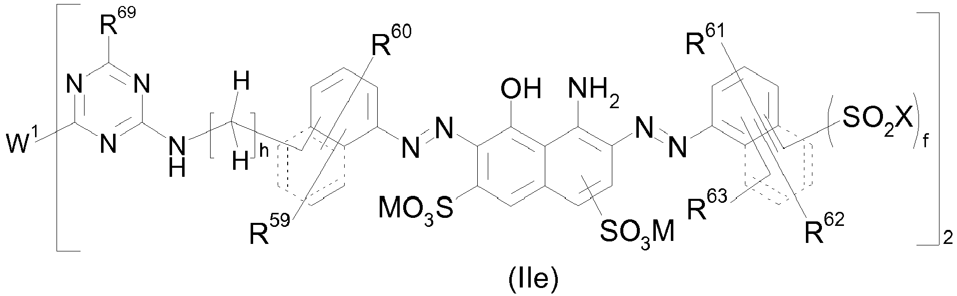 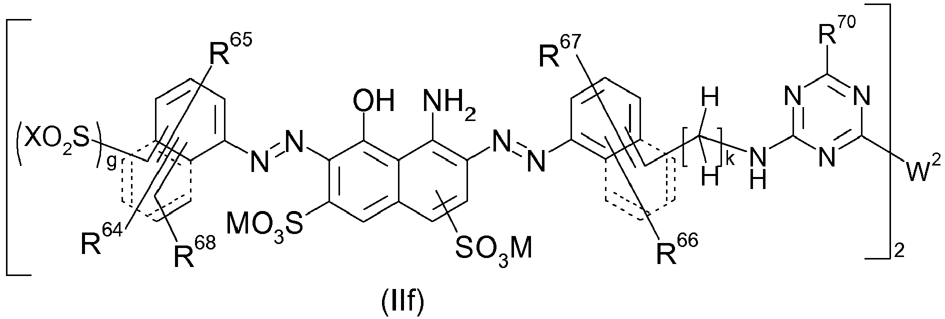 wherein,
each of A and C, independent of each other is a radical of general formula (1a) 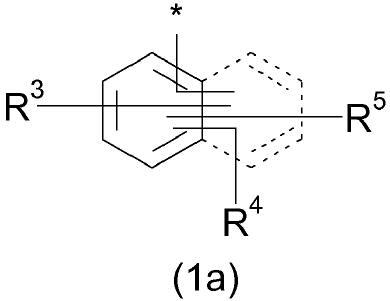 wherein
each of R³ to R⁵, independent of each other is hydrogen, halogen, alkyl, N-acylamino, alkoxy, thioalkoxy, hydroxy, cyano, nitro, alkoxycarbonyl, alkoxythiocarbonyl, acyl, thioacyl, aryloyl, trifluoromethyl, acyloxy, aryloyloxy, cycloalkyl, aryl, heteroaryl, heterocycloalkyl, N-cinnamoylamino, SO₃M or COOM, or
is alkyl substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy and aryloyloxy, or
is alkyl interrupted by one or more heteroatoms such as oxygen or sulphur and substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy and aryloyloxy, or
is SO₂-X, where X is vinyl or a radical -CH₂CH₂-Y and Y is a group removable under alkaline conditions such as OSO₃M, SSO₃M, OCOCH₃, OPO₃M or halogen, or
is a group of general formula (2a) 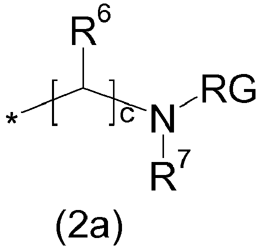 wherein
R⁶ is hydrogen, halogen, alkyl, N-acylamino, alkoxy, thioalkoxy, hydroxy, cyano, alkoxycarbonyl, alkoxythiocarbonyl, acyl, thioacyl, aryloyl, trifluoromethyl, acyloxy, aryloyloxy, cycloalkyl, aryl, heteroaryl, heterocycloalkyl, SO₃M or COOM, or
is alkyl substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy and aryloyloxy, or
is alkyl interrupted by one or more heteroatoms such as oxygen or sulphur and substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy and aryloyloxy,
R⁷ is hydrogen, alkyl, cycloalkyl or aryl, or
is alkyl substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy and aryloyloxy, or
is alkyl interrupted by one or more heteroatoms such as oxygen or sulphur and substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy and aryloyloxy,
c is an integer of 0 to 6,
RG is a reactive anchor of general formula (3a), (3b) or (3c), 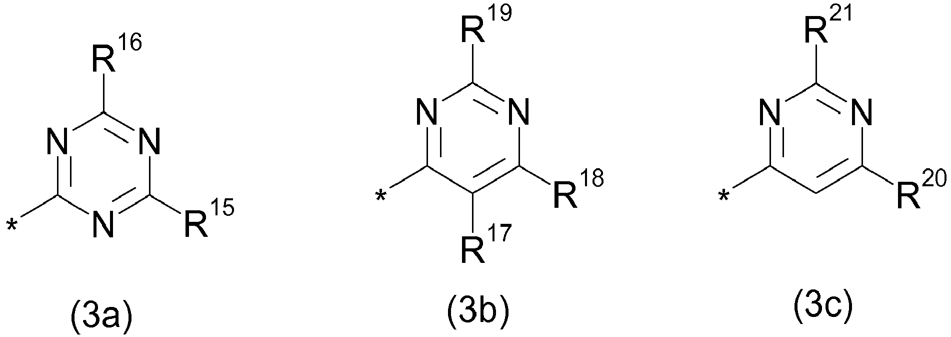 wherein
each of R¹⁶ to R²¹, independent of each other is halogen,
R¹⁶ can also be a rest of formula (4a) 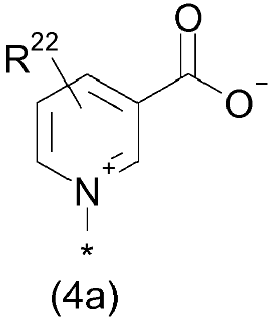 wherein
R²² is hydrogen, halogen, alkyl, alkoxy, thioalkoxy, hydroxy, cycloalkyl, aryl, heteroaryl, heterocycloalkyl, SO₃M or COOM, or
is alkyl substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy and aryloyloxy,
R¹⁵ is one of the groups selected from general formula (5a) or (5b), 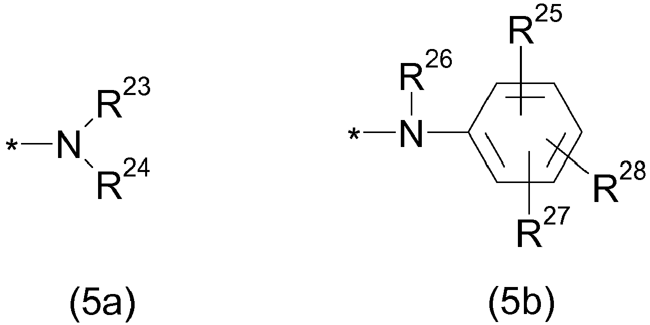 wherein
each of R²³, R²⁴ and R²⁶, independent of each other is hydrogen, alkyl, cycloalkyl or aryl, or
is alkyl substituted by one or more substituents selected from the group consisting of hydroxy, aryl, cycloalkyl, alkoxy, thioalkoxy, N-acylamino, N-alkylaminocarbonyl, N,N-dialkylaminocarbonyl, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy and aryloyloxy, or
is alkyl interrupted by one or more heteroatoms such as oxygen or sulphur and substituted by one or more substituents selected from the group consisting of hydroxy, aryl, cycloalkyl, alkoxy, thioalkoxy, N-acylamino, N-alkylaminocarbonyl, N,N-dialkylaminocarbonyl, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy and aryloyloxy,
each of R²⁵, R²⁷ and R²⁸, independent of each other is hydrogen, halogen, alkyl, N-acylamino, N-alkylaminocarbonyl, N,N-dialkylaminocarbonyl, alkoxy, thioalkoxy, hydroxy, cyano, alkoxycarbonyl, alkoxythiocarbonyl, acyl, thioacyl, aryloyl, sulfamoyl, trifluoromethyl, acyloxy, aryloyloxy, cycloalkyl, aryl, heteroaryl, heterocycloalkyl, SO₃M or COOM, or
is alkyl substituted by one or more substituents selected from the group consisting of hydroxy, aryl, cycloalkyl, alkoxy, thioalkoxy, N-acylamino, N-alkylaminocarbonyl, N,N-dialkylaminocarbonyl, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy and aryloyloxy, or is alkyl interrupted by one or more heteroatoms such as oxygen or sulphur and substituted by one or more substituents selected from the group consisting of hydroxy, aryl, cycloalkyl, alkoxy, thioalkoxy, N-acylamino, N-alkylaminocarbonyl, N,N-dialkylaminocarbonyl, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy and aryloyloxy,
R²⁴ can also be -CH₂CH₂-SO₂-X, where X is vinyl or a radical -CH₂CH₂-Y where Y is a group removable under alkaline conditions such as OSO₃M, SSO₃M, OCOCH₃, OPO₃M or halogen, and
R²⁸ can also be -SO₂-X where X is the same as defined above,
each of B and D, independent of each other is a radical of general formula (6a) 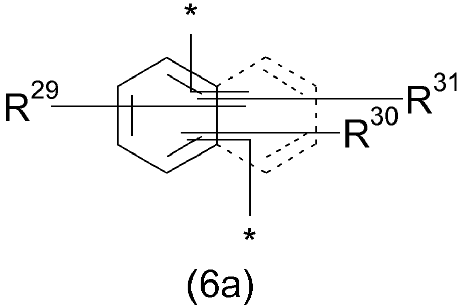 wherein
each of R²⁹ to R³¹, independent of each other is hydrogen, halogen, alkyl, N-acylamino, alkoxy, thioalkoxy, hydroxy, cyano, nitro, alkoxycarbonyl, alkoxythiocarbonyl, acyl, thioacyl, aryloyl, trifluoromethyl, acyloxy, aryloyloxy, cycloalkyl, aryl, heteroaryl, heterocycloalkyl, N-cinnamoylamino, SO₃M or COOM, or
is alkyl substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy and aryloyloxy, or
is alkyl interrupted by one or more heteroatoms such as oxygen or sulphur and substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy and aryloyloxy, or
is SO₂-X, where X is vinyl or a radical -CH₂CH₂-Y and Y is a group removable under alkaline conditions such as OSO₃M, SSO₃M, OCOCH₃, OPO₃M or halogen, or
is a group of general formula (2a) as defined above, each of a and b, independent of each other is an integer of 0 or 1 whereby a + b is not 0 and dyes of general formula (I) contain at least two reactive anchors,
M is hydrogen, lithium, sodium, potassium, ammonium or mono-, di-, tri- or tetra-(C₁-C₄)-alkylammonium, one equivalent of an alkali earth metal, or a monovalent organic cation,
each of R⁴¹ to R⁶⁸, independent of each other is hydrogen, halogen, alkyl, N-acylamino, alkoxy, thioalkoxy, hydroxy, cyano, nitro, alkoxycarbonyl, alkoxythiocarbonyl, acyl, thioacyl, aryloyl, trifluoromethyl, acyloxy, aryloyloxy, cycloalkyl, aryl, heteroaryl, heterocycloalkyl, N-cinnamoylamino, SO₃M or COOM, or
is alkyl substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy and aryloyloxy, or
is alkyl interrupted by one or more heteroatoms such as oxygen or sulphur and substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy and aryloyloxy,
each of R⁶⁹ and R⁷⁰ independent of each other is Cl or F,
each of d, e, f and g independent of each other is an integer of 0 or 1,
each of h and k independent of each other is an integer of 0 to 6,
each of Z¹ to Z⁴, independent of each other is a group of general formula (2a), where (2a) is the same as defined above,
each of W¹ and W², independent of each other is a linking group of general formula (7a), (7b) or (7c), 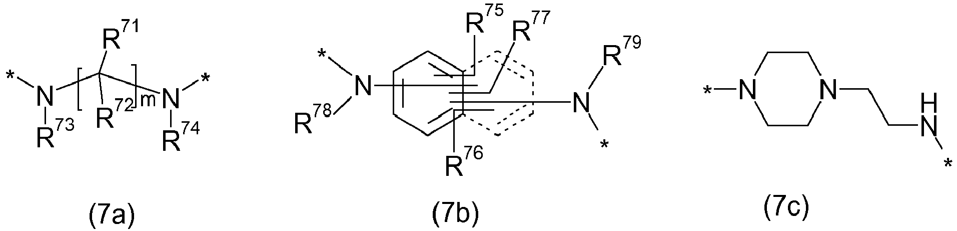 wherein
each of R⁷¹, R⁷², R⁷⁵, R⁷⁶ and R⁷⁷, independent of each other is hydrogen, halogen, alkyl, N-acylamino, N,N-dialkylamino, alkoxy, thioalkoxy, hydroxy, cyano, alkoxycarbonyl, alkoxythiocarbonyl, acyl, thioacyl, aryloyl, trifluoromethyl, acyloxy, aryloyloxy, cycloalkyl, aryl, heteroaryl, heterocycloalkyl, SO₃M or COOM, or
is alkyl substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy and aryloyloxy, or
is alkyl interrupted by one or more heteroatoms such as oxygen or sulphur and substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy and aryloyloxy, and
each of R⁷³, R⁷⁴, R⁷⁸ and R⁷⁹, independent of each other is hydrogen, alkyl, cycloalkyl or aryl, or
is alkyl substituted by one or more substituents selected from the group consisting of hydroxy, aryl, cycloalkyl, alkoxy, thioalkoxy, N-acylamino, N,N-dialkylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy and aryloyloxy, or
is alkyl interrupted by one or more heteroatoms such as oxygen or sulphur and substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy and aryloyloxy,
R⁷¹ or R⁷² can form rings with R⁷³,
m is an integer of 1 to 6,
M and X are the same as defined above and
*means point of attachment.

This invention refers to all kinds of tautomeric and geometric isomers of the dyes of the formula (I) and (IIa)-(IIf).

Alkyl groups appearing in this invention may be straight-chain or branched and are (C₁-C₁₂)-alkyl groups, preferably (C₁-C₈)-alkyl groups, for example n-butyl, isobutyl, n-pentyl, isopentyl, n-hexyl, 2-ethylhexyl, sec-butyl, tert-butyl and methylbutyl.

The same applies to alkoxy groups which accordingly are preferably (C₁-C₈)-alkoxy, for example methoxy and ethoxy, to thioalkoxy groups, which are preferably (C₁-C₈)-thioalkoxy, for example -SCH₃ or -SC₂H₅.

Cycloalkyl groups are preferably (C₃-C₈)-cycloalkyl and especially preferably cyclopentyl and cyclohexyl. The term cyloalkyl comprises for the purpose of the present application substituted cycloalklyl groups and unsatured cycloalkyl groups as well. A preferred group of this type is cyclopentenyl. Preferred substituents are alkyl, hydroxyalkyl, halogen, hydroxyl, alkoxy, acyl, cyano, nitro, amino, monoalkylamino, dialkylamino, mono(hydroxyalkyl)amino, bis-(hydroxyalkyl)amino, monoalkyl-mono-(hydroxyalkyl)amino, carbamoyl, sulfamoyl, acylamino, ureido, aminosulfonylamino, alkoxycarbonyl and acyloxy.

Aryl groups in this invention are preferably phenyl or naphthyl. The terms phenyl and naphthyl comprises unsubstituted as well as substituted phenyl and naphthyl. Preferred substituents are alkyl, cycloalkyl, heterocycloalkyl, hydroxyalkyl, halogen, hydroxyl, alkoxy, alkylthio, acyl, nitro, cyano, amino, monoalkylamino, dialkylamino, mono(hydroxyalkyl)amino, bis (hydroxyalkyl)amino, monoalkyl-mono(hydroxyalkyl)-amino, carbamoyl, sulfamoyl, acylamino, ureido, aminosulfonylamino, alkoxycarbonyl or acyloxy.

Heteroaryl groups appearing in this invention are preferably pyridine, pyrimidine, pyridazine, pyrazine, pyrrole, imidazole, pyrazole, 1,2,4-thiadiazole, 1,2,4-triazole, tetrazole, thiophene, thiazole, isothiazole, benzothiazole, benzoisothiazole, 1,3,4-thiadiazole, furane, oxazole, benzoxazole or isoxazole. The terms heteroayl comprises the above groups in unsubstituted as well as in substituted form. Preferred substituents are alkyl, hydroxyalkyl, halogen, hydroxyl, alkoxy, alkylthio, acyl, nitro, cyano, amino, monoalkylamino, dialkylamino, mono(hydroxyalkyl)amino, bis (hydroxyalkyl)amino, monoalkyl-mono(hydroxyalkyl)amino, carbamoyl, sulfamoyl, acylamino, ureido, aminosulfonylamino, alkoxycarbonyl and acyloxy.

Heterocycloalkyl groups are preferably pyrrolidine, piperidine, morpholine, tetrahydrofuran or piperazine. The term heterocycloalkyl comprises the above groups in unsubstituted as well as in substituted form. Preferred substituents are alkyl, hydroxyalkyl, halogen, hydroxyl, alkoxy, alkylthio, acyl, nitro, cyano, amino, monoalkylamino, dialkylamino, mono(hydroxyalkyl)amino, bis (hydroxyalkyl)amino, monoalkyl-mono(hydroxyalkyl)amino, carbamoyl, sulfamoyl, acylamino, aminocarbonylamino, aminosulfonylamino, alkoxycarbonyl and acyloxy.

Halogen is preferably chlorine, bromine or fluorine.

M is preferably hydrogen, lithium, sodium, or potassium.

A group removable under alkaline conditions (Y) is a group, which will leave the molecule under alkaline conditions to yield the vinyl sulfone function. Examples of such groups are OSO₃M, SSO₃M, OCOCH₃, OPO₃M and halogen.

Preferred mixtures comprise at least one dye of general formula (1a) 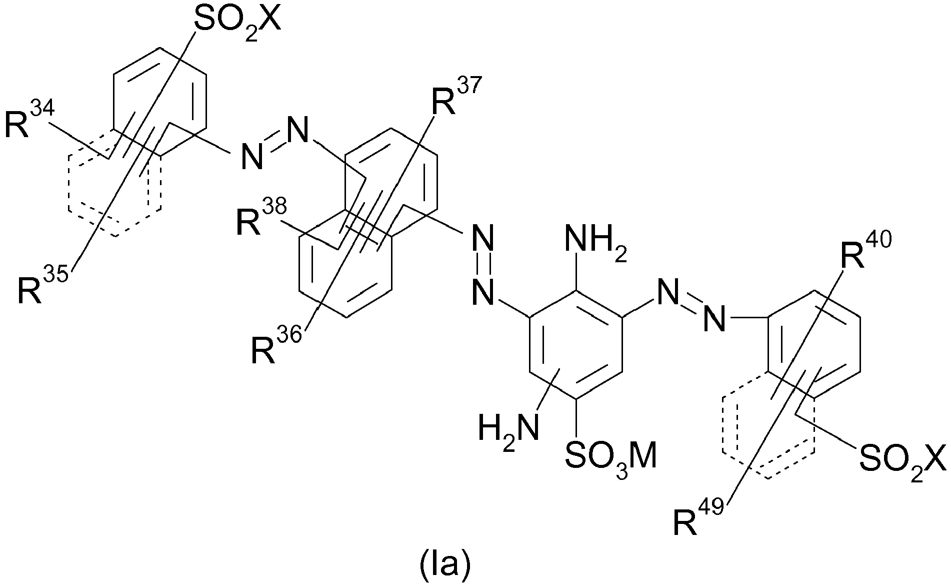 and at least one dye of general formula (IIa) or (IIb) 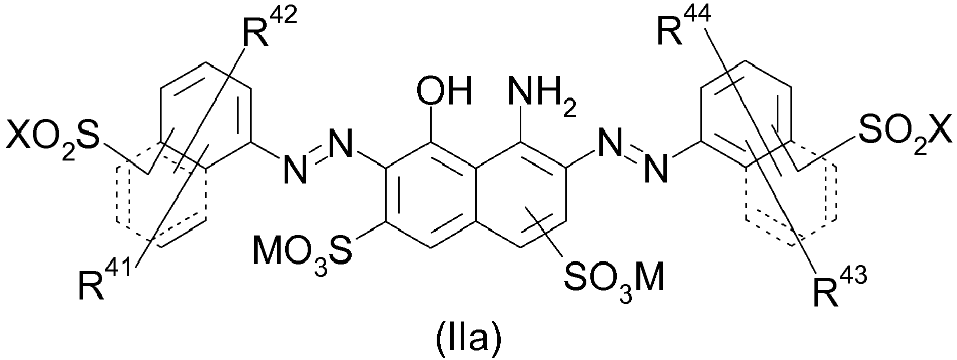 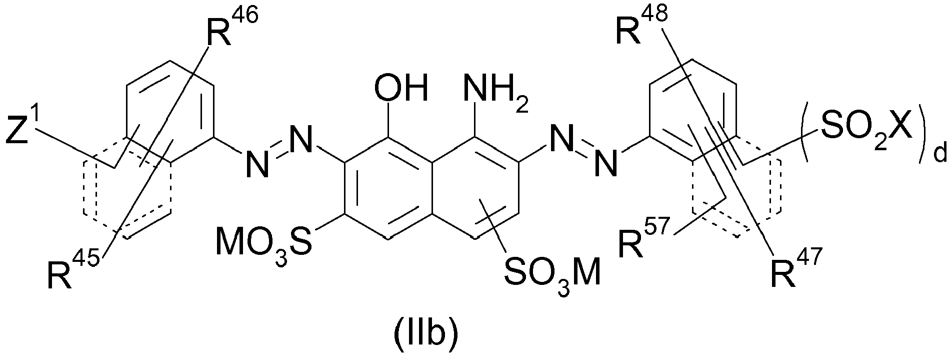 wherein
each of R³⁴ to R⁴⁰, independent of each other is hydrogen, halogen, alkyl, N-acylamino, alkoxy, hydroxy, cyano, nitro, alkoxycarbonyl, acyl, aryloyl, trifluoromethyl, acyloxy, aryloyloxy, cycloalkyl, aryl, heteroaryl, heterocycloalkyl, N-cinnamoylamino, SO₃M or COOM,
X and M are the same as defined above,
in formula (1a)
each of R³⁴ to R⁴⁰, independent of each other is hydrogen, (C₁-C₄)alkyl, (C₁-C₄)alkoxy, halogen, acyl, N-acylamino or SO₃M,
X is vinyl or β-sulfatoethyl,
in formula (IIa) and (IIb)
each of R⁴¹ to R⁴⁸ and R⁵⁷, independent of each other is hydrogen, (C₁-C₄)alkyl, (C₁-C₄)alkoxy, halogen, acyl, N-acylamino or SO₃M,
Z¹ is defined as above whereby
c is 0 or 1,
R⁶ and R⁷ is hydrogen or alkyl,
R¹⁶ to R²¹ independent of each other is halogen,
R²² is hydrogen,
each of R²³, R²⁴ and R²⁶ independent of each other is hydrogen, alkyl, or aryl,
each of R²⁵, R²⁷ and R²⁸ independent of each other is hydrogen, halogen, alkyl, N-acylamino, alkoxy, hydroxy, acyl, aryloyl, trifluoromethyl, acyloxy, cycloalkyl, aryl, heteroaryl, SO₃M or COOM,
R²⁴ can also be -CH₂CH₂-SO₂-X, where X is vinyl or a radical -CH₂CH₂-Y where Y is a group removable under alkaline conditions such as OSO₃M, SSO₃M, OCOCH₃, OPO₃M or halogen, and
R²⁸ can also be -SO₂-X where X is the same as defined above,
X is most preferred to be vinyl or β-sulfatoethyl.

Even more preferred is a dye mixture as described above, comprising at least one dye of general formula (Ib) 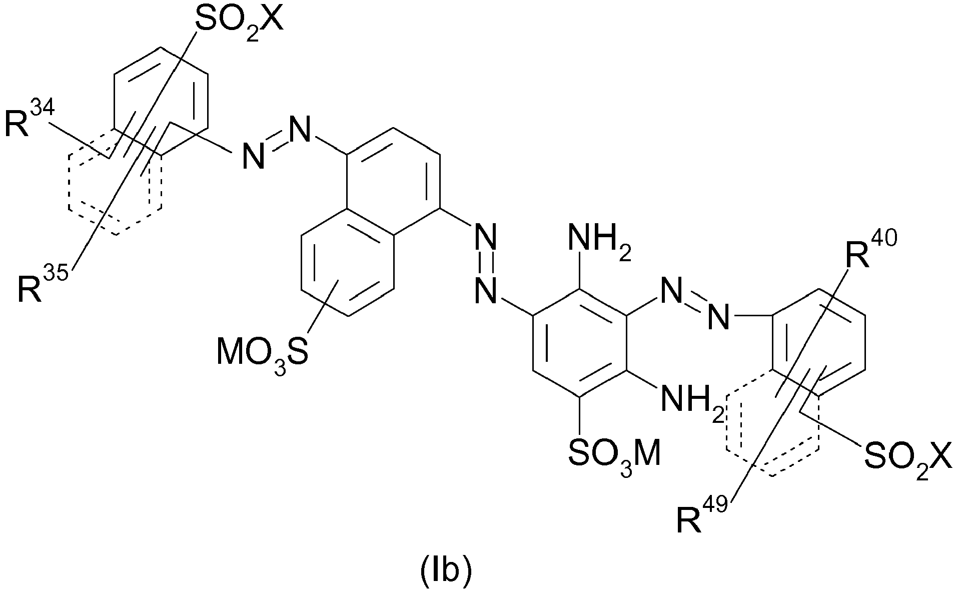 wherein
each of R³⁴, R³⁵, R³⁹ and R⁴⁰ independent of each other is hydrogen, (C₁-C₄)alkyl, (C₁-C₄)alkoxy, SO₃M or COOM,
M is the same as defined above and
X is vinyl or β-sulfatoethyl.

Also highly preferred are dye mixtures as described above, comprising at least one dye of the general formula (IIa) or (IIb) 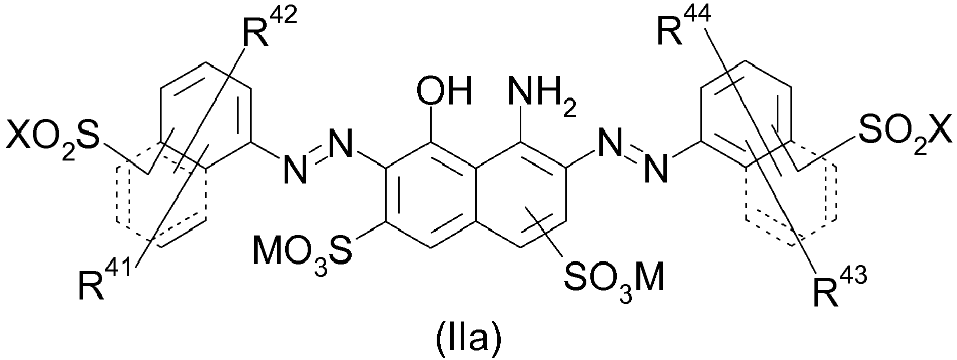 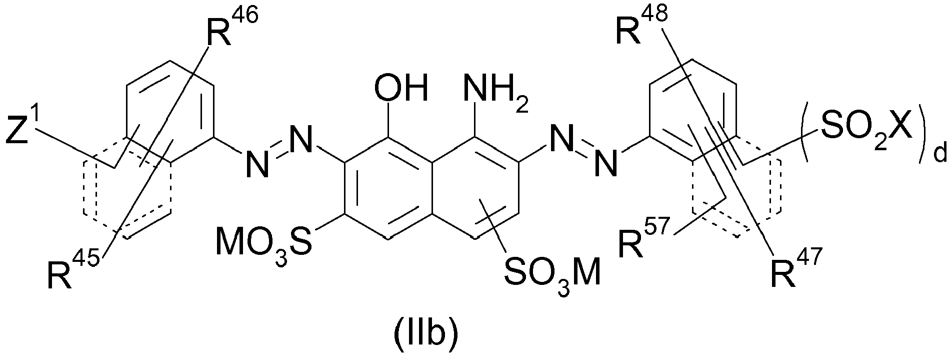 wherein, in the formula (IIa) or (IIb),
each of R⁴¹ to R⁴⁸ and R⁵⁷, independent of each other is hydrogen, (C₁-C₄)alkyl, (C₁-C₄)alkoxy or SO₃M,
Z¹ is defined as above whereby
c is 0 or 1,
R⁶ and R⁷ are hydrogen,
R¹⁶ to R²¹, independent of each other is halogen,
R²² is hydrogen, each of R²³, R²⁴ and R²⁶ independent of each other is hydrogen, (C₁-C₄)alkyl, (C₁-C₄)alkoxy, SO₃M or COOM or aryl,
each of R²⁵, R²⁷ and R²⁸ independent of each other is hydrogen, (C₁-C₄)alkyl, (C₁-C₄)alkoxy, SO₃M or COOM,
R²⁴ can also be -CH₂CH₂-SO₂-X, where X is vinyl or a radical -CH₂CH₂-Y where Y is a group removable under alkaline conditions such as OSO₃M, SSO₃M, OCOCH₃, OPO₃M or halogen, and
R²⁸ can also be -SO₂-X where X is the same as defined above,
X is vinyl or β-sulfatoethyl.

Most particulary preferred mixtures comprise at least one dye of the formula (Ib) 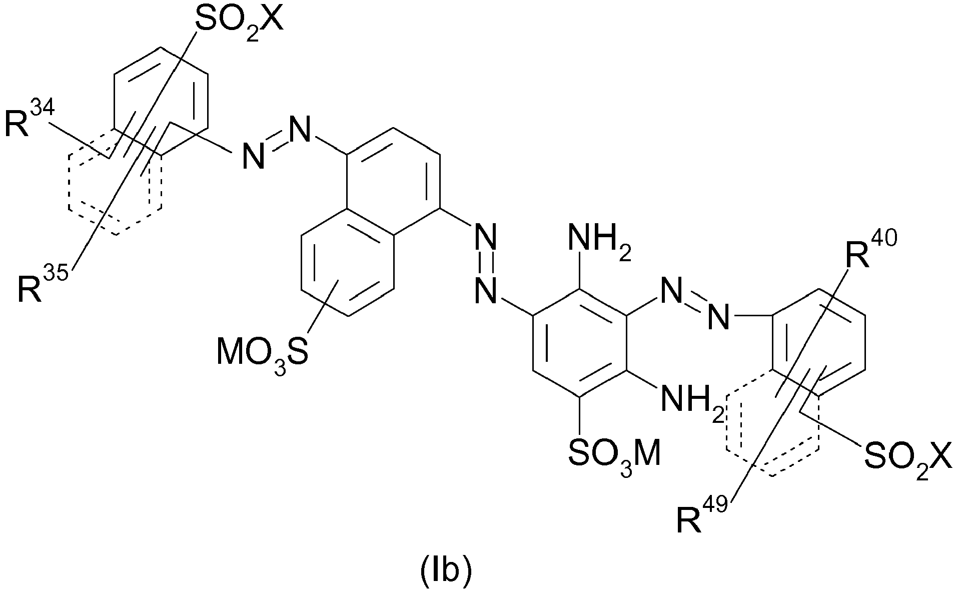 and at least one dye of the general formula (IIa) or (IIb) 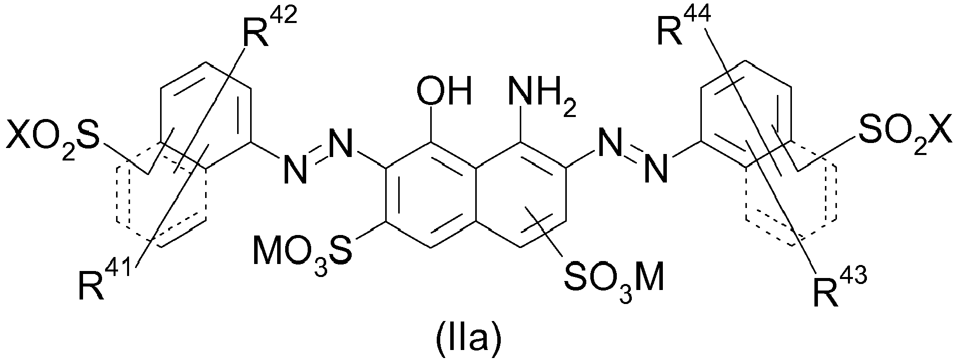 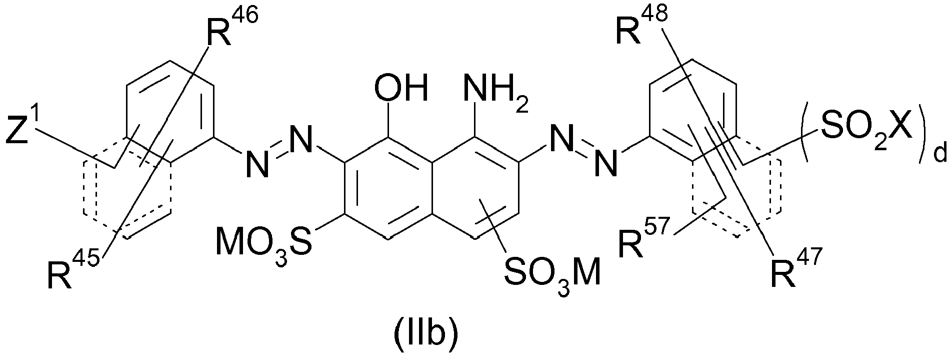 wherein,
each of R³⁴, R³⁵, R³⁹ and R⁴⁰, independent of each other is hydrogen, (C₁-C₄)alkyl, (C₁-C₄)alkoxy, SO₃M or COOM,
M is the same as defined above,
X is vinyl or β-sulfatoethyl,
in the formula (IIa) or (IIb),
each of R⁴¹ to R⁴⁸ and R⁵⁷ independent of each other is hydrogen, (C₁-C₄)alkyl, (C₁-C₄)alkoxy or SO₃M,
Z¹ is defined as above with
c is 0 or 1,
R⁶ and R⁷ are hydrogen,
R¹⁶ to R²¹ independent of each other is halogen,
R²² is hydrogen, each of R²³, R²⁴ and R²⁶ independent of each other is hydrogen, (C₁-C₄)alkyl, (C₁-C₄)alkoxy, SO₃M or COOM or aryl,
each of R²⁵, R²⁷ and R²⁸ independent of each other is hydrogen, (C₁-C₄)alkyl, (C₁-C₄)alkoxy, SO₃M or COOM,
R²⁴ can also be -CH₂CH₂-SO₂-X, where X is vinyl or a radical -CH₂CH₂-Y where Y is a group removable under alkaline conditions such as OSO₃M, SSO₃M, OCOCH₃, OPO₃M or halogen,
R²⁸ can also be -SO₂-X where X is the same as defined above,
X is vinyl or β-sulfatoethyl.

The dyes of the general formula (I) are obtainable via standard methods of synthesis known to one skilled in the art. The dyes of the general formula (IIa)-(IIf) can be prepared according to known procedures described e.g. in WO 03/106568 A1.

Ranges of weight% of the components of the inventive dye mixtures are e.g.:

| | |
|---|---|
| Component(s) of formula (I): | 5-95, preferably 25-80 |
| Component(s) of formula (IIa) to (IIf): | 95-5, preferably 75-20 |

In each dye mixture the components (I) and (IIa)-(IIf) add up to 100 % in case the dye mixture consists of the dyes mentioned above or to less than 100 % in case additional dyes are added e.g. as shading components. In such a case the amount of shading components preferably is less than 10, more preferred less than 5 and most preferred less than 2 weight % based on the weight of all dyes of the dye mixture, with the ratio of component(s) of formula (I) to those of formula (IIa-IIf) being the same as in the case of a composition consisting of those components.

The dyes according to the invention can be present as a preparation in solid or liquid (dissolved) form. In solid form, they contain, in general, the electrolyte salts customary in the case of water-soluble and especially fiber-reactive dyes, such as sodium chloride, potassium chloride and sodium sulphate, and may further contain the auxiliaries customary in commercial dyes, such as buffer substances capable of setting a pH in aqueous solution between 3 and 7, for example sodium acetate, sodium borate, sodium bicarbonate, sodium dihydrogenphosphate, sodium tricitrate and disodium hydrogenphosphate, and small amounts of siccatives or when they are present in a liquid, aqueous solution (including a content of thickeners of the type customary in print pastes), they may also contain substances which ensure a long life for these preparations, for example mold preventatives.

In solid form, the dye mixtures according to the invention are generally present as powders or grannules which contain electrolyte salt and which will hereinbelow generally be referred to as a preparation with or whithout one or more of the abovementioned auxiliaries. In the preparations, the dye mixture is present at 20 to 90% by weight, based on the preparation containing it. The buffer substances are generally present in a total amount of up to 5% by weight, based on the preparation.

When the dye mixtures according to the invention are present in an aqueous solution, the total dye content of these solutions is up to about 50% by weight, for example between 5 and 50% by weight, the electrolyte salt content preferably being below 10% by weight, based on the aqueous solution. The aqueous solutions (liquid preparations) can also contain buffer substances in an amount which is generally up to 5% by weight and preferably from 0.1 to 2% by wight.

The dye mixtures according to the invention are preparable in a conventional manner, for example by mechanically mixing the individual dyes, whether in the form of their dye powders or grannules or in the form of aqueous solutions, for example their as-synthesized solutions, which may additionally contain customary auxiliaries.

As an alternative, the dye mixtures according to the invention can be obtained by conventional diazotization and coupling reactions of suitable mixtures of diazo and coupling components in the desired amount ratios.

Dye mixtures contain vinylsulfonyl groups as reactive radicals can be synthesized not only starting from appropriately substituted vinylsulfonyl-anilines or naphthylamines but also by reaction of a dye mixture with a vinylizable reaction group such as the β-sulfatoethylsulfonyl in alkaline medium at a temperature, for example, from 20 to 80 °C, at a pH of, for example, from 7 to 14. This conversion is effected in a manner familiar to one skilled in the art.

The dyes of the dye mixtures in the present invention are fiber-reactive containing fiber-reactive functional rests. Fiber-reactive functional rests refer to rests capable of reacting with the hydroxyl groups of cellulosic materials, the amino, carboxyl, hydroxyl and thiol groups in the case of wool and silk, or with the amino and possibly carboxyl groups of synthetic polyamides to form covalent chemical bonds.

The dye mixtures of the present invention are suitable for dyeing and printing of natural, manufactured, regenerated, mechanically or chemically modified, recycled or synthetic hydroxyl-, amino-, and/or carboxamido-containing fiber materials and their blends by the application methods numerously described in the art for reactive dyes.

The present invention thus also provides for the use of the dye mixtures of the present invention for dyeing or printing the above-mentioned fiber materials and their blends, or rather processes for dyeing or printing such materials in a conventional manner, by using a dye mixture of the present invention as a colorant. The dye mixtures of the present invention provide shades from deep browns to deep blacks having good technical performance on these materials. Technical performance includes build-up, fastness properties and levelness.

Examples of natural fibre materials as described above are vegetable fibres such as seed fibres i.e. cotton, organic cotton, kapok, coir from coconut husk, bast fibers i.e. flax, hemp, jute, kenaf, ramie, rattan, leaf fibres i.e. sisal, henequen, banana, stalk fibres i.e. bamboo, and fibres from animals such as wool, organic wool, silk, cashmere wool, alpaca fiber, mohair, Angora fibre as well as fur and leather materials.

Examples of manufactured and regenerated fibres are cellulosic fibres such as paper and cellulosic regenerated fibres such as viscose rayon fibres, acetate and triacetate fibers and Lyocell fibers.

Examples of synthetic fiber materials as described above are nylon materials, like nylon-6, nylon-6.6 and aramid fibres.

The above-mentioned substrates to be dyed can be present in various forms such as but not limited to yarn, woven fabric, loop-formingly knitted fabric or carpet.

The dye mixtures of the present invention can be applied to and fixed on the materials mentioned, in particular on the fiber materials mentioned, by the application techniques known for water-soluble dyes and particularly for fiber-reactive dyes.

On cellulose fibers, they produce by the exhaust method from a short liquor as well from a long liquor, by using various acid-binding agents and if appropriate neutral salts, such as sodium chloride or sodium sulfate, dyeings having good color yields. The liquor ratio can be selected within a wide range and is for example between 3:1 and 100:1 and preferably between 5:1 and 30:1. Applications are preferably from an aqueous batch at temperatures between 40 and 105 °C, if appropriate at a temperature of up to 130 °C under superatmospheric pressure, and if appropriate in the presence of customary dyeing auxiliaries. One possible procedure here is to introduce the material into the warm batch and to gradually heat the batch to the desired temperature and complete the dying operation. The neutral salts which accelerate the exhaustion of the dyes can also if desired only be added to the batch after the actual dyeing temperature has been reached.

Padding processes likewise provide excellent color yields and a very good color buildup on cellulose fibers, the dyes being fixable in a conventional manner by batching at room temperature or elevated temperature, for example at up to about 60 °C, or by steaming or by means of dry heat.

Similarly, the customary printing processes for cellulise fibers, which can be carried out in one step, for example by printing with a print paste containing sodium bicarbonate or some other acid-binding agent and by subsequent steaming at 100 to 130 °C, or in two steps, for example by printing with a neutral to weak acidic print color and then fixing either by passing the printed material through a hot electrolyte-containing alkaline batch or by overpadding with an alkaline electrolyte-containing padding liquor and subsequent batching or steming or dry heat treatment of the alkali-overpadded material, produce strong color prints with well-defined contours and a clear white ground. The outcome of the prints is affected little, if at all, by variations in the fixing conditions.

When fixing by means of dry heat in accordance with the customary thermofix processes, hot air at 120 to 200°C is used. In addition to the customary steam at 101 to 103 °C, it is also possible to use superheated steam and high-pressure steam at temperatures of up to 160 °C.

The acid-binding agents which effect the fixation of the dyes on the cellulose fibers are for example water-soluble basic salts of alkali metals and likewise alkaline earth metals of inorganic or organic acids or compounds which liberate alkali in the heat. Especially suitable are the alkali metal hydroxides and alkali metal salts of weak to medium inorganic or organic acids, the preferred alkali metal compounds being the sodium and potassium compounds. Such acid-binding agents are for example sodium hydroxide, potassium hydroxide, sodium carbonate, sodium bicarbonate, potassium carbonate, sodium formate, sodium dihydrogenphosphate, disodium hydrogenphosphate, sodium trichloroacetate, waterglass or trisodium phosphate.

The dye mixtures of the present invention are notable for outstanding color strength and a steep course of the buildup curve on cellulose fiber materials when applied in the familiar dyeing and printing processes. The dyeings and prints obtainable with the dye mixtures of the present invention on cellulose fiber materials further have good lightfastness and, in particular, good wetfastnesses, such as fastness to washing, water and acidic and alkaline perspiration.

The dyeings and prints obtained following the customary aftertreatment of rinsing to remove unfixed dye portions further exhibit good wetfastnesses, in particular since unfixed dye portions are easily washed off because of their good solubility in cold water.

Furthermore, the dye mixtures according to the invention are also notable for outstanding color strength and very good buildup on wool fiber materials when applied in the familiar dyeing and printing processes. The process of dyeing on wool is here carried out in a conventional manner from an acidic medium. For instance, acetic acid and/or ammonium sulfate or acetic acid and ammonium acetate or sodium acetate can be added to the dyebatch to obtain the desired pH. To obtain a dyeing of acceptable levelness, it is advisable to add a customary leveling agent, for example a leveling agent based on a reaction product of cyanuric chloride with three times the molar amount of an aminobenzensulfonic acid and/or of an aminonaphthalene sulfonic acid or on the basis of a reaction product of for example stearylamine with ethylene oxide. For instance, the dye mixture according to the invention is preferably subjuected to the exhaust process initially form an acidic dyebatch having a pH of about 3.5 to 5.5 under pH control and the pH is then, toward the end of the dyeing time, shifted into the neutral and optionally weakly alkaline range up to a pH of 8.5 to bring about, especially for very deep dyeings, the full reactive bond between the dyes of the dye mixtures according to the invention and the fiber. At the same time, the dye portion not reactively bound is removed. The dyeings and prints obtainable with the dye mixtures of the present invention on wool fiber materials further have very good lightfastness and, in particular, good wetfastnesses, such as fastness to washing, crossdyeing, potting and acidic and alkaline perspiration.

The procedure described herein also applies to the production of dyeings on fiber materials composed of other natural polyamides or of synthetic polyamides and polyurethanes. These materials can be dyed using the customary dyeing and printing processes described in the literature and known to one skilled in the art (see for example H.-K.Rouette, Handbuch der Textilveredlung, Deutscher Fachverlag GmbH, Frankfurt/Main). In general, the material to be dyed is introduced into the batch at a temperature of about 40 °C, agitated therein for some time, the dyebath is then adjusted to the desired weakly acidic, preferably weakly acetic acid, pH and the actual dyeing is carried out at a temperature between 60 and 98 °C. However, the dyeings can also be carried out at the boil or in sealed dyeing apparatus at temperatures of up to 106 °C. Since the water solubility of the dye mixtures according to the inventions is very good, they can also be used with advantage in customary continuous dyeing processes. The color strength of the dye mixtures according to the invention is very high. The dyeings obtainable with the dye mixtures of the present invention on polyamide fiber materials further have good lightfastness and, in particular, good wetfastnesses, such as fastness to washing, water and acidic and alkaline perspiration.

The dye mixtures of the present invention can also be used in digital printing processes, in particular in digital textile printing. Aqueous inks for digital printing which comprise a dye mixture of the present invention likewise form part of the subject matter of the present invention.

The inks of the present invention comprise a dye mixture of the present invention in amounts which preferably range from 0.1% by weight to 50% by weight, more preferably from 1% by weight to 30% by weight and most preferably from 1% by weight to 15% by weight, based on the total weight of the ink.

The inks, as well as the dye mixtures of the present invention may, if desired, contain further dyes used in digital printing.

For the inks of the present invention to be used in the continuous flow process, a conductivity of 0.5 to 25 mS/m can be set by adding an electrolyte. Useful electrolytes include for example lithium nitrate and potassium nitrate. The inks of the present invention may include organic solvents at a total level of 1-50% and preferably 5-30% by weight.

The inks of the present invention may further include customary additives, for example viscosity moderators to set viscosities in the range from 1.5 to 40.0 mPas in a temperature range from 20 to 50°C. Preferred inks have a viscosity of 1.5 to 20 mPas and particularly preferred inks have a viscosity of 1.5 to 15 mPas.

Useful viscosity moderators include rheological additives, for example: polyvinylcaprolactam, polyvinylpyrrolidone and their copolymers polyetherpolyol, associative thickeners, polyurea, polyurethane, sodium alginates, modified galactomannans, polyetherurea, polyurethane, nonionic cellulose ethers.

As further additives the inks of the invention may include surface-active substances to set surface tensions of 20 to 65 mN/m, which are adapted if necessary as a function of the process used (thermal or piezo technology). Useful surface-active substances include for example all surfactants, preferably nonionic surfactants, butyldiglycol and 1,2-hexanediol.

The inks of the present invention may further include customary additives, for example substances to inhibit fungal and bacterial growth in amounts from 0.01 to 1 % by weight based on the total weight of the ink.

The inks may be prepared in a conventional manner by mixing the components in water.

The inks of the present invention are particularly useful in inkjet printing processes for printing a wide variety of materials, in particular of wool and polyamide fibers.

In contrast to conventional textile printing, where the printing ink already contains all the fixing chemicals and thickeners for a reactive dye, in inkjet printing the auxiliaries have to be applied to the textile substrate in a separate pretreatment step. The pretreatment of the textile substrate, for example cellulose and regenerated cellulose fibers and also silk and wool, is effected with an aqueous alkaline liquor prior to printing. To fix reactive dyes there is a need for alkali, for example sodium carbonate, sodium bicarbonate, sodium acetate, trisodium phosphate, sodium silicate, sodium hydroxide, alkali donors such as sodium chloroacetate, sodium formate, hydrotropic substances such as urea, reduction inhibitors such as sodium nitrobenzenesulfonates, and also thickeners to prevent flowing of the motives when the printing ink is applied, for example sodium alginates, modified polyacrylates or highly etherified galactomannans. These pretreatment reagents are uniformly applied to the textile substrate in a defined amount using suitable applicators, for example using a 2- or 3- roll pad, contactless spraying technologies, by means of foam application or using appropriately adapted inkjet technologies, and subsequently dried. After printing, the textile fiber material is dried at 120 to 150 °C and subseuqnetly fixed.

The fixing of the inkjet prints prepared with reactive dyes may be effected at room temperature or with saturated steam, with superheated steam, with hot air, with microwaves, with infrared radiation, with laser or elctron beams or with other suitable energy transfer techniques.

A distinction is made between one- and two- phase fixing processes. In one-phase fixing, the necessary fixing chemicals are already on the textile substrate.

In two-phase fixing, this pretreatment is unnecessary. Fixing only requires alkali, which, following inkjet printing, is applied prior to the fixing process, without intermediate drying. There is no need for further additives such as urea or thickener. Fixing is followed by the print aftertreatment, which is the prerequisite for good fastness, high brilliance and an impeccable white groud.

The prints produced using the inks of the present invention have, in particular on polyamide, a high color strength and a high fiber-dye bond stability not only in the acidic region but also in the alkali region, also good lightfastness and good wetfastness properties, such as fastness to washing, water, crossdyeing, potting and alkaline and acidic perspiration.

The examples hereinbelow serve to illustrate the invention. Parts and percentages are by weight, unless otherwise stated. Parts by weight relate to parts by volume as the kilogram relative to the liter. The compounds described in the examples in terms of a formula are indicated in the form of the sodium salts, since they are generally prepared and isolated in the form of their salts, preferably sodium or potassium salts, and used for dyeing in the form of their salts. The starting compounds described in the examples hereinbelow can be used in the synthesis in the form of the free acid or likewise in the form of their salts, preferably alkali metal salts, such as sodium or potassium salts.

### EXAMPLE 1

29 parts of an electrolyte-containing dye powder containing the brown dye of the formula (Ia-1) 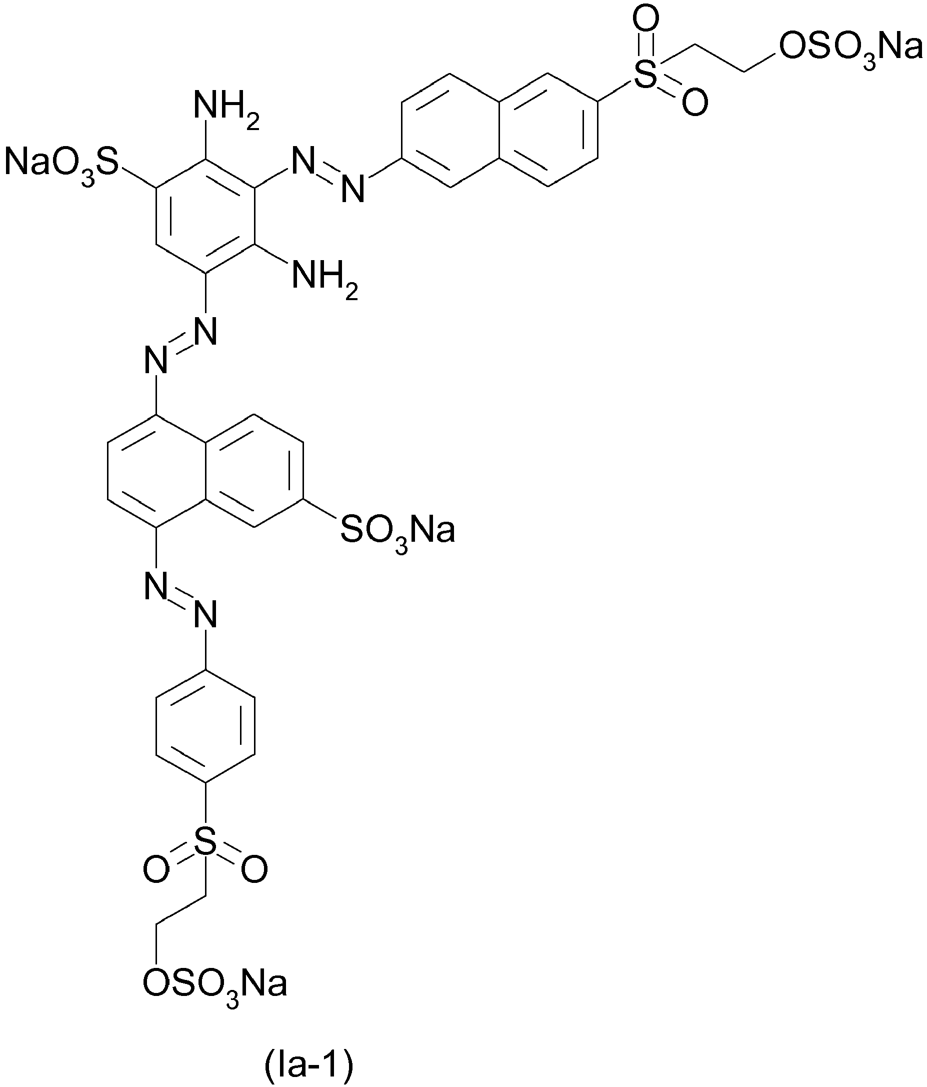 and 71 parts of an electrolyte-containing dye powder containing the navy dye of the formula (IIa-1) 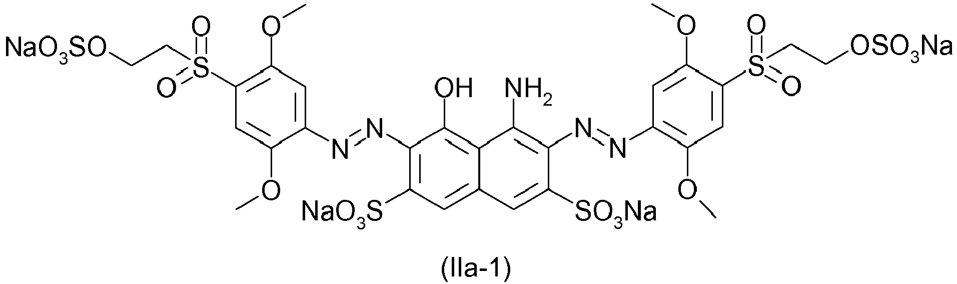 are mechanically mixed with each other.

The resulting dye mixture according to the invention provides grey to black dyeings on wool under the dyeing conditions customary for reactive dyes.

### EXAMPLE 2

31 parts of an electrolyte-containing dye powder containing the brown dye of the formula (Ia-2) 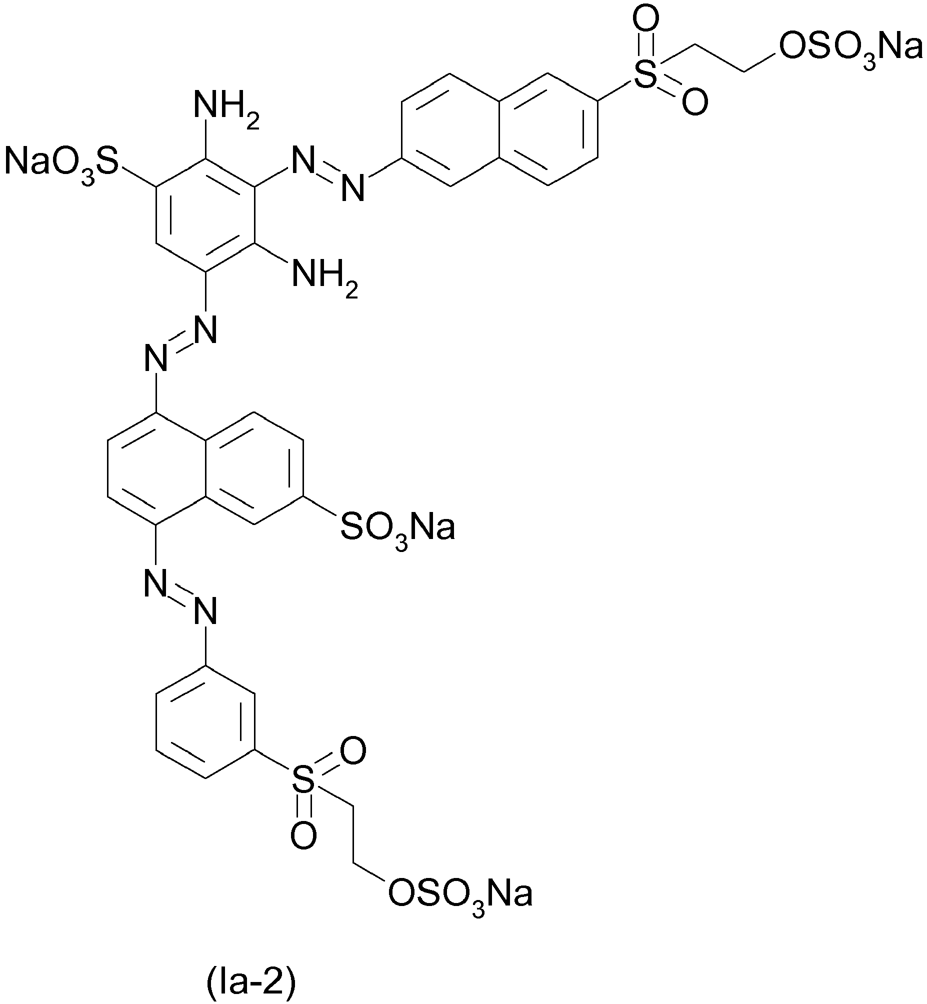 and 69 parts of an electrolyte-containing dye powder containing the navy dye of the formula (IIa-1) 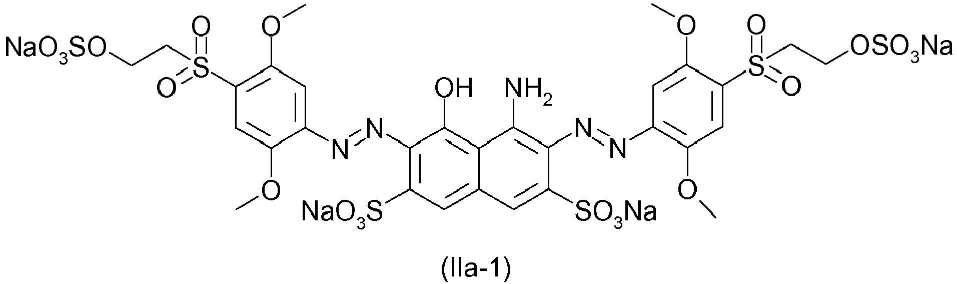 are mechanically mixed with each other.

The resulting dye mixture according to the invention provides grey to black dyeings on wool under the dyeing conditions customary for reactive dyes.

### EXAMPLE 3

33 parts of an electrolyte-containing dye powder containing the brown dye of the formula (Ia-3) 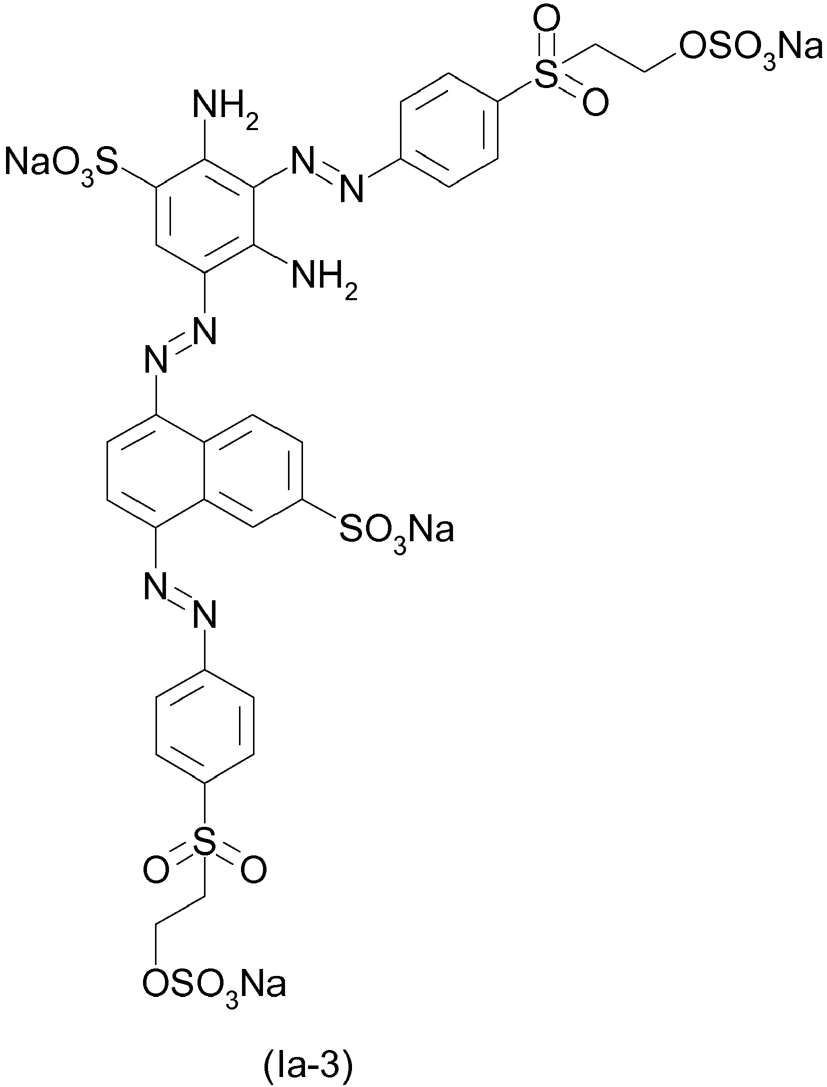 and 19 parts of an electrolyte-containing dye powder containing the brown dye of the formula (Ia-4) 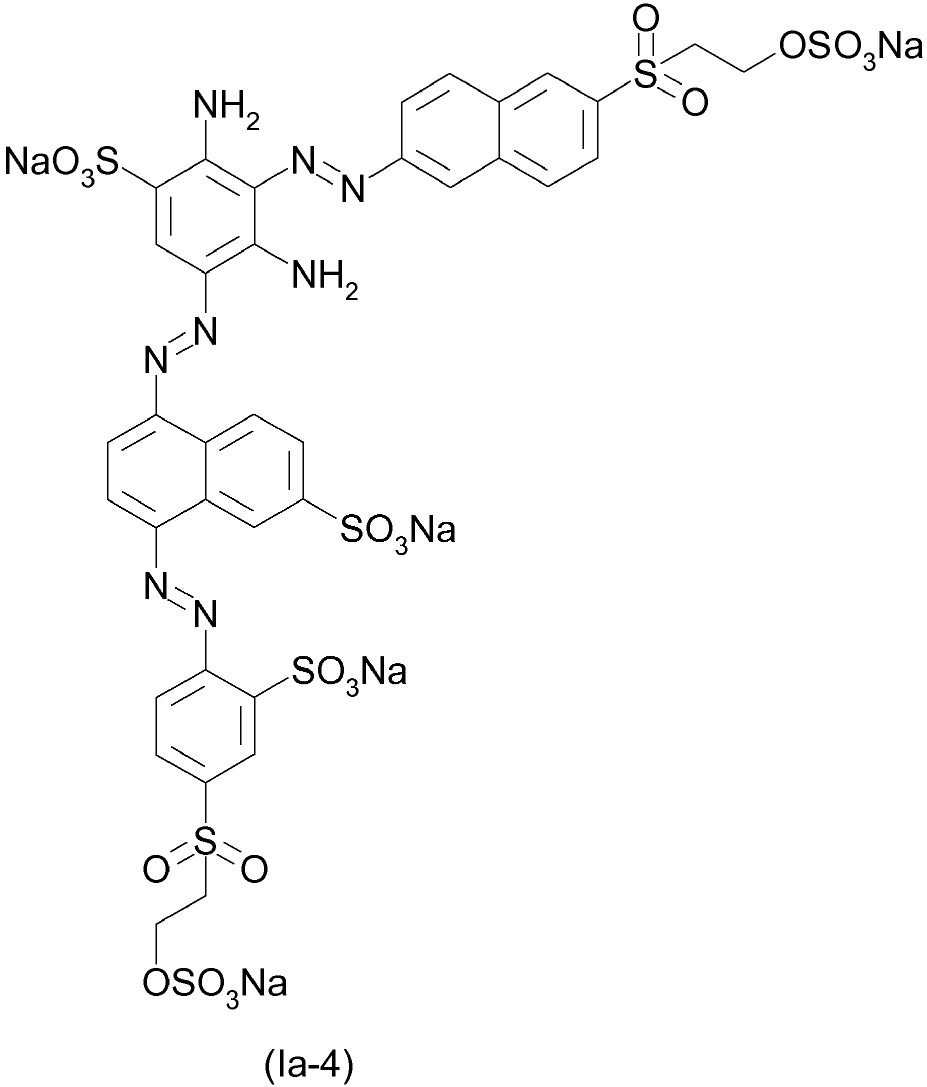 and 48 parts of an electrolyte-containing dye powder containing the navy dye of the formula (IIa-1) 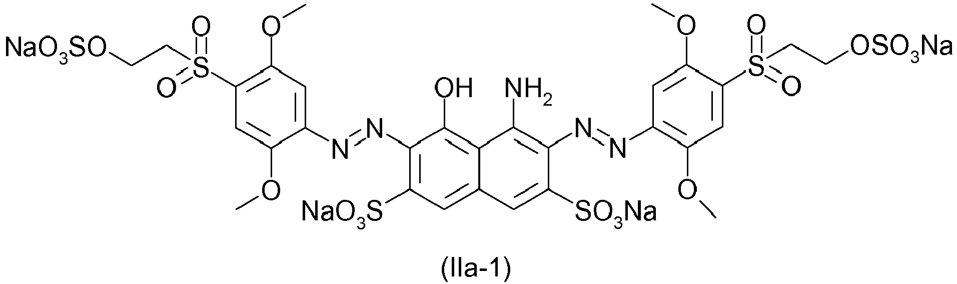 are mechanically mixed with each other.

The resulting dye mixture according to the invention provides grey to black dyeings on wool under the dyeing conditions customary for reactive dyes.

All examples of the following tables are prepared as formulations as explained above and give black dyeings varying from reddish black over neutral to greenish, yellowish blacks.

In the following examples 4-199, dyes of formula (Ia') are used in formulations. 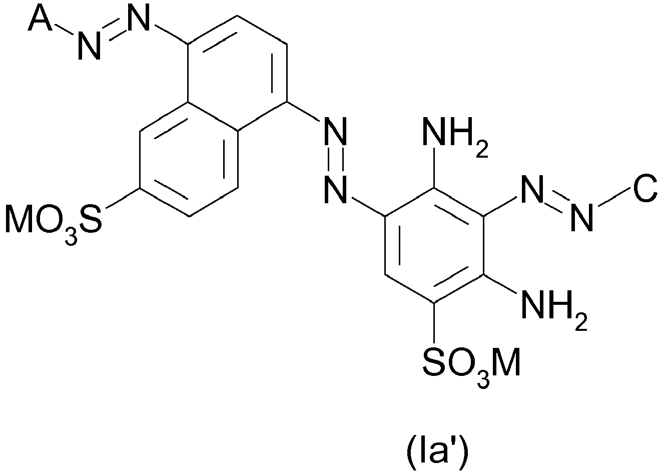 wherein, 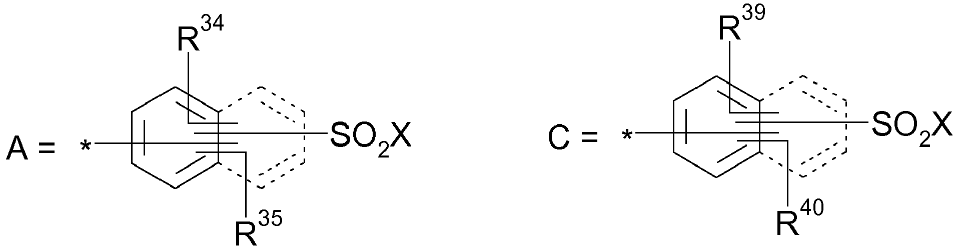 M is hydrogen, sodium, potassium and lithium and
*means a point of attachment.

All examples of the following table are prepared as formulations as explained above using dyes of formula (IIa-1) and (Ia').

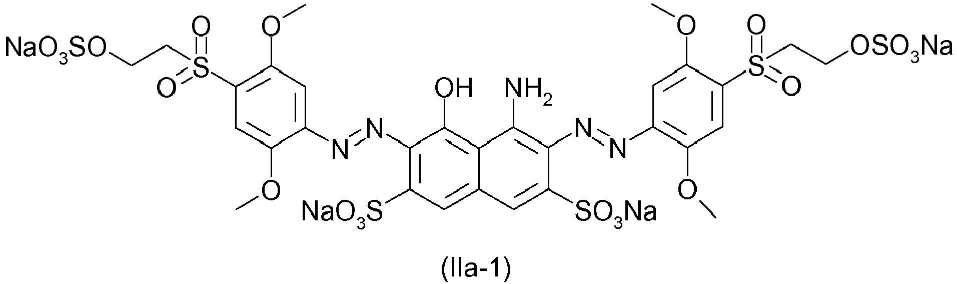

| Example | Component (II) | Component (Ia') | Component (Ia') | Ratio (II) : (Ia') : (Ia') |
|---|---|---|---|---|
| 4 | (IIa-1) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 4-SO₂X= 4-SO₂(ß-sulfatoethyl) | |
| 5 | (IIa-1) | R³⁴= Hydrogen | R³⁴= Hydrogen | 51 : 31 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | R³⁹= Hydrogen | R³⁹= Hydrogen | |
| | | R⁴⁰= 2-SO₃M | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 6 | (IIa-1) | R³⁴= Hydrogen | R³⁴= Hydrogen | 50 : 30 : 20 |
| | | R³⁵= Hydrogen | R³⁵ = 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = naphthyl | |
| | | 4-SO₂X= 4-SO₂(ß-sulfatoethyl) | 5-SO₂X= 5-SO₂(ß-sulfatoethyl) | |
| 7 | (IIa-1) | R³⁴= Hydrogen | | 52 : 48 : -- |
| | | R³⁵= Hydrogen | | |
| | | A = phenyl | | |
| | | 4-SO₂X= 4-SO₂(ß-sulfatoethyl) | | |
| | | | | |
| | | R³⁹= Hydrogen | | |
| | | R⁴⁰= Hydrogen | | |
| | | C = phenyl | | |
| | | 4-SO₂X= 4-SO₂(ß-sulfatoethyl) | | |
| 8 | (IIa-1) | | R³⁴= Hydrogen | 55 : -- : 45 |
| | | | R³⁵= 2-SO₃M | |
| | | | A = phenyl | |
| | | | 4-SO₂X= 4-SO₂(ß-sulfatoethyl) | |
| | | | | |
| | | | R³⁹= Hydrogen | |
| | | | R⁴⁰= Hydrogen | |
| | | | C = phenyl | |
| | | | 4-SO₂X= 4-SO₂(ß-sulfatoethyl) | |
| 9 | (IIa-1) | R³⁴= 2-Methoxy | | 52 : 48 : -- |
| | | R³⁵= 5-Methoxy | | |
| | | A = phenyl | | |
| | | 4-SO₂X= 4-SO₂(ß-sulfatoethyl) | | |
| | | | | |
| | | R³⁹= 2-Methoxy | | |
| | | R⁴⁰= 5-Methoxy | | |
| | | C = phenyl | | |
| | | 4-SO₂X= 4-SO₂(ß-sulfatoethyl) | | |
| 10 | (IIa-1) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | R³⁹= Hydrogen | R³⁹= Hydrogen | |
| | | R⁴⁰= Hydrogen | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 11 | (IIa-1) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 3-SO₂X= 3-SO₂(ß-sulfatoethyl) | |
| 12 | (IIa-1) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | R³⁹= Hydrogen | R³⁹= 2-methoxy | |
| | | R⁴⁰= Hydrogen | R⁴⁰= 3-SO₃M | |
| | | C = phenyl | C = phenyl | |
| | | 4-SO₂X= 4-SO₂(ß-sulfatoethyl) | 5-SO₂X= 5-SO₂(ß-sulfatoethyl) | |
| 13 | (IIa-1) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 5-methyl | |
| | | C = phenyl | C = phenyl | |
| | | 4-SO₂X= 4-SO₂(ß-sulfatoethyl) | 4-SO₂X= 4-SO₂(ß-sulfatoethyl) | |
| 14 | (IIa-1) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X=4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 2-methoxy | |
| | | C = phenyl | C = phenyl | |
| | | 4-SO₂X= 4-SO₂(ß-sulfatoethyl) | 4-SO₂X= 4-SO₂(ß-sulfatoethyl) | |
| 15 | (IIa-1) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= Hydrogen | |
| | | R⁴⁰ = Hydrogen | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 16 | (IIa-1) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 3-SO₂X= 3-SO₂(ß-sulfatoethyl) | |
| 17 | (IIa-1) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= 2-methoxy | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 5-SO₂X= 5-SO₂(ß-sulfatoethyl) | |

All examples of the following table are prepared as formulations as explained above using dyes of formula (IIa-2) and (Ia').

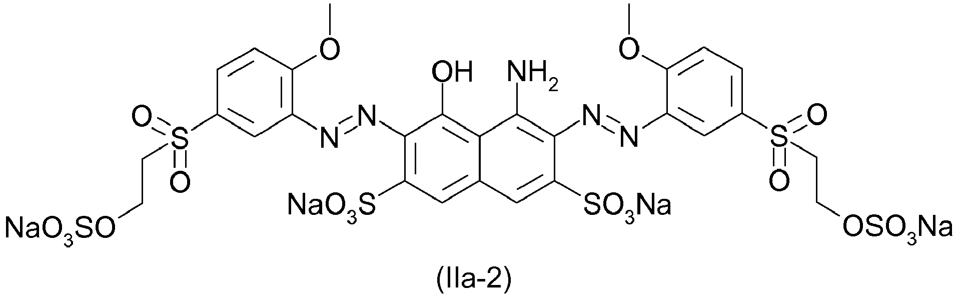

| Example | Component (II) | Component (Ia') | Component (Ia') | Ratio (II) : (Ia') : (Ia') |
|---|---|---|---|---|
| 18 | (IIa-2) | R³⁴= Hydrogen | R³⁴= Hydrogen | 55:31:14 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 4-SO₂X= 4-SO₂(ß-sulfatoethyl) | |
| 19 | (IIa-2) | R³⁴= Hydrogen | R³⁴= Hydrogen | 56:29:15 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= 2-SO₃M | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 20 | (IIa-2) | R³⁴= Hydrogen | R³⁴= Hydrogen | 55:30:15 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = naphthyl | |
| | | 4-SO₂X= 4-SO₂(ß-sulfatoethyl) | 5-SO₂X= 5-SO₂(S-sulfatoethyl) | |
| 21 | (IIa-2) | R³⁴= Hydrogen | | 54 : 46 : -- |
| | | R³⁵= Hydrogen | | |
| | | A = phenyl | | |
| | | 4-SO₂X=4-SO₂(ß-sulfatoethyl) | | |
| | | | | |
| | | R³⁹ = Hydrogen | | |
| | | R⁴⁰= Hydrogen | | |
| | | C = phenyl | | |
| | | 4-SO₂X= 4-SO₂(ß-sulfatoethyl) | | |
| 22 | (IIa-2) | | R³⁴= Hydrogen | 57 : -- : 43 |
| | | | R³⁵= 2-SO₃M | |
| | | | A = phenyl | |
| | | | 4-SO₂X= 4-SO₂(ß-sulfatoethyl) | |
| | | | R³⁹= Hydrogen | |
| | | | R⁴⁰= Hydrogen | |
| | | | C = phenyl | |
| | | | 4-SO₂X= 4-SO₂(ß-sulfatoethyl) | |
| 23 | (IIa-2) | R³⁴ = 2-methoxy | | 55 : 45 : -- |
| | | R³⁵= 5-methyl | | |
| | | A = phenyl | | |
| | | 4-SO₂X= 4-SO₂(ß-sulfatoethyl) | | |
| | | | | |
| | | R³⁹= Hydrogen | | |
| | | R⁴⁰= 2-SO₃M | | |
| | | C = phenol | | |
| | | 4-SO₂X= 4-SO₂(ß-sulfatoethyl) | | |
| 24 | (IIa-2) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | R³⁹= Hydrogen | R³⁹= Hydrogen | |
| | | R⁴⁰= Hydrogen | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 25 | (IIa-2) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 3-SO₂X= 3-SO₂(ß-sulfatoethyl) | |
| 26 | (IIa-2) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | R³⁹= Hydrogen | R³⁹= 2-methoxy | |
| | | R⁴⁰= Hydrogen | R⁴⁰= 3-SO₃M | |
| | | C = phenyl | C = phenyl | |
| | | 4-SO₂X= 4-SO₂(ß-sulfatoethyl) | 5-SO₂X= 5-SO₂(ß-sulfatoethyl) | |
| 27 | (IIa-2) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰ = Hydrogen | R⁴⁰= 5-methyl | |
| | | C = phenyl | C = phenyl | |
| | | 4-SO₂X= 4-SO₂(ß-sulfatoethyl) | 4-SO₂X= 4-SO₂(ß-sulfatoethyl) | |
| 28 | (IIa-2) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰ = Hydrogen | R⁴⁰= 2-methoxy | |
| | | C = phenyl | C = phenyl | |
| | | 4-SO₂X= 4-SO₂(ß-sulfatoethyl) | 4-SO₂X= 4-SO₂(ß-sulfatoethyl) | |
| 29 | (IIa-2) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= Hydrogen | |
| | | R⁴⁰= Hydrogen | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 30 | (IIa-2) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 3-SO₂X= 3-SO₂(ß-sulfatoethyl) | |
| 31 | (IIa-2) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= 2-methoxy | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 5-SO₂X= 5-SO₂(ß-sulfatoethyl) | |

All examples of the following table are prepared as formulations as explained above using dyes of formula (IIa-3) and (Ia').

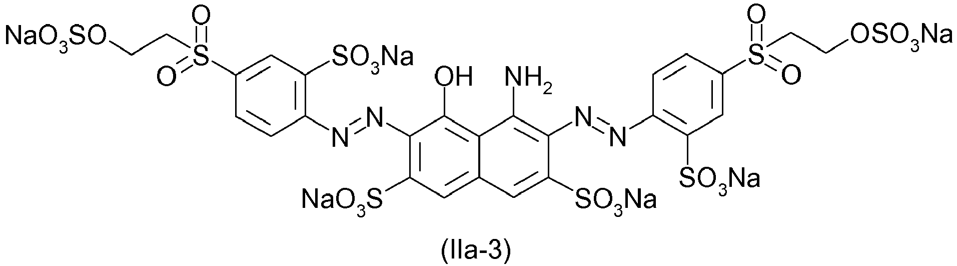

| Example | Component (II) | Component (Ia') | Component (Ia') | Ratio (II) : (Ia') : (Ia') |
|---|---|---|---|---|
| 32 | (IIa-3) | R³⁴= Hydrogen | R³⁴= Hydrogen | 48 : 20 : 32 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 4-SO₂X= 4-SO₂(ß-sulfatoethyl) | |
| 33 | (IIa-3) | R³⁴= Hydrogen | R³⁴= Hydrogen | 51 : 18 : 31 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= 2-SO₃M | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 34 | (IIa-3) | R³⁴= Hydrogen | R³⁴= Hydrogen | 50 : 20:30 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = naphthyl | |
| | | 4-SO₂X= 4-SO₂(ß-sulfatoethyl) | 5-SO₂X= 5-SO₂(ß-sulfatoethyl) | |
| 35 | (IIa-3) | R³⁴= Hydrogen | | 52 : 48 : -- |
| | | R³⁵ = Hydrogen | | |
| | | A = phenyl | | |
| | | 4-SO₂X= 4-SO₂(ß-sulfatoethyl) | | |
| | | | | |
| | | R³⁹= Hydrogen | | |
| | | R⁴⁰= Hydrogen | | |
| | | C = phenyl | | |
| | | 4-SO₂X= 4-SO₂(ß-sulfatoethyl) | | |
| 36 | (IIa-3) | | R³⁴= Hydrogen | 55 : -- : 45 |
| | | | R³⁵= 2-SO₃M | |
| | | | A = phenyl | |
| | | | 4-SO₂X= 4-SO₂(ß-sulfatoethyl) | |
| | | | | |
| | | | R³⁹= Hydrogen | |
| | | | R⁴⁰= Hydrogen | |
| | | | C = phenyl | |
| | | | 4-SO₂X= 4-SO₂(ß-sulfatoethyl) | |
| 37 | (IIa-3) | R³⁴= 2-Methoxy | | 52 : 48 : -- |
| | | R³⁵= Hydrogen | | |
| | | A = phenyl | | |
| | | 5-SO₂X= 5-SO₂(ß-sulfatoethyl) | | |
| | | | | |
| | | R39= Hydrogen | | |
| | | R40= Hydrogen | | |
| | | C = phenyl | | |
| | | 3-SO₂X= 3-SO₂(ß-sulfatoethyl) | | |
| 38 | (IIa-3) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 39 | (IIa-3) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹ = Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 3-SO₂X= 3-SO₂(ß-sulfatoethyl) | |
| 40 | (IIa-3) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 3-SO₃M | |
| | | C = phenyl | C = phenyl | |
| | | 4-SO₂X= 4-SO₂(ß-sulfatoethyl) | 5-SO₂X= 5-SO₂(ß-sulfatoethyl) | |
| 41 | (IIa-3) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰ = Hydrogen | R⁴⁰= 5-methyl | |
| | | C = phenyl | C = phenyl | |
| | | 4-SO₂X= 4-SO₂(ß-sulfatoethyl) | 4-SO₂X= 4-SO₂(ß-sulfatoethyl) | |
| 42 | (IIa-3) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰ = Hydrogen | R⁴⁰= 2-methoxy | |
| | | C = phenyl | C = phenyl | |
| | | 4-SO₂X= 4-SO₂(ß-sulfatoethyl) | 4-SO₂X= 4-SO₂(ß-sulfatoethyl) | |
| 43 | (IIa-3) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= Hydrogen | |
| | | R⁴⁰= Hydrogen | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 44 | (IIa-3) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 3-SO₂X= 3-SO₂(ß-sulfatoethyl) | |
| 45 | (IIa-3) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= 2-methoxy | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 5-SO₂X= 5-SO₂(ß-sulfatoethyl) | |

All examples of the following table are prepared as formulations as explained above using dyes of formula (IIa-4) and (Ia').

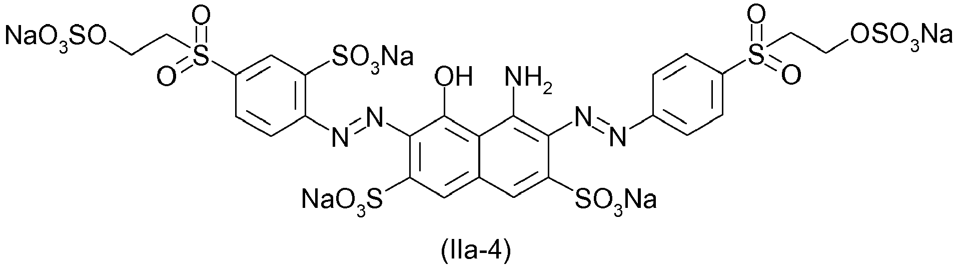

| Example | Component (II) | Component (Ia') | Component (Ia') | Ratio (II) : (Ia') : (Ia') |
|---|---|---|---|---|
| 46 | (IIa-4) | R³⁴= Hydrogen | R³⁴= Hydrogen | 48 : 10 : 32 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰ = Hydrogen | R⁴⁰= Hydrogen | |
| | | C = phenyl | C = phenyl | |
| | | 4-SO₂X= 4-SO₂(ß-sulfatoethyl) | 4-SO₂X= 4-SO₂(ß-sulfatoethyl) | |
| 47 | (IIa-4) | R³⁴= Hydrogen | R³⁴= Hydrogen | 51 : 8 : 41 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= 2-SO₃M | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 48 | (IIa-4) | R³⁴= Hydrogen | R³⁴= Hydrogen | 50 : 10 : 40 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = naphthyl | |
| | | 4-SO₂X= 4-SO₂(ß-sulfatoethyl) | 5-SO₂X= 5-SO₂(ß-sulfatoethyl) | |
| 49 | (IIa-4) | R³⁴ = Hydrogen | | 62 : 38 : -- |
| | | R³⁵= Hydrogen | | |
| | | A = phenyl | | |
| | | 4-SO₂X= 4-SO₂(ß-sulfatoethyl) | | |
| | | | | |
| | | R³⁹= Hydrogen | | |
| | | R⁴⁰= Hydrogen | | |
| | | C = phenyl | | |
| | | 4-SO₂X= 4-SO₂(ß-sulfatoethyl) | | |
| 50 | (IIa-4) | | R³⁴= Hydrogen | 55 : -- : 45 |
| | | | R³⁵= 2-SO₃M | |
| | | | A = phenyl | |
| | | | 4-SO₂X=4-SO₂(ß-sulfatoethyl) | |
| | | | R³⁹= Hydrogen | |
| | | | R⁴⁰= Hydrogen | |
| | | | C = phenyl | |
| | | | 4-SO₂X= 4-SO₂(ß-sulfatoethyl) | |
| 51 | (IIa-4) | R³⁴ = Hydrogen | | 55 : 45 : -- |
| | | R³⁵= 2-SO₃M | | |
| | | A = phenyl | | |
| | | 4-SO₂X= 4-SO₂(ß-sulfatoethyl) | | |
| | | | | |
| | | R³⁹ = Hydrogen | | |
| | | R⁴⁰= 2-SO₃M | | |
| | | C = phenyl | | |
| | | 4-SO₂X= 4-SO₂(ß-sulfatoethyl) | | |
| 52 | (IIa-4) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X=4-SO₂(ß-sulfatoethyl) | |
| | | | | |
| | | R³⁹= Hydrogen | R³⁹= Hydrogen | |
| | | R⁴⁰= Hydrogen | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 53 | (IIa-4) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹ = Hydrogen | |
| | | R⁴⁰= Hydrogen | R⁴⁰ = Hydrogen | |
| | | C = phenyl | C = phenyl | |
| | | 4-SO₂X= 4-SO₂(ß-sulfatoethyl) | 3-SO₂X= 3-SO₂(ß-sulfatoethyl) | |
| 54 | (IIa-4) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | R³⁹= Hydrogen | R³⁹= 2-methoxy | |
| | | R⁴⁰ = Hydrogen | R⁴⁰= 3-SO₃M | |
| | | C = phenyl | C = phenyl | |
| | | 4-SO₂X= 4-SO₂(ß-sulfatoethyl) | 5-SO₂X= 5-SO₂(ß-sulfatoethyl) | |
| 55 | (IIa-4) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰ = Hydrogen | R⁴⁰ = 5-methyl | |
| | | C = phenyl | C = phenyl | |
| | | 4-SO₂X= 4-SO₂(ß-sulfatoethyl) | 4-SO₂X= 4-SO₂(ß-sulfatoethyl) | |
| 56 | (IIa-4) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰ = Hydrogen | R⁴⁰ = 2-methoxy | |
| | | C = phenyl | C = phenyl | |
| | | 4-SO₂X= 4-SO₂(ß-sulfatoethyl) | 4-SO₂X= 4-SO₂(ß-sulfatoethyl) | |
| 57 | (IIa-4) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= Hydrogen | |
| | | R⁴⁰ = Hydrogen | R⁴⁰ = 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 58 | (IIa-4) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= Hydrogen | |
| | | R⁴⁰ = Hydrogen | R⁴⁰ = Hydrogen | |
| | | C = phenyl | C = phenyl | |
| | | 4-SO₂X= 4-SO₂(ß-sulfatoethyl) | 3-SO₂X= 3-SO₂(ß-sulfatoethyl) | |
| 59 | (IIa-4) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= 2-methoxy | |
| | | R⁴⁰ = Hydrogen | R⁴⁰ = Hydrogen | |
| | | C = phenyl | C = phenyl | |
| | | 4-SO₂X= 4-SO₂(ß-sulfatoethyl) | 5-SO₂X= 5-SO₂(ß-sulfatoethyl) | |

All examples of the following table are prepared as formulations as explained above using dyes of formula (IIa-5) and (Ia').

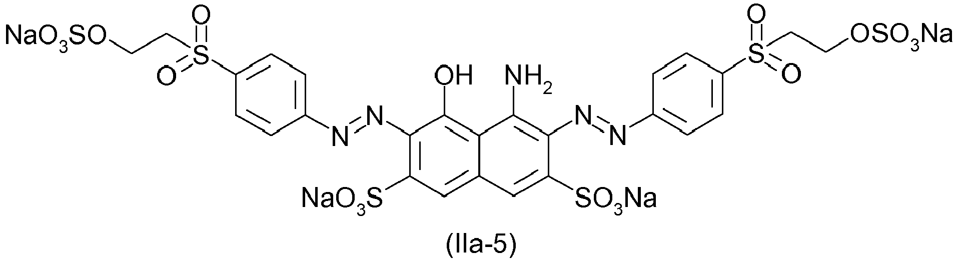

| Example | Component (II) | Component (Ia') | Component (Ia') | Ratio (II) : (Ia') : (Ia') |
|---|---|---|---|---|
| 60 | (IIa-5) | R³⁴= Hydrogen | R³⁴= Hydrogen | 45 : 10 : 35 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰ = Hydrogen | R⁴⁰ = Hydrogen | |
| | | C = phenyl | C = phenyl | |
| | | 4-SO₂X= 4-SO₂(ß-sulfatoethyl) | 4-SO₂X= 4-SO₂(ß-sulfatoethyl) | |
| 61 | (IIa-5) | R³⁴= Hydrogen | R³⁴= Hydrogen | 50 : 9 : 41 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰ = 2-SO₃M | R⁴⁰ = 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 62 | (IIa-5) | R³⁴= Hydrogen | R³⁴= Hydrogen | 50 : 10 : 40 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰ = Hydrogen | R⁴⁰ = Hydrogen | |
| | | C = phenyl | C = naphthyl | |
| | | 4-SO₂X= 4-SO₂(ß-sulfatoethyl) | 5-SO₂X= 5-SO₂(ß-sulfatoethyl) | |
| 63 | (IIa-5) | R³⁴ = Hydrogen | | 60 : 40 : -- |
| | | R³⁵= Hydrogen | | |
| | | A = phenyl | | |
| | | 4-SO₂X= 4-SO₂(ß-sulfatoethyl) | | |
| | | | | |
| | | R³⁹= Hydrogen | | |
| | | R⁴⁰ = Hydrogen | | |
| | | C = phenyl | | |
| | | 4-SO₂X= 4-SO₂(ß-sulfatoethyl) | | |
| 64 | (IIa-5) | | R³⁴= Hydrogen | 55 : -- : 45 |
| | | | R³⁵= 2-SO₃M | |
| | | | A = phenyl | |
| | | | 4-SO₂X= 4-SO₂(ß-sulfatoethyl) | |
| | | | R³⁹= Hydrogen | |
| | | | R⁴⁰ = Hydrogen | |
| | | | C = phenyl | |
| | | | 4-SO₂X= 4-SO₂(ß-sulfatoethyl) | |
| 65 | (IIa-5) | R³⁴ = Hydrogen | | 55 : 45 : - |
| | | R³⁵= Hydrogen | | |
| | | A = phenyl | | |
| | | 4-SO₂X= 4-SO₂(ß-sulfatoethyl) | | |
| | | | | |
| | | R³⁹= 2-Methoxy | | |
| | | R⁴⁰ = 5-Methyl | | |
| | | C = phenyl | | |
| | | 4-SO₂X= 4-SO₂(S-sulfatoethyl) | | |
| 66 | (IIa-5) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | R³⁹= Hydrogen | R³⁹= Hydrogen | |
| | | R⁴⁰ = Hydrogen | R⁴⁰ = 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 67 | (IIa-5) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 3-SO₂X= 3-SO₂(ß-sulfatoethyl) | |
| 68 | (IIa-5) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰ = Hydrogen | R⁴⁰= 3-SO₃M | |
| | | C = phenyl | C = phenyl | |
| | | 4-SO₂X= 4-SO₂(ß-sulfatoethyl) | 5-SO₂X= 5-SO₂(ß-sulfatoethyl) | |
| 69 | (IIa-5) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 5-methyl | |
| | | C = phenyl | C = phenyl | |
| | | 4-SO₂X= 4-SO₂(ß-sulfatoethyl) | 4-SO₂X= 4-SO₂(ß-sulfatoethyl) | |
| 70 | (IIa-5) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰ = Hydrogen | R⁴⁰= 2-methoxy | |
| | | C = phenyl | C = phenyl | |
| | | 4-SO₂X= 4-SO₂(ß-sulfatoethyl) | 4-SO₂X= 4-SO₂(ß-sulfatoethyl) | |
| 71 | (IIa-5) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= Hydrogen | |
| | | R⁴⁰= Hydrogen | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 72 | (IIa-5) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 3-SO₂X= 3-SO₂(ß-sulfatoethyl) | |
| 73 | (IIa-5) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | R³⁹= Hydrogen | R³⁹= 2-methoxy | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 5-SO₂X= 5-SO₂(ß-sulfatoethyl) | |

All examples of the following table are prepared as formulations as explained above using dyes of formula (IIa-6) and (Ia').

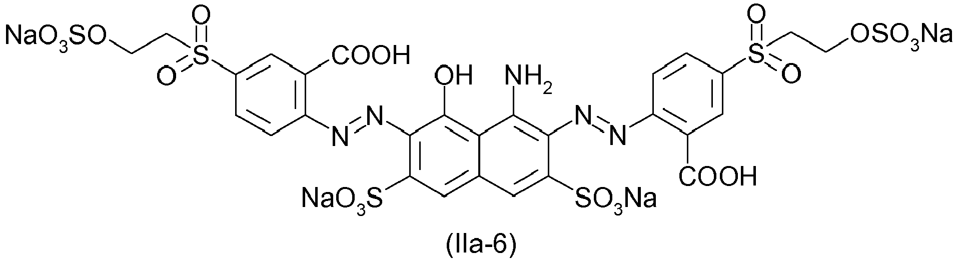

| Example | Component (II) | Component (Ia') | Component (Ia') | Ratio (II) : (Ia') : (Ia') |
|---|---|---|---|---|
| 74 | (IIa-6) | R³⁴= Hydrogen | R³⁴= Hydrogen | 50 : 30 : 20 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 4-SO₂X= 4-SO₂(ß-sulfatoethyl) | |
| 75 | (IIa-6) | R³⁴= Hydrogen | R³⁴= Hydrogen | 54 : 28 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= 2-SO₃M | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 76 | (IIa-6) | R³⁴= Hydrogen | R³⁴= Hydrogen | 56 : 26 : 18 |
| | | R³⁵= Hydrogen | R³⁵= 2-SO₃M | |
| | | A = phenol | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰ = Hydrogen | |
| | | C = phenyl | C = naphthyl | |
| | | 4-SO₂X= 4-SO₂(ß-sulfatoethyl) | 5-SO₂X= 5-SO₂(ß-sulfatoethyl) | |
| 77 | (IIa-6) | R³⁴= Hydrogen | | 55 : 45 : -- |
| | | R³⁵= Hydrogen | | |
| | | A = phenyl | | |
| | | 4-SO₂X= 4-SO₂(ß-sulfatoethyl) | | |
| | | | | |
| | | R³⁹= Hydrogen | | |
| | | R⁴⁰= Hydrogen | | |
| | | C = phenyl | | |
| | | 4-SO₂X= 4-SO₂(ß-sulfatoethyl) | | |
| 78 | (IIa-6) | | R³⁴= Hydrogen | 58 : -- : 42 |
| | | | R³⁵= 2-SO₃M | |
| | | | A = phenyl | |
| | | | 4-SO₂X= 4-SO₂(ß-sulfatoethyl) | |
| | | | | |
| | | | R³⁹ = Hydrogen | |
| | | | R⁴⁰= Hydrogen | |
| | | | C = phenyl | |
| | | | 4-SO₂X= 4-SO₂(ß-sulfatoethyl) | |
| 79 | (IIa-6) | R³⁴= Hydrogen | | 55 : 45 : -- |
| | | R³⁵= Hydrogen | | |
| | | A = phenyl | | |
| | | 3-SO₂X= 3-SO₂(ß-sulfatoethyl) | | |
| | | | | |
| | | R³⁹= Hydrogen | | |
| | | R⁴⁰= Hydrogen | | |
| | | A = phenyl | | |
| | | 3-SO₂X= 3-SO₂(ß-sulfatoethyl) | | |
| 80 | (IIa-6) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | R³⁹= Hydrogen | R³⁹= Hydrogen | |
| | | R⁴⁰= Hydrogen | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 81 | (IIa-6) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 3-SO₂X= 3-SO₂(ß-sulfatoethyl) | |
| 82 | (IIa-6) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 3-SO₃M | |
| | | C = phenyl | C = phenyl | |
| | | 4-SO₂X= 4-SO₂(ß-sulfatoethyl) | 5-SO₂X= 5-SO₂(ß-sulfatoethyl) | |
| 83 | (IIa-6) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 5-methyl | |
| | | C = phenyl | C = phenyl | |
| | | 4-SO₂X= 4-SO₂(ß-sulfatoethyl) | 4-SO₂X= 4-SO₂(ß-sulfatoethyl) | |
| 84 | (IIa-6) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰ = Hydrogen | R⁴⁰= 2-methoxy | |
| | | C = phenyl | C = phenyl | |
| | | 4-SO₂X= 4-SO₂(ß-sulfatoethyl) | 4-SO₂X= 4-SO₂(ß-sulfatoethyl) | |
| 85 | (IIa-6) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= Hydrogen | |
| | | R⁴⁰ = Hydrogen | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 86 | (IIa-6) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 3-SO₂X= 3-SO₂(ß-sulfatoethyl) | |
| 87 | (IIa-6) | R³⁴= Hydrogen | R³⁴= Hydrogen | 48 : 34 : 18 |
| | | R³⁵= Hydrogen | R³⁵= Hydrogen | |
| | | A = phenol | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= 2-methoxy | |
| | | R⁴⁰= Hydrogen | R⁴⁰= Hydrogen | |
| | | C = phenol | C = phenyl | |
| | | 4-SO₂X= 4-SO₂(ß-sulfatoethyl) | 5-SO₂X= 5-SO₂(ß-sulfatoethyl) | |

All examples of the following table are prepared as formulations as explained above using dyes of formula (IIa-7) and (Ia').

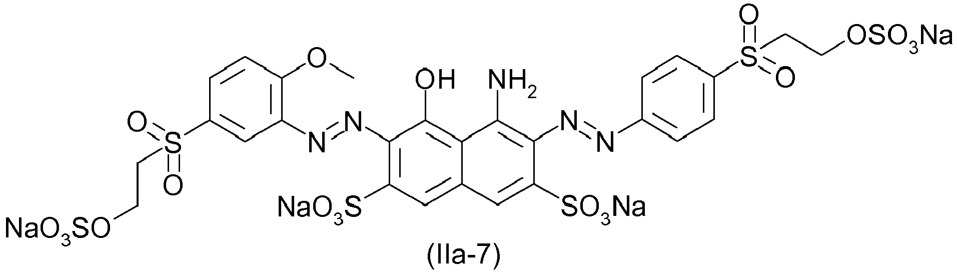

| Example | Component (II) | Component (Ia') | Component (Ia') | Ratio (II) : (Ia') : (Ia') |
|---|---|---|---|---|
| 88 | (IIa-7) | R³⁴= Hydrogen | R³⁴= Hydrogen | 55 : 30 : 15 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 4-SO₂X= 4-SO₂(ß-sulfatoethyl) | |
| 89 | (IIa-7) | R³⁴= Hydrogen | R³⁴= Hydrogen | 55 : 35 : 10 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= 2-SO₃M | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 90 | (IIa-7) | R³⁴= Hydrogen | R³⁴= Hydrogen | 56 : 32 : 12 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenol | C = naphthyl | |
| | | 4-SO₂X= 4-SO₂(ß-sulfatoethyl) | 5-SO₂X= 5-SO₂(ß-sulfatoethyl) | |
| 91 | (IIa-7) | R³⁴= Hydrogen | | 56 : 44 : -- |
| | | R³⁵= Hydrogen | | |
| | | A = phenyl | | |
| | | 4-SO₂X= 4-SO₂(ß-sulfatoethyl) | | |
| | | | | |
| | | R³⁹= Hydrogen | | |
| | | R⁴⁰= Hydrogen | | |
| | | C = phenyl | | |
| | | 4-SO₂X= 4-SO₂(ß-sulfatoethyl) | | |
| 92 | (IIa-7) | | R³⁴= Hydrogen | 56 : -- : 44 |
| | | | R³⁵= 2-SO₃M | |
| | | | A = phenyl | |
| | | | 4-SO₂X= 4-SO₂(ß-sulfatoethyl) | |
| | | | | |
| | | | R³⁹= Hydrogen | |
| | | | R⁴⁰= Hydrogen | |
| | | | C = phenyl | |
| | | | 4-SO₂X= 4-SO₂(ß-sulfatoethyl) | |
| 93 | (IIa-7) | R³⁴= Hydrogen | | 54 : 46 : -- |
| | | R³⁵= Hydrogen | | |
| | | A = phenyl | | |
| | | 4-SO₂X= 4-SO₂(ß-sulfatoethyl) | | |
| | | | | |
| | | R³⁹= 2-Methoxy | | |
| | | R⁴⁰= Hydrogen | | |
| | | C = phenyl | | |
| | | 5-SO₂X= 5-SO₂(ß-sulfatoethyl) | | |
| 94 | (IIa-7) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | R³⁹= Hydrogen | R³⁹= Hydrogen | |
| | | R⁴⁰= Hydrogen | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 95 | (IIa-7) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 3-SO₂X= 3-SO₂(ß-sulfatoethyl) | |
| 96 | (IIa-7) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 3-SO₃M | |
| | | C = phenyl | C = phenyl | |
| | | 4-SO₂X= 4-SO₂(ß-sulfatoethyl) | 5-SO₂X= 5-SO₂(ß-sulfatoethyl) | |
| 97 | (IIa-7) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 5-methyl | |
| | | C = phenyl | C = phenyl | |
| | | 4-SO₂X= 4-SO₂(ß-sulfatoethyl) | 4-SO₂X= 4-SO₂(ß-sulfatoethyl) | |
| 98 | (IIa-7) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 2-methoxy | |
| | | C = phenyl | C = phenyl | |
| | | 4-SO₂X= 4-SO₂(ß-sulfatoethyl) | 4-SO₂X= 4-SO₂(ß-sulfatoethyl) | |
| 99 | (IIa-7) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= Hydrogen | |
| | | R⁴⁰= Hydrogen | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 100 | (IIa-7) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 3-SO₂X= 3-SO₂(ß-sulfatoethyl) | |
| 101 | (IIa-7) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= 2-methoxy | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 5-SO₂X= 5-SO₂(ß-sulfatoethyl) | |

All examples of the following table are prepared as formulations as explained above using dyes of formula (IIa-8) and (Ia').

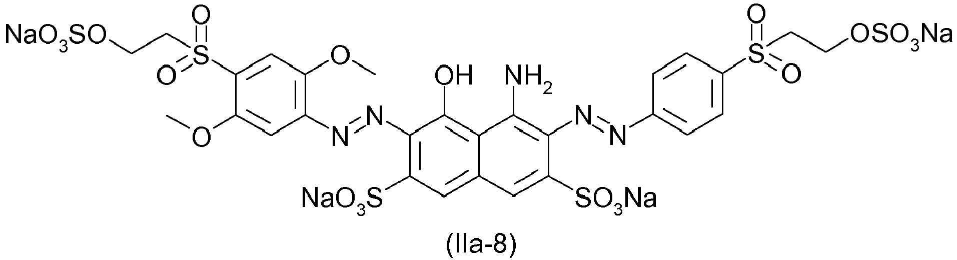

| Example | Component (II) | Component (Ia') | Component (Ia') | Ratio (II) : (Ia') : (Ia') |
|---|---|---|---|---|
| 102 | (IIa-8) | R³⁴= Hydrogen | R³⁴= Hydrogen | 48 : 30 : 22 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 4-SO₂X= 4-SO₂(ß-sulfatoethyl) | |
| 103 | (IIa-8) | R³⁴= Hydrogen | R³⁴= Hydrogen | 51 : 27 : 22 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= 2-SO₃M | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 104 | (IIa-8) | R³⁴= Hydrogen | R³⁴= Hydrogen | 50 : 26 : 24 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = naphthyl | |
| | | 4-SO₂X= 4-SO₂(ß-sulfatoethyl) | 5-SO₂X= 5-SO₂(ß-sulfatoethyl) | |
| 105 | (IIa-8) | R³⁴= Hydrogen | | 55 : 45 : -- |
| | | R³⁵= Hydrogen | | |
| | | A = phenyl | | |
| | | 4-SO₂X= 4-SO₂(ß-sulfatoethyl) | | |
| | | | | |
| | | R³⁹= Hydrogen | | |
| | | R⁴⁰= Hydrogen | | |
| | | C = phenyl | | |
| | | 4-SO₂X= 4-SO₂(ß-sulfatoethyl) | | |
| 106 | (IIa-8) | | R³⁴= Hydrogen | 50 : -- : 50 |
| | | | R³⁵= 2-SO₃M | |
| | | | A = phenyl | |
| | | | 4-SO₂X= 4-SO₂(ß-sulfatoethyl) | |
| | | | | |
| | | | R³⁹= Hydrogen | |
| | | | R⁴⁰= Hydrogen | |
| | | | C = phenyl | |
| | | | 4-SO₂X= 4-SO₂(S-sulfatoethyl) | |
| 107 | (IIa-8) | R³⁴= 2-Methoxy | | 55 : 45 : -- |
| | | R³⁵= 5-Methoxy | | |
| | | A = phenyl | | |
| | | 4-SO₂X= 4-SO₂(ß-sulfatoethyl) | | |
| | | | | |
| | | R³⁹= Hydrogen | | |
| | | R⁴⁰= Hydrogen | | |
| | | C = phenyl | | |
| | | 4-SO₂X= 4-SO₂(ß-sulfatoethyl) | | |
| 108 | (IIa-8) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | R³⁹= Hydrogen | R³⁹= Hydrogen | |
| | | R⁴⁰= Hydrogen | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 109 | (IIa-8) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 3-SO₂X= 3-SO₂(ß-sulfatoethyl) | |
| 110 | (IIa-8) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 3-SO₃M | |
| | | C = phenyl | C = phenyl | |
| | | 4-SO₂X= 4-SO₂(ß-sulfatoethyl) | 5-SO₂X= 5-SO₂(ß-sulfatoethyl) | |
| 111 | (IIa-8) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 5-methyl | |
| | | C = phenyl | C = phenyl | |
| | | 4-SO₂X= 4-SO₂(ß-sulfatoethyl) | 4-SO₂X= 4-SO₂(ß-sulfatoethyl) | |
| 112 | (IIa-8) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 2-methoxy | |
| | | C = phenyl | C = phenyl | |
| | | 4-SO₂X= 4-SO₂(ß-sulfatoethyl) | 4-SO₂X= 4-SO₂(ß-sulfatoethyl) | |
| 113 | (IIa-8) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= Hydrogen | |
| | | R⁴⁰= Hydrogen | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 114 | (IIa-8) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 3-SO₂X= 3-SO₂(ß-sulfatoethyl) | |
| 115 | (IIa-8) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= 2-methoxy | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 5-SO₂X= 5-SO₂(ß-sulfatoethyl) | |

All examples of the following table are prepared as formulations as explained above using dyes of formula (IIc-1) and (Ia').

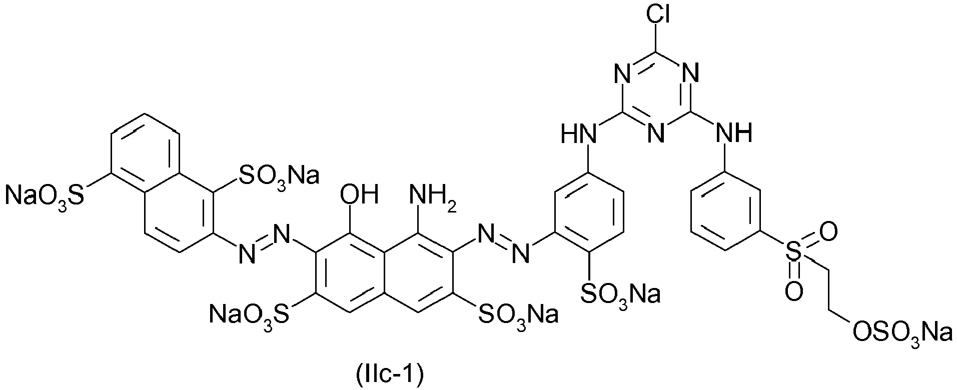

| Example | Component (II) | Component (Ia') | Component (Ia') | Ratio (II) : (Ia') : (Ia') |
|---|---|---|---|---|
| 116 | (IIc-1) | R³⁴= Hydrogen | R³⁴= Hydrogen | 70 : 5 : 25 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 4-SO₂X= 4-SO₂(ß-sulfatoethyl) | |
| 117 | (IIc-1) | R³⁴= Hydrogen | R³⁴= Hydrogen | 72 : 6 : 22 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= 2-SO₃M | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 118 | (IIc-1) | R³⁴= Hydrogen | R³⁴= Hydrogen | 70 : 5 : 25 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = naphthyl | |
| | | 4-SO₂X= 4-SO₂(ß-sulfatoethyl) | 5-SO₂X= 5-SO₂(ß-sulfatoethyl) | |
| 119 | (IIc-1) | R³⁴= Hydrogen | | 75 : 25 : -- |
| | | R³⁵= Hydrogen | | |
| | | A = phenyl | | |
| | | 4-SO₂X= 4-SO₂(ß-sulfatoethyl) | | |
| | | | | |
| | | R³⁹= Hydrogen | | |
| | | R⁴⁰= Hydrogen | | |
| | | C = phenyl | | |
| | | 4-SO₂X= 4-SO₂(ß-sulfatoethyl) | | |
| 120 | (IIc-1) | | R³⁴= Hydrogen | 70 : -- : 30 |
| | | | R³⁵= 2-SO₃M | |
| | | | A = phenyl | |
| | | | 4-SO₂X= 4-SO₂(ß-sulfatoethyl) | |
| | | | | |
| | | | R³⁹= Hydrogen | |
| | | | R⁴⁰= Hydrogen | |
| | | | C = phenyl | |
| | | | 4-SO₂X= 4-SO₂(ß-sulfatoethyl) | |
| 121 | (IIc-1) | R³⁴= Hydrogen | | 75 : 25 : -- |
| | | R³⁵= Hydrogen | | |
| | | A = phenyl | | |
| | | 3-SO₂X= 3-SO₂(ß-sulfatoethyl) | | |
| | | | | |
| | | R³⁹= 2-SO₃M | | |
| | | R⁴⁰= Hydrogen | | |
| | | C = phenyl | | |
| | | 4-SO₂X= 4-SO₂(ß-sulfatoethyl) | | |
| 122 | (IIc-1) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | R³⁹= Hydrogen | R³⁹= Hydrogen | |
| | | R⁴⁰= Hydrogen | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 123 | (IIc-1) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 3-SO₂X= 3-SO₂(ß-sulfatoethyl) | |
| 124 | (IIc-1) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 3-SO₃M | |
| | | C = phenyl | C = phenyl | |
| | | 4-SO₂X= 4-SO₂(ß-sulfatoethyl) | 5-SO₂X= 5-SO₂(ß-sulfatoethyl) | |
| 125 | (IIc-1) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 5-methyl | |
| | | C = phenyl | C = phenyl | |
| | | 4-SO₂X= 4-SO₂(ß-sulfatoethyl) | 4-SO₂X= 4-SO₂(ß-sulfatoethyl) | |
| 126 | (IIc-1) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 2-methoxy | |
| | | C = phenyl | C = phenyl | |
| | | 4-SO₂X= 4-SO₂(ß-sulfatoethyl) | 4-SO₂X= 4-SO₂(ß-sulfatoethyl) | |
| 127 | (IIc-1) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= Hydrogen | |
| | | R⁴⁰= Hydrogen | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 128 | (IIc-1) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 3-SO₂X= 3-SO₂(ß-sulfatoethyl) | |
| 129 | (IIc-1) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= 2-methoxy | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 5-SO₂X= 5-SO₂(ß-sulfatoethyl) | |

All examples of the following table are prepared as formulations as explained above using dyes of formula (IIb-1) and (Ia').

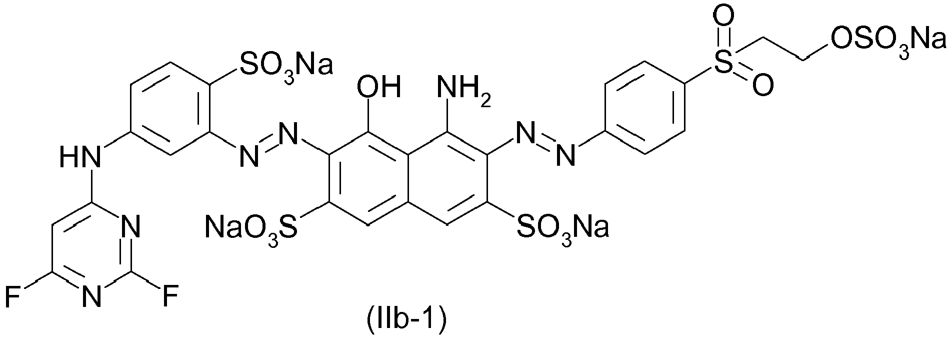

| Example | Component (II) | Component (Ia') | Component (Ia') | Ratio (II) : (Ia') : (Ia') |
|---|---|---|---|---|
| 130 | (IIb-1) | R³⁴= Hydrogen | R³⁴= Hydrogen | 60 : 10 : 30 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 4-SO₂X= 4-SO₂(ß-sulfatoethyl) | |
| 131 | (IIb-1) | R³⁴= Hydrogen | R³⁴= Hydrogen | 62 : 8 : 30 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= 2-SO₃M | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 132 | (IIb-1) | R³⁴= Hydrogen | R³⁴= Hydrogen | 60 : 8 : 32 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = naphthyl | |
| | | 4-SO₂X= 4-SO₂(ß-sulfatoethyl) | 5-SO₂X= 5-SO₂(ß-sulfatoethyl) | |
| 133 | (IIb-1) | R³⁴= Hydrogen | | 60 : 40 : -- |
| | | R³⁵= Hydrogen | | |
| | | A = phenyl | | |
| | | 4-SO₂X= 4-SO₂(ß-sulfatoethyl) | | |
| | | | | |
| | | R³⁹= Hydrogen | | |
| | | R⁴⁰= Hydrogen | | |
| | | C = phenyl | | |
| | | 4-SO₂X= 4-SO₂(ß-sulfatoethyl) | | |
| 134 | (IIb-1) | | R³⁴= Hydrogen | 65 : -- : 35 |
| | | | R³⁵= 2-SO₃M | |
| | | | A = phenyl | |
| | | | 4-SO₂X= 4-SO₂(ß-sulfatoethyl) | |
| | | | | |
| | | | R³⁹= Hydrogen | |
| | | | R⁴⁰= Hydrogen | |
| | | | C = phenyl | |
| | | | 4-SO₂X= 4-SO₂(ß-sulfatoethyl) | |
| 135 | (IIb-1) | R³⁴= Hydrogen | | 62 : 38 : - |
| | | R³⁵= Hydrogen | | |
| | | A = phenyl | | |
| | | 3-SO₂X= 3-SO₂(ß-sulfatoethyl) | | |
| | | | | |
| | | R³⁹= Hydrogen | | |
| | | R⁴⁰= Hydrogen | | |
| | | C = phenyl | | |
| | | 4-SO₂X= 4-SO₂(ß-sulfatoethyl) | | |
| 136 | (IIb-1) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | R³⁹= Hydrogen | R³⁹= Hydrogen | |
| | | R⁴⁰= Hydrogen | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 137 | (IIb-1) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 3-SO₂X= 3-SO₂(ß-sulfatoethyl) | |
| 138 | (IIb-1) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 3-SO₃M | |
| | | C = phenyl | C = phenyl | |
| | | 4-SO₂X= 4-SO₂(ß-sulfatoethyl) | 5-SO₂X= 5-SO₂(ß-sulfatoethyl) | |
| 139 | (IIb-1) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 5-methyl | |
| | | C = phenyl | C = phenyl | |
| | | 4-SO₂X= 4-SO₂(ß-sulfatoethyl) | 4-SO₂X= 4-SO₂(ß-sulfatoethyl) | |
| 140 | (IIb-1) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 2-methoxy | |
| | | C = phenyl | C = phenyl | |
| | | 4-SO₂X= 4-SO₂(ß-sulfatoethyl) | 4-SO₂X= 4-SO₂(ß-sulfatoethyl) | |
| 141 | (IIb-1) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= Hydrogen | |
| | | R⁴⁰= Hydrogen | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 142 | (IIb-1) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 3-SO₂X= 3-SO₂(ß-sulfatoethyl) | |
| 143 | (IIb-1) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= 2-methoxy | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 5-SO₂X= 5-SO₂(ß-sulfatoethyl) | |

All examples of the following table are prepared as formulations as explained above using dyes of formula (IIb-2) and (Ia').

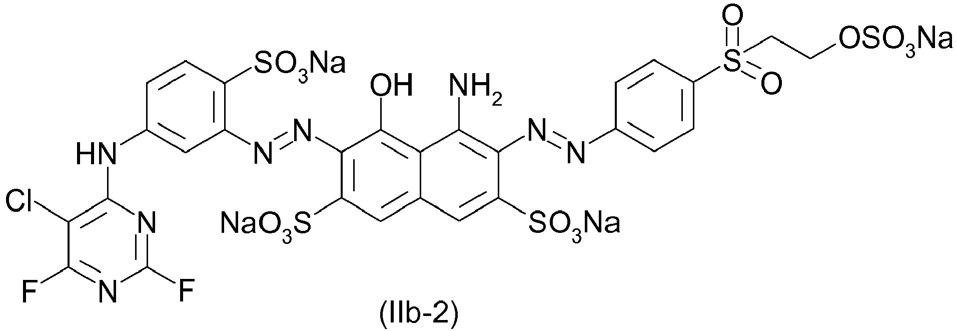

| Example | Component (II) | Component (Ia') | Component (Ia') | Ratio (II) : (Ia') : (Ia') |
|---|---|---|---|---|
| 144 | (IIb-2) | R³⁴= Hydrogen | R³⁴= Hydrogen | 60 : 10 : 30 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 4-SO₂X= 4-SO₂(ß-sulfatoethyl) | |
| 145 | (IIb-2) | R³⁴= Hydrogen | R³⁴= Hydrogen | 62 : 8 : 30 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= 2-SO₃M | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 146 | (IIb-2) | R³⁴= Hydrogen | R³⁴= Hydrogen | 60 : 8 : 32 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = naphthyl | |
| | | 4-SO₂X= 4-SO₂(ß-sulfatoethyl) | 5-SO₂X= 5-SO₂(ß-sulfatoethyl) | |
| 147 | (IIb-2) | R³⁴= Hydrogen | | 60 : 40 : -- |
| | | R³⁵= Hydrogen | | |
| | | A = phenyl | | |
| | | 4-SO₂X= 4-SO₂(ß-sulfatoethyl) | | |
| | | | | |
| | | R³⁹= Hydrogen | | |
| | | R⁴⁰= Hydrogen | | |
| | | C = phenyl | | |
| | | 4-SO₂X= 4-SO₂(ß-sulfatoethyl) | | |
| 148 | (IIb-2) | | R³⁴= Hydrogen | 65 : -- : 35 |
| | | | R³⁵= 2-SO₃M | |
| | | | A = phenyl | |
| | | | 4-SO₂X= 4-SO₂(ß-sulfatoethyl) | |
| | | | | |
| | | | R³⁹= Hydrogen | |
| | | | R⁴⁰= Hydrogen | |
| | | | C = phenyl | |
| | | | 4-SO₂X= 4-SO₂(ß-sulfatoethyl) | |
| 149 | (IIb-2) | R³⁴= Hydrogen | | 62 : 38 : -- |
| | | R³⁵= Hydrogen | | |
| | | A = phenyl | | |
| | | 3-SO₂X= 3-SO₂(ß-sulfatoethyl) | | |
| | | | | |
| | | R³⁹= Hydrogen | | |
| | | R⁴⁰= 2-SO₃M | | |
| | | C = phenyl | | |
| | | 4-SO₂X= 4-SO₂(ß-sulfatoethyl) | | |
| 150 | (IIb-2) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | R³⁹= Hydrogen | R³⁹= Hydrogen | |
| | | R⁴⁰= Hydrogen | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 151 | (IIb-2) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 3-SO₂X= 3-SO₂(ß-sulfatoethyl) | |
| 152 | (IIb-2) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 3-SO₃M | |
| | | C = phenyl | C = phenyl | |
| | | 4-SO₂X= 4-SO₂(ß-sulfatoethyl) | 5-SO₂X= 5-SO₂(ß-sulfatoethyl) | |
| 153 | (IIb-2) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 5-methyl | |
| | | C = phenyl | C = phenyl | |
| | | 4-SO₂X= 4-SO₂(ß-sulfatoethyl) | 4-SO₂X= 4-SO₂(ß-sulfatoethyl) | |
| 154 | (IIb-2) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 2-methoxy | |
| | | C = phenyl | C = phenyl | |
| | | 4-SO₂X= 4-SO₂(ß-sulfatoethyl) | 4-SO₂X= 4-SO₂(ß-sulfatoethyl) | |
| 155 | (IIb-2) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= Hydrogen | |
| | | R⁴⁰= Hydrogen | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 156 | (IIb-2) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 3-SO₂X= 3-SO₂(ß-sulfatoethyl) | |
| 157 | (IIb-2) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= 2-methoxy | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 5-SO₂X= 5-SO₂(ß-sulfatoethyl) | |

All examples of the following table are prepared as formulations as explained above using dyes of formula (IIb-3) and (Ia').

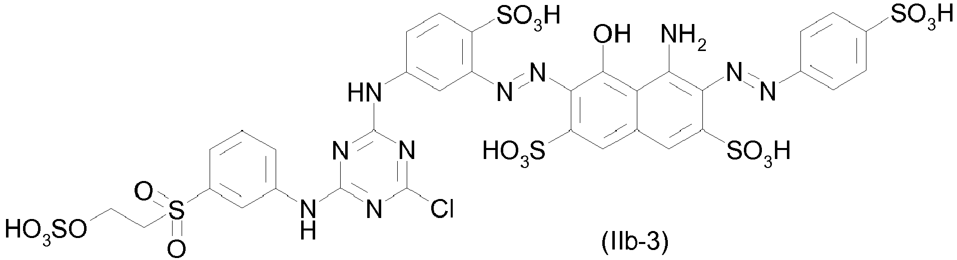

| Example | Component (II) | Component (Ia') | Component (Ia') | Ratio (II) : (Ia') : (Ia') |
|---|---|---|---|---|
| 158 | (IIb-3) | R³⁴= Hydrogen | R³⁴= Hydrogen | 60 : 10 : 30 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 4-SO₂X= 4-SO₂(ß-sulfatoethyl) | |
| 159 | (IIb-3) | R³⁴= Hydrogen | R³⁴= Hydrogen | 62 : 8 : 30 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= 2-SO₃M | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 160 | (IIb-3) | R³⁴= Hydrogen | R³⁴= Hydrogen | 60 : 8 : 32 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = naphthyl | |
| | | 4-SO₂X= 4-SO₂(ß-sulfatoethyl) | 5-SO₂X= 5-SO₂(ß-sulfatoethyl) | |
| 161 | (IIb-3) | R³⁴= Hydrogen | | 60 : 40 : -- |
| | | R³⁵= Hydrogen | | |
| | | A = phenyl | | |
| | | 4-SO₂X= 4-SO₂(ß-sulfatoethyl) | | |
| | | | | |
| | | R³⁹= Hydrogen | | |
| | | R⁴⁰= Hydrogen | | |
| | | C = phenyl | | |
| | | 4-SO₂X= 4-SO₂(ß-sulfatoethyl) | | |
| 162 | (IIb-3) | | R³⁴= Hydrogen | 65 : -- : 35 |
| | | | R³⁵= 2-SO₃M | |
| | | | A = phenyl | |
| | | | 4-SO₂X= 4-SO₂(ß-sulfatoethyl) | |
| | | | | |
| | | | R³⁹= Hydrogen | |
| | | | R⁴⁰= Hydrogen | |
| | | | C = phenyl | |
| | | | 4-SO₂X= 4-SO₂(ß-sulfatoethyl) | |
| 163 | (IIb-3) | R³⁴= 2-Methoxy | | 62 : 38 : -- |
| | | R³⁵= 5-Methyl | | |
| | | A = phenyl | | |
| | | 4-SO₂X= 4-SO₂(ß-sulfatoethyl) | | |
| | | | | |
| | | R³⁹= 2-Methoxy | | |
| | | R⁴⁰= 5-Methyl | | |
| | | C = phenyl | | |
| | | 4-SO₂X= 4-SO₂(ß-sulfatoethyl) | | |
| 164 | (IIb-3) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | R³⁹= Hydrogen | R³⁹= Hydrogen | |
| | | R⁴⁰= Hydrogen | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 165 | (IIb-3) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 3-SO₂X= 3-SO₂(ß-sulfatoethyl) | |
| 166 | (IIb-3) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 3-SO₃M | |
| | | C = phenyl | C = phenyl | |
| | | 4-SO₂X= 4-SO₂(ß-sulfatoethyl) | 5-SO₂X= 5-SO₂(ß-sulfatoethyl) | |
| 167 | (IIb-3) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 5-methyl | |
| | | C = phenyl | C = phenyl | |
| | | 4-SO₂X= 4-SO₂(ß-sulfatoethyl) | 4-SO₂X= 4-SO₂(ß-sulfatoethyl) | |
| 168 | (IIb-3) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 2-methoxy | |
| | | C = phenyl | C = phenyl | |
| | | 4-SO₂X= 4-SO₂(ß-sulfatoethyl) | 4-SO₂X= 4-SO₂(ß-sulfatoethyl) | |
| 169 | (IIb-3) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= Hydrogen | |
| | | R⁴⁰= Hydrogen | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 170 | (IIb-3) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 3-SO₂X= 3-SO₂(ß-sulfatoethyl) | |
| 171 | (IIb-3) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= 2-methoxy | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 5-SO₂X= 5-SO₂(ß-sulfatoethyl) | |

All examples of the following table are prepared as formulations as explained above using dyes of formula (IIf-1) and (Ia').

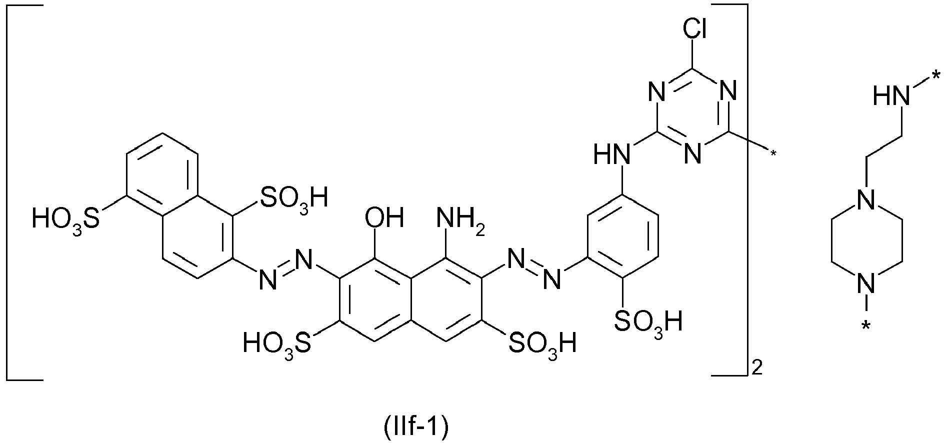

| Example | Component (II) | Component (Ia') | Component (Ia') | Ratio (II) : (Ia') : (Ia') |
|---|---|---|---|---|
| 172 | (IIf-1) | R³⁴= Hydrogen | R³⁴= Hydrogen | 60 : 10 : 30 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 4-SO₂X= 4-SO₂(ß-sulfatoethyl) | |
| 173 | (IIf-1) | R³⁴= Hydrogen | R³⁴= Hydrogen | 62 : 8 : 30 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= 2-SO₃M | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 174 | (IIf-1) | R³⁴= Hydrogen | R³⁴= Hydrogen | 60 : 8 : 32 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = naphthyl | |
| | | 4-SO₂X= 4-SO₂(ß-sulfatoethyl) | 5-SO₂X= 5-SO₂(ß-sulfatoethyl) | |
| 175 | (IIf-1) | R³⁴= Hydrogen | | 60 : 40 : -- |
| | | R³⁵= Hydrogen | | |
| | | A = phenyl | | |
| | | 4-SO₂X= 4-SO₂(ß-sulfatoethyl) | | |
| | | | | |
| | | R³⁹= Hydrogen | | |
| | | R⁴⁰= Hydrogen | | |
| | | C = phenyl | | |
| | | 4-SO₂X= 4-SO₂(ß-sulfatoethyl) | | |
| 176 | (IIf-1) | | R³⁴= Hydrogen | 65 : -- : 35 |
| | | | R³⁵= 2-SO₃M | |
| | | | A = phenyl | |
| | | | 4-SO₂X= 4-SO₂(ß-sulfatoethyl) | |
| | | | R³⁹= Hydrogen | |
| | | | R⁴⁰= Hydrogen | |
| | | | C = phenyl | |
| | | | 4-SO₂X= 4-SO₂(ß-sulfatoethyl) | |
| 177 | (IIf-1) | R³⁴= Hydrogen | | 62 : 38 : -- |
| | | R³⁵= Hydrogen | | |
| | | A = phenyl | | |
| | | 4-SO₂X= 4-SO₂(ß-sulfatoethyl) | | |
| | | | | |
| | | R³⁹= 2-Methoxy | | |
| | | R⁴⁰= 5-Methoxy | | |
| | | C = phenyl | | |
| | | 4-SO₂X= 4-SO₂(ß-sulfatoethyl) | | |
| 178 | (IIf-1) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 179 | (IIf-1) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 3-SO₂X= 3-SO₂(ß-sulfatoethyl) | |
| 180 | (IIf-1) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 3-SO₃M | |
| | | C = phenyl | C = phenyl | |
| | | 4-SO₂X= 4-SO₂(ß-sulfatoethyl) | 5-SO₂X= 5-SO₂(ß-sulfatoethyl) | |
| 181 | (IIf-1) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 5-methyl | |
| | | C = phenyl | C = phenyl | |
| | | 4-SO₂X= 4-SO₂(ß-sulfatoethyl) | 4-SO₂X= 4-SO₂(ß-sulfatoethyl) | |
| 182 | (IIf-1) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 2-methoxy | |
| | | C = phenyl | C = phenyl | |
| | | 4-SO₂X= 4-SO₂(ß-sulfatoethyl) | 4-SO₂X= 4-SO₂(ß-sulfatoethyl) | |
| 183 | (IIf-1) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= Hydrogen | |
| | | R⁴⁰= Hydrogen | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 184 | (IIf-1) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 3-SO₂X= 3-SO₂(ß-sulfatoethyl) | |
| 185 | (IIf-1) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= 2-methoxy | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 5-SO₂X= 5-SO₂(ß-sulfatoethyl) | |

All examples of the following table are prepared as formulations as explained above using dyes of formula (IId-1) and (Ia').

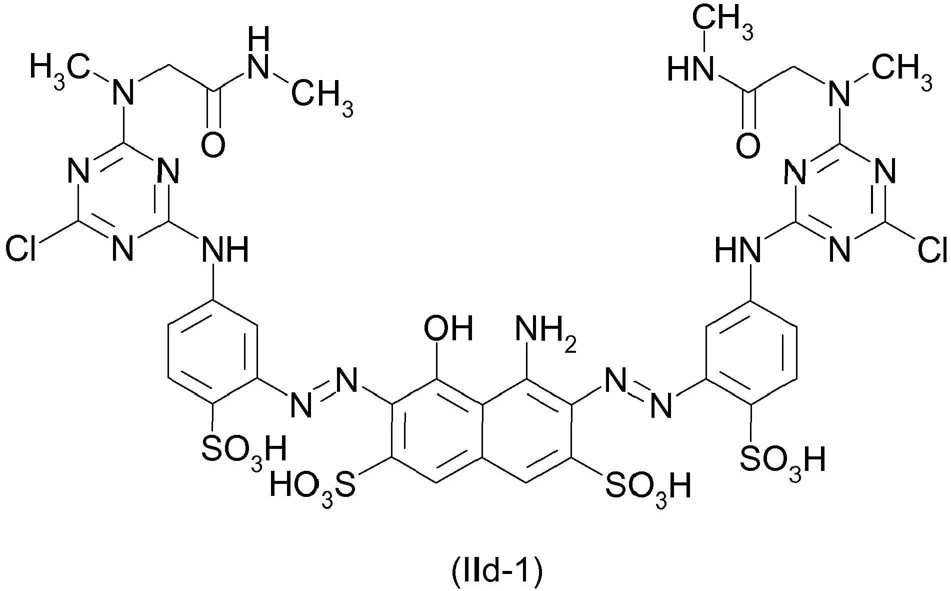

| Example | Component (II) | Component (Ia') | Component (Ia') | Ratio (II) : (Ia') : (Ia') |
|---|---|---|---|---|
| 186 | (IId-1) | R³⁴= Hydrogen | R³⁴= Hydrogen | 60 : 10 : 30 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 4-SO₂X= 4-SO₂(ß-sulfatoethyl) | |
| 187 | (IId-1) | R³⁴= Hydrogen | R³⁴= Hydrogen | 62 : 8 : 30 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= 2-SO₃M | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 188 | (IId-1) | R³⁴= Hydrogen | R³⁴= Hydrogen | 60 : 8 : 32 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = naphthyl | |
| | | 4-SO₂X= 4-SO₂(ß-sulfatoethyl) | 5-SO₂X= 5-SO₂(ß-sulfatoethyl) | |
| 189 | (IId-1) | R³⁴= Hydrogen | | 60 : 40 : -- |
| | | R³⁵= Hydrogen | | |
| | | A = phenyl | | |
| | | 4-SO₂X= 4-SO₂(ß-sulfatoethyl) | | |
| | | | | |
| | | R³⁹= Hydrogen | | |
| | | R⁴⁰= Hydrogen | | |
| | | C = phenyl | | |
| | | 4-SO₂X= 4-SO₂(ß-sulfatoethyl) | | |
| 190 | (IId-1) | | R³⁴= Hydrogen | 65 : -- : 35 |
| | | | R³⁵= 2-SO₃M | |
| | | | A = phenyl | |
| | | | 4-SO₂X= 4-SO₂(ß-sulfatoethyl) | |
| | | | | |
| | | | R³⁹= Hydrogen | |
| | | | R⁴⁰= Hydrogen | |
| | | | C = phenyl | |
| | | | 4-SO₂X= 4-SO₂(ß-sulfatoethyl) | |
| 191 | (IId-1) | R³⁴= 2-Methoxy | | 62 : 38 : -- |
| | | R³⁵= Hydrogen | | |
| | | A = phenyl | | |
| | | 5-SO₂X= 4-SO₂(ß-sulfatoethyl) | | |
| | | | | |
| | | R³⁹= 2-Methoxy | | |
| | | R⁴⁰= Hydrogen | | |
| | | C = phenyl | | |
| | | 5-SO₂X= 4-SO₂(ß-sulfatoethyl) | | |
| 192 | (IId-1) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | R³⁹= Hydrogen | R³⁹= Hydrogen | |
| | | R⁴⁰= Hydrogen | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 193 | (IId-1) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 3-SO₂X= 3-SO₂(ß-sulfatoethyl) | |
| 194 | (IId-1) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 3-SO₃M | |
| | | C = phenyl | C = phenyl | |
| | | 4-SO₂X= 4-SO₂(ß-sulfatoethyl) | 5-SO₂X= 5-SO₂(ß-sulfatoethyl) | |
| 195 | (IId-1) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 5-methyl | |
| | | C = phenyl | C = phenyl | |
| | | 4-SO₂X= 4-SO₂(ß-sulfatoethyl) | 4-SO₂X= 4-SO₂(ß-sulfatoethyl) | |
| 196 | (IId-1) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 2-methoxy | |
| | | C = phenyl | C = phenyl | |
| | | 4-SO₂X= 4-SO₂(ß-sulfatoethyl) | 4-SO₂X= 4-SO₂(ß-sulfatoethyl) | |
| 197 | (IId-1) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= Hydrogen | |
| | | R⁴⁰= Hydrogen | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 198 | (IId-1) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 3-SO₂X= 3-SO₂(ß-sulfatoethyl) | |
| 199 | (IId-1) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= 2-methoxy | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 5-SO₂X= 5-SO₂(ß-sulfatoethyl) | |

Furthermore, in the following examples 200-395, dyes of formula (Ia") are used in formulations. 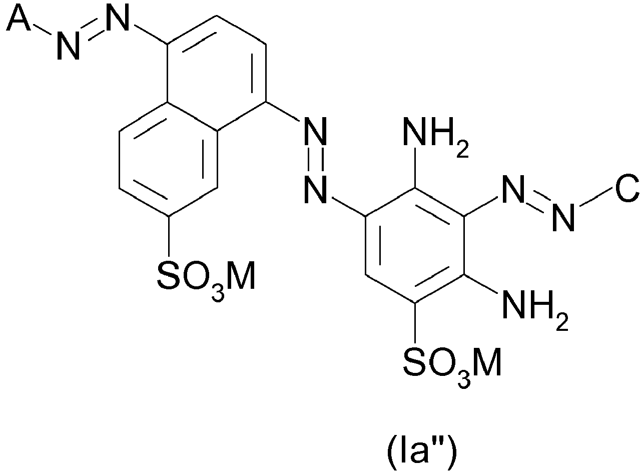 Wherein, 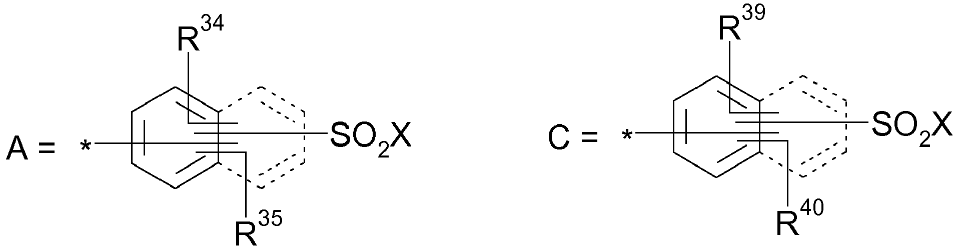 M is hydrogen, sodium, potassium and lithium.
* means point of attachment.

All examples of the following table are prepared as formulations as explained above using dyes of formula (IIa-1) and (Ia").

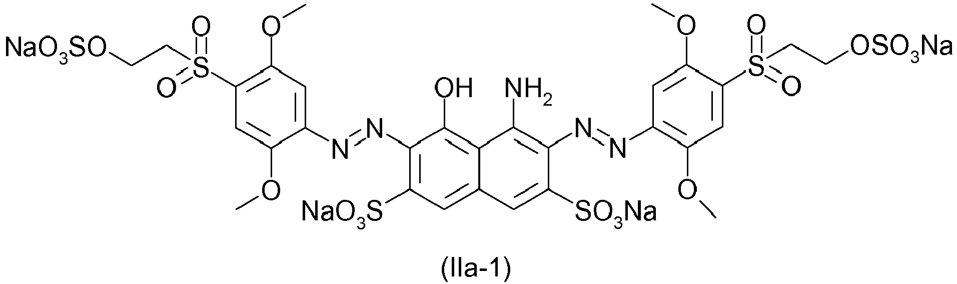

| Example | Component (II) | Component (Ia") | Component (Ia") | Ratio (II) : (Ia") : (Ia") |
|---|---|---|---|---|
| 200 | (IIa-1) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 4-SO₂X= 4-SO₂(ß-sulfatoethyl) | |
| 201 | (IIa-1) | R³⁴= Hydrogen | R³⁴= Hydrogen | 51 : 31 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= 2-SO₃M | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 202 | (IIa-1) | R³⁴= Hydrogen | R³⁴= Hydrogen | 50 : 30 : 20 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹ = Hydrogen | R³⁹= Hydrogen | |
| | | R⁴⁰= Hydrogen | R⁴⁰= Hydrogen | |
| | | C = phenol | C = naphthyl | |
| | | 4-SO₂X= 4-SO₂(ß-sulfatoethyl) | 5-SO₂X= 5-SO₂(ß-sulfatoethyl) | |
| 203 | (IIa-1) | R³⁴= Hydrogen | | 52 : 48 : -- |
| | | R³⁵= Hydrogen | | |
| | | A = phenyl | | |
| | | 4-SO₂X= 4-SO₂(ß-sulfatoethyl) | | |
| | | | | |
| | | R³⁹= Hydrogen | | |
| | | R⁴⁰= Hydrogen | | |
| | | C = phenyl | | |
| | | 4-SO₂X= 4-SO₂(ß-sulfatoethyl) | | |
| 204 | (IIa-1) | | R³⁴= Hydrogen | 55 : -- : 45 |
| | | | R³⁵= 2-SO₃M | |
| | | | A = phenyl | |
| | | | 4-SO₂X= 4-SO₂(ß-sulfatoethyl) | |
| | | | | |
| | | | R³⁹= Hydrogen | |
| | | | R⁴⁰= Hydrogen | |
| | | | C = phenyl | |
| | | | 4-SO₂X= 4-SO₂(ß-sulfatoethyl) | |
| 205 | (IIa-1) | R³⁴= 2-Methoxy | | 52 : 48 : -- |
| | | R³⁵ = 5-Methoxy | | |
| | | A = phenyl | | |
| | | 4-SO₂X= 4-SO₂(ß-sulfatoethyl) | | |
| | | | | |
| | | R³⁹= 2-Methoxy | | |
| | | R⁴⁰= 5-Methoxy | | |
| | | C = phenyl | | |
| | | 4-SO₂X= 4-SO₂(ß-sulfatoethyl) | | |
| 206 | (IIa-1) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 207 | (IIa-1) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹ = Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 3-SO₂X= 3-SO₂(ß-sulfatoethyl) | |
| 208 | (IIa-1) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 3-SO₃M | |
| | | C = phenyl | C = phenyl | |
| | | 4-SO₂X= 4-SO₂(ß-sulfatoethyl) | 5-SO₂X= 5-SO₂(ß-sulfatoethyl) | |
| 209 | (IIa-1) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 5-methyl | |
| | | C = phenyl | C = phenyl | |
| | | 4-SO₂X= 4-SO₂(ß-sulfatoethyl) | 4-SO₂X= 4-SO₂(ß-sulfatoethyl) | |
| 210 | (IIa-1) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 2-methoxy | |
| | | C = phenyl | C = phenyl | |
| | | 4-SO₂X= 4-SO₂(ß-sulfatoethyl) | 4-SO₂X= 4-SO₂(ß-sulfatoethyl) | |
| 211 | (IIa-1) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= Hydrogen | |
| | | R⁴⁰= Hydrogen | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 212 | (IIa-1) | R³⁴= Hydrogen | R³⁴= Hydrogen | 48:34:18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 3-SO₂X= 3-SO₂(ß-sulfatoethyl) | |
| 213 | (IIa-1) | R³⁴= Hydrogen | R³⁴= Hydrogen | 48:34:18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= 2-methoxy | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 5-SO₂X= 5-SO₂(ß-sulfatoethyl) | |

All examples of the following table are prepared as formulations as explained above using dyes of formula (IIa-2) and (Ia").

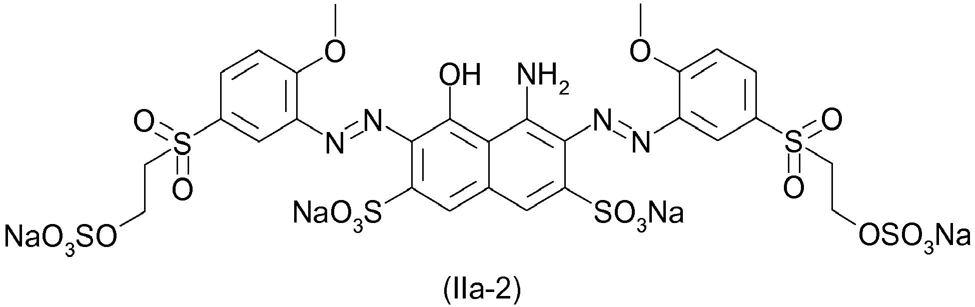

| Example | Component (II) | Component (Ia") | Component (Ia") | Ratio (II) : (Ia") : (Ia") |
|---|---|---|---|---|
| 214 | (IIa-2) | R³⁴= Hydrogen | R³⁴= Hydrogen | 55 : 31 : 14 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 4-SO₂X= 4-SO₂(ß-sulfatoethyl) | |
| 215 | (IIa-2) | R³⁴= Hydrogen | R³⁴= Hydrogen | 56 : 29 : 15 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= 2-SO₃M | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 216 | (IIa-2) | R³⁴= Hydrogen | R³⁴= Hydrogen | 55:30:15 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = naphthyl | |
| | | 4-SO₂X= 4-SO₂(ß-sulfatoethyl) | 5-SO₂X= 5-SO₂(ß-sulfatoethyl) | |
| 217 | (IIa-2) | R³⁴= Hydrogen | | 54 : 46 : -- |
| | | R³⁵= Hydrogen | | |
| | | A = phenyl | | |
| | | 4-SO₂X= 4-SO₂(ß-sulfatoethyl) | | |
| | | | | |
| | | R³⁹= Hydrogen | | |
| | | R⁴⁰= Hydrogen | | |
| | | C = phenyl | | |
| | | 4-SO₂X= 4-SO₂(ß-sulfatoethyl) | | |
| 218 | (IIa-2) | | R³⁴= Hydrogen | 57 : -- : 43 |
| | | | R³⁵= 2-SO₃M | |
| | | | A = phenyl | |
| | | | 4-SO₂X= 4-SO₂(ß-sulfatoethyl) | |
| | | | R³⁹= Hydrogen | |
| | | | R⁴⁰= Hydrogen | |
| | | | C = phenyl | |
| | | | 4-SO₂X= 4-SO₂(ß-sulfatoethyl) | |
| 219 | (IIa-2) | R³⁴= 2-methoxy | | 55 : 45 : -- |
| | | R³⁵= 5-methyl | | |
| | | A = phenyl | | |
| | | 4-SO₂X= 4-SO₂(ß-sulfatoethyl) | | |
| | | | | |
| | | R³⁹= Hydrogen | | |
| | | R⁴⁰= 2-SO₃M | | |
| | | C = phenyl | | |
| | | 4-SO₂X= 4-SO₂(ß-sulfatoethyl) | | |
| 220 | (IIa-2) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X=4-SO₂(ß-sulfatoethyl) | |
| | | | | |
| | | R³⁹= Hydrogen | R³⁹= Hydrogen | |
| | | R⁴⁰= Hydrogen | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 221 | (IIa-2) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 3-SO₂X= 3-SO₂(ß-sulfatoethyl) | |
| 222 | (IIa-2) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 3-SO₃M | |
| | | C = phenyl | C = phenyl | |
| | | 4-SO₂X= 4-SO₂(ß-sulfatoethyl) | 5-SO₂X= 5-SO₂(ß-sulfatoethyl) | |
| 223 | (IIa-2) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 5-methyl | |
| | | C = phenyl | C = phenyl | |
| | | 4-SO₂X= 4-SO₂(ß-sulfatoethyl) | 4-SO₂X= 4-SO₂(ß-sulfatoethyl) | |
| 224 | (IIa-2) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 2-methoxy | |
| | | C = phenyl | C = phenyl | |
| | | 4-SO₂X= 4-SO₂(ß-sulfatoethyl) | 4-SO₂X= 4-SO₂(ß-sulfatoethyl) | |
| 225 | (IIa-2) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= Hydrogen | |
| | | R⁴⁰= Hydrogen | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 226 | (IIa-2) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 3-SO₂X= 3-SO₂(ß-sulfatoethyl) | |
| 227 | (IIa-2) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= 2-methoxy | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 5-SO₂X= 5-SO₂(ß-sulfatoethyl) | |

All examples of the following table are prepared as formulations as explained above using dyes of formula (IIa-3) and (Ia").

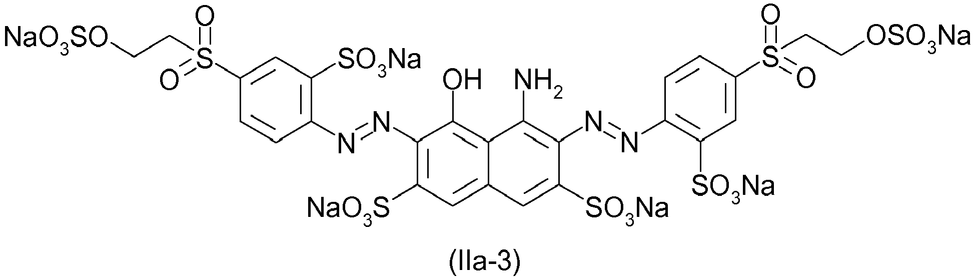

| Example | Component (II) | Component (Ia") | Component (Ia") | Ratio (II) : (Ia") : (Ia") |
|---|---|---|---|---|
| 228 | (IIa-3) | R³⁴= Hydrogen | R³⁴= Hydrogen | 48 : 20 : 32 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 4-SO₂X= 4-SO₂(ß-sulfatoethyl) | |
| 229 | (IIa-3) | R³⁴= Hydrogen | R³⁴= Hydrogen | 51 : 18 : 31 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= 2-SO₃M | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 230 | (IIa-3) | R³⁴= Hydrogen | R³⁴= Hydrogen | 50 : 20:30 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = naphthyl | |
| | | 4-SO₂X= 4-SO₂(ß-sulfatoethyl) | 5-SO₂X= 5-SO₂(ß-sulfatoethyl) | |
| 231 | (IIa-3) | R³⁴= Hydrogen | | 52 : 48 : -- |
| | | R³⁵= Hydrogen | | |
| | | A = phenyl | | |
| | | 4-SO₂X= 4-SO₂(ß-sulfatoethyl) | | |
| | | | | |
| | | R³⁹= Hydrogen | | |
| | | R⁴⁰= Hydrogen | | |
| | | C = phenyl | | |
| | | 4-SO₂X= 4-SO₂(ß-sulfatoethyl) | | |
| 232 | (IIa-3) | | R³⁴= Hydrogen | 55 : -- : 45 |
| | | | R³⁵= 2-SO₃M | |
| | | | A = phenyl | |
| | | | 4-SO₂X= 4-SO₂(ß-sulfatoethyl) | |
| | | | | |
| | | | R³⁹= Hydrogen | |
| | | | R⁴⁰= Hydrogen | |
| | | | C = phenyl | |
| | | | 4-SO₂X= 4-SO₂(ß-sulfatoethyl) | |
| 233 | (IIa-3) | R³⁴= 2-Methoxy | | 52 : 48 : -- |
| | | R³⁵ = Hydrogen | | |
| | | A = phenyl | | |
| | | 5-SO₂X= 5-SO₂(ß-sulfatoethyl) | | |
| | | | | |
| | | R39= Hydrogen | | |
| | | R40= Hydrogen | | |
| | | C = phenyl | | |
| | | 3-SO₂X= 3-SO2(ß-sulfatoethyl) | | |
| 234 | (IIa-3) | R³⁴= Hydrogen | R³⁴= Hydrogen | 48 : 34 : 18 |
| | | R³⁵= Hydrogen | R³⁵ = 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 235 | (IIa-3) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 3-SO₂X= 3-SO₂(ß-sulfatoethyl) | |
| 236 | (IIa-3) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 3-SO₃M | |
| | | C = phenyl | C = phenyl | |
| | | 4-SO₂X= 4-SO₂(ß-sulfatoethyl) | 5-SO₂X= 5-SO₂(ß-sulfatoethyl) | |
| 237 | (IIa-3) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 5-methyl | |
| | | C = phenyl | C = phenyl | |
| | | 4-SO₂X= 4-SO₂(ß-sulfatoethyl) | 4-SO₂X= 4-SO₂(ß-sulfatoethyl) | |
| 238 | (IIa-3) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 2-methoxy | |
| | | C = phenyl | C = phenyl | |
| | | 4-SO₂X= 4-SO₂(ß-sulfatoethyl) | 4-SO₂X= 4-SO₂(ß-sulfatoethyl) | |
| 239 | (IIa-3) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= Hydrogen | |
| | | R⁴⁰= Hydrogen | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 240 | (IIa-3) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 3-SO₂X= 3-SO₂(ß-sulfatoethyl) | |
| 241 | (IIa-3) | R³⁴=Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= 2-methoxy | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 5-SO₂X= 5-SO₂(ß-sulfatoethyl) | |

All examples of the following table are prepared as formulations as explained above using dyes of formula (IIa-4) and (Ia").

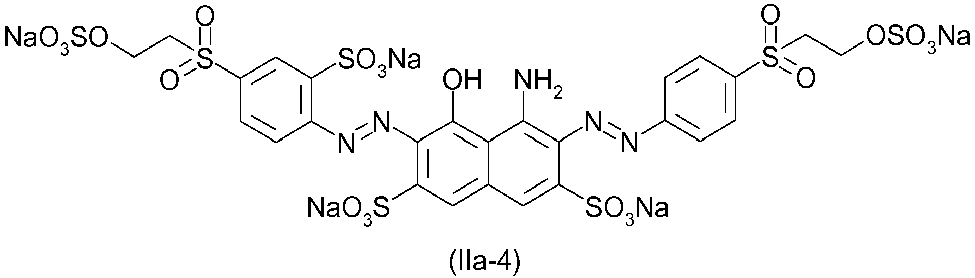

| Example | Component (II) | Component (Ia") | Component (Ia") | Ratio (II) : (Ia") (Ia") |
|---|---|---|---|---|
| 242 | (IIa-4) | R³⁴= Hydrogen | R³⁴= Hydrogen | 48 : 10 : 32 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 4-SO₂X= 4-SO₂(ß-sulfatoethyl) | |
| 243 | (IIa-4) | R³⁴= Hydrogen | R³⁴= Hydrogen | 51 : 8 : 41 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= 2-SO₃M | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 244 | (IIa-4) | R³⁴= Hydrogen | R³⁴= Hydrogen | 50 : 10 : 40 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = naphthyl | |
| | | 4-SO₂X= 4-SO₂(ß-sulfatoethyl) | 5-SO₂X= 5-SO₂(ß-sulfatoethyl) | |
| 245 | (IIa-4) | R³⁴= Hydrogen | | 62 : 38 : -- |
| | | R³⁵= Hydrogen | | |
| | | A = phenyl | | |
| | | 4-SO₂X= 4-SO₂(ß-sulfatoethyl) | | |
| | | | | |
| | | R³⁹= Hydrogen | | |
| | | R⁴⁰= Hydrogen | | |
| | | C = phenyl | | |
| | | 4-SO₂X= 4-SO₂(ß-sulfatoethyl) | | |
| 246 | (IIa-4) | | R³⁴= Hydrogen | 55 : -- : 45 |
| | | | R³⁵= 2-SO₃M | |
| | | | A = phenyl | |
| | | | 4-SO₂X= 4-SO₂(ß-sulfatoethyl) | |
| | | | | |
| | | | R³⁹= Hydrogen | |
| | | | R⁴⁰= Hydrogen | |
| | | | C = phenyl | |
| | | | 4-SO₂X= 4-SO₂(ß-sulfatoethyl) | |
| 247 | (IIa-4) | R³⁴= Hydrogen | | 55 : 45 : -- |
| | | R³⁵= 2-SO₃M | | |
| | | A = phenyl | | |
| | | 4-SO₂X= 4-SO₂(ß-sulfatoethyl) | | |
| | | | | |
| | | R³⁹= Hydrogen | | |
| | | R⁴⁰= 2-SO₃M | | |
| | | C = phenyl | | |
| | | 4-SO₂X= 4-SO₂(ß-sulfatoethyl) | | |
| 248 | (IIa-4) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | R³⁹= Hydrogen | R³⁹= Hydrogen | |
| | | R⁴⁰= Hydrogen | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 249 | (IIa-4) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 3-SO₂X= 3-SO₂(ß-sulfatoethyl) | |
| 250 | (IIa-4) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 3-SO₃M | |
| | | C = phenyl | C = phenyl | |
| | | 4-SO₂X= 4-SO₂(ß-sulfatoethyl) | 5-SO₂X= 5-SO₂(ß-sulfatoethyl) | |
| 251 | (IIa-4) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 5-methyl | |
| | | C = phenyl | C = phenyl | |
| | | 4-SO₂X= 4-SO₂(ß-sulfatoethyl) | 4-SO₂X= 4-SO₂(ß-sulfatoethyl) | |
| 252 | (IIa-4) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 2-methoxy | |
| | | C = phenyl | C = phenyl | |
| | | 4-SO₂X= 4-SO₂(ß-sulfatoethyl) | 4-SO₂X= 4-SO₂(ß-sulfatoethyl) | |
| 253 | (IIa-4) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= Hydrogen | |
| | | R⁴⁰= Hydrogen | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 254 | (IIa-4) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 3-SO₂X= 3-SO₂(ß-sulfatoethyl) | |
| 255 | (IIa-4) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= 2-methoxy | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 5-SO₂X= 5-SO₂(ß-sulfatoethyl) | |

All examples of the following table are prepared as formulations as explained above using dyes of formula (IIa-5) and (Ia").

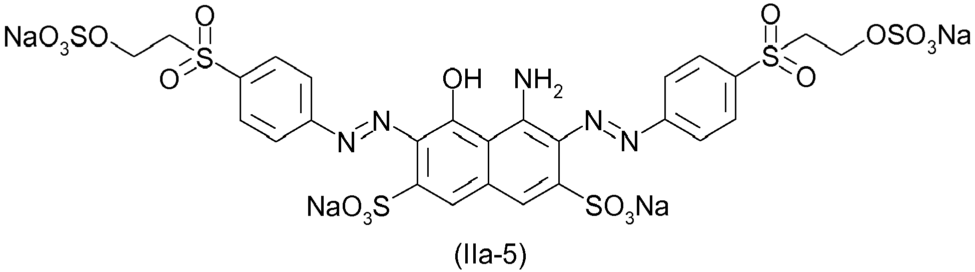

| Example | Component (II) | Component (Ia") | Component (Ia") | Ratio (II) : (Ia") (Ia") |
|---|---|---|---|---|
| 256 | (IIa-5) | R³⁴= Hydrogen | R³⁴= Hydrogen | 45 : 10 : 35 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 4-SO₂X= 4-SO₂(ß-sulfatoethyl) | |
| 257 | (IIa-5) | R³⁴= Hydrogen | R³⁴= Hydrogen | 50 : 9 : 41 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= 2-SO₃M | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 258 | (IIa-5) | R³⁴= Hydrogen | R³⁴= Hydrogen | 50 : 10 : 40 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = naphthyl | |
| | | 4-SO₂X= 4-SO₂(ß-sulfatoethyl) | 5-SO₂X= 5-SO₂(ß-sulfatoethyl) | |
| 259 | (IIa-5) | R³⁴= Hydrogen | | 60 : 40 : -- |
| | | R³⁵= Hydrogen | | |
| | | A = phenyl | | |
| | | 4-SO₂X= 4-SO₂(ß-sulfatoethyl) | | |
| | | | | |
| | | R³⁹= Hydrogen | | |
| | | R⁴⁰= Hydrogen | | |
| | | C = phenyl | | |
| | | 4-SO₂X= 4-SO₂(ß-sulfatoethyl) | | |
| 260 | (IIa-5) | | R³⁴= Hydrogen | 55 : -- : 45 |
| | | | R³⁵= 2-SO₃M | |
| | | | A = phenyl | |
| | | | 4-SO₂X= 4-SO₂(ß-sulfatoethyl) | |
| | | | | |
| | | | R³⁹= Hydrogen | |
| | | | R⁴⁰= Hydrogen | |
| | | | C = phenyl | |
| | | | 4-SO₂X= 4-SO₂(ß-sulfatoethyl) | |
| 261 | (IIa-5) | R³⁴= Hydrogen | | 55 : 45 : -- |
| | | R³⁵= Hydrogen | | |
| | | A = phenyl | | |
| | | 4-SO₂X= 4-SO₂(ß-sulfatoethyl) | | |
| | | | | |
| | | R³⁹= 2-Methoxy | | |
| | | R⁴⁰= 5-Methyl | | |
| | | C = phenyl | | |
| | | 4-SO₂X= 4-SO₂(ß-sulfatoethyl) | | |
| 262 | (IIa-5) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 263 | (IIa-5) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 3-SO₂X= 3-SO₂(ß-sulfatoethyl) | |
| 264 | (IIa-5) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 3-SO₃M | |
| | | C = phenyl | C = phenyl | |
| | | 4-SO₂X= 4-SO₂(ß-sulfatoethyl) | 5-SO₂X= 5-SO₂(ß-sulfatoethyl) | |
| 265 | (IIa-5) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 5-methyl | |
| | | C = phenyl | C = phenyl | |
| | | 4-SO₂X= 4-SO₂(ß-sulfatoethyl) | 4-SO₂X= 4-SO₂(ß-sulfatoethyl) | |
| 266 | (IIa-5) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 2-methoxy | |
| | | C = phenyl | C = phenyl | |
| | | 4-SO₂X= 4-SO₂(ß-sulfatoethyl) | 4-SO₂X= 4-SO₂(ß-sulfatoethyl) | |
| 267 | (IIa-5) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= Hydrogen | |
| | | R⁴⁰= Hydrogen | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 268 | (IIa-5) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 3-SO₂X= 3-SO₂(ß-sulfatoethyl) | |
| 269 | (IIa-5) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= 2-methoxy | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 5-SO₂X= 5-SO₂(ß-sulfatoethyl) | |

All examples of the following table are prepared as formulations as explained above using dyes of formula (IIa-6) and (Ia").

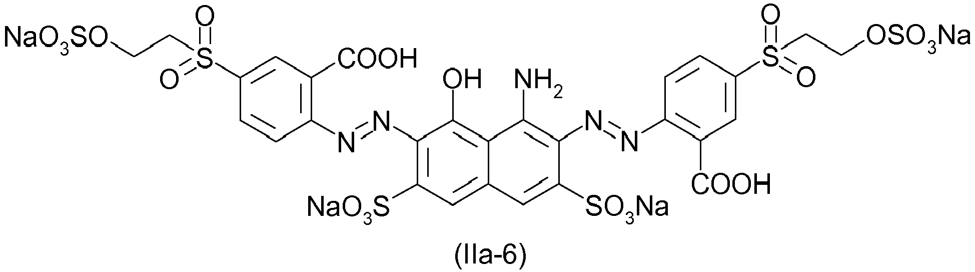

| Example | Component (II) | Component (Ia") | Component (Ia") | Ratio (II) : (Ia") (Ia") |
|---|---|---|---|---|
| 270 | (IIa-6) | R³⁴= Hydrogen | R³⁴= Hydrogen | 50 : 30 : 20 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 4-SO₂X= 4-SO₂(ß-sulfatoethyl) | |
| 271 | (IIa-6) | R³⁴= Hydrogen | R³⁴= Hydrogen | 54 : 28 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= 2-SO₃M | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 272 | (IIa-6) | R³⁴= Hydrogen | R³⁴= Hydrogen | 56 : 26 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = naphthyl | |
| | | 4-SO₂X= 4-SO₂(ß-sulfatoethyl) | 5-SO₂X= 5-SO₂(ß-sulfatoethyl) | |
| 273 | (IIa-6) | R³⁴= Hydrogen | | 55 : 45 : -- |
| | | R³⁵= Hydrogen | | |
| | | A = phenyl | | |
| | | 4-SO₂X= 4-SO₂(ß-sulfatoethyl) | | |
| | | | | |
| | | R³⁹= Hydrogen | | |
| | | R⁴⁰= Hydrogen | | |
| | | C = phenyl | | |
| | | 4-SO₂X= 4-SO₂(ß-sulfatoethyl) | | |
| 274 | (IIa-6) | | R³⁴= Hydrogen | 58 : -- : 42 |
| | | | R³⁵= 2-SO₃M | |
| | | | A = phenyl | |
| | | | 4-SO₂X= 4-SO₂(ß-sulfatoethyl) | |
| | | | | |
| | | | R³⁹= Hydrogen | |
| | | | R⁴⁰= Hydrogen | |
| | | | C = phenyl | |
| | | | 4-SO₂X= 4-SO₂(ß-sulfatoethyl) | |
| 275 | (IIa-6) | R³⁴= Hydrogen | | 55 : 45 : -- |
| | | R³⁵= Hydrogen | | |
| | | A = phenyl | | |
| | | 3-SO₂X= 3-SO₂(ß-sulfatoethyl) | | |
| | | | | |
| | | R³⁹= Hydrogen | | |
| | | R⁴⁰= Hydrogen | | |
| | | A = phenyl | | |
| | | 3-SO₂X= 3-SO₂(ß-sulfatoethyl) | | |
| 276 | (IIa-6) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | R³⁹= Hydrogen | R³⁹= Hydrogen | |
| | | R⁴⁰= Hydrogen | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 277 | (IIa-6) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 3-SO₂X= 3-SO₂(ß-sulfatoethyl) | |
| 278 | (IIa-6) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 3-SO₃M | |
| | | C = phenyl | C = phenyl | |
| | | 4-SO₂X= 4-SO₂(ß-sulfatoethyl) | 5-SO₂X= 5-SO₂(ß-sulfatoethyl) | |
| 279 | (IIa-6) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 5-methyl | |
| | | C = phenyl | C = phenyl | |
| | | 4-SO₂X= 4-SO₂(ß-sulfatoethyl) | 4-SO₂X= 4-SO₂(ß-sulfatoethyl) | |
| 280 | (IIa-6) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 2-methoxy | |
| | | C = phenyl | C = phenyl | |
| | | 4-SO₂X= 4-SO₂(ß-sulfatoethyl) | 4-SO₂X= 4-SO₂(ß-sulfatoethyl) | |
| 281 | (IIa-6) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= Hydrogen | |
| | | R⁴⁰= Hydrogen | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 282 | (IIa-6) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 3-SO₂X= 3-SO₂(ß-sulfatoethyl) | |
| 283 | (IIa-6) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= 2-methoxy | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 5-SO₂X= 5-SO₂(ß-sulfatoethyl) | |

All examples of the following table are prepared as formulations as explained above using dyes of formula (IIa-7) and (Ia").

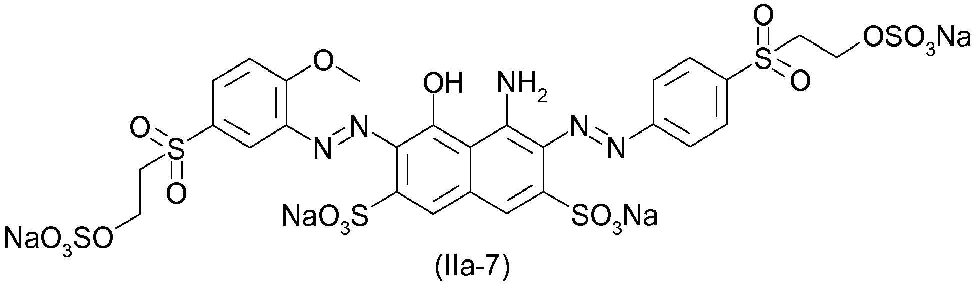

| Example | Component (II) | Component (Ia") | Component (Ia") | Ratio (II) : (Ia") : (Ia") |
|---|---|---|---|---|
| | | R³⁴= Hydrogen | R³⁴= Hydrogen | |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| 284 | (IIa-7) | | | 55:30: 15 |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 4-SO₂X= 4-SO₂(ß-sulfatoethyl) | |
| | | R³⁴= Hydrogen | R³⁴= Hydrogen | |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| 285 | (IIa-7) | | | 55 : 35 : 10 |
| | | R³⁹= Hydrogen | R³⁹= Hydrogen | |
| | | R⁴⁰= 2-SO₃M | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 286 | (IIa-7) | R³⁴= Hydrogen | R³⁴= Hydrogen | 56 : 32 : 12 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = naphthyl | |
| | | 4-SO₂X= 4-SO₂(ß-sulfatoethyl) | 5-SO₂X= 5-SO₂(ß-sulfatoethyl) | |
| 287 | (IIa-7) | R³⁴= Hydrogen | | 56 : 44 : -- |
| | | R³⁵= Hydrogen | | |
| | | A = phenyl | | |
| | | 4-SO₂X= 4-SO₂(ß-sulfatoethyl) | | |
| | | | | |
| | | R³⁹= Hydrogen | | |
| | | R⁴⁰= Hydrogen | | |
| | | C = phenyl | | |
| | | 4-SO₂X= 4-SO₂(ß-sulfatoethyl) | | |
| 288 | (IIa-7) | | R³⁴= Hydrogen | 56 : -- : 44 |
| | | | R³⁵= 2-SO₃M | |
| | | | A = phenyl | |
| | | | 4-SO₂X= 4-SO₂(ß-sulfatoethyl) | |
| | | | | |
| | | | R³⁹= Hydrogen | |
| | | | R⁴⁰= Hydrogen | |
| | | | C = phenyl | |
| | | | 4-SO₂X= 4-SO₂(ß-sulfatoethyl) | |
| 289 | (IIa-7) | R³⁴= Hydrogen | | 54 : 46 : -- |
| | | R³⁵= Hydrogen | | |
| | | A = phenyl | | |
| | | 4-SO₂X= 4-SO₂(ß-sulfatoethyl) | | |
| | | | | |
| | | R³⁹= 2-Methoxy | | |
| | | R⁴⁰= Hydrogen | | |
| | | C = phenyl | | |
| | | 5-SO₂X= 5-SO₂(ß-sulfatoethyl) | | |
| 290 | (IIa-7) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(-sulfatoethyl) | 4-SO₂X= 4-SO₂(ß-sulfatoethyl) | |
| | | R³⁹= Hydrogen | R³⁹= Hydrogen | |
| | | R⁴⁰= Hydrogen | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 291 | (IIa-7) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(-sulfatoethyl) | 3-SO₂X= 3-SO₂(ß-sulfatoethyl) | |
| 292 | (IIa-7) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 3-SO₃M | |
| | | C = phenyl | C = phenyl | |
| | | 4-SO₂X= 4-SO₂(ß-sulfatoethyl) | 5-SO₂X= 5-SO₂(ß-sulfatoethyl) | |
| 293 | (IIa-7) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 5-methyl | |
| | | C = phenyl | C = phenyl | |
| | | 4-SO₂X= 4-SO₂(ß-sulfatoethyl) | 4-SO₂X= 4-SO₂(ß-sulfatoethyl) | |
| 294 | (IIa-7) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 2-methoxy | |
| | | C = phenyl | C = phenyl | |
| | | 4-SO₂X= 4-SO₂(ß-sulfatoethyl) | 4-SO₂X= 4-SO₂(ß-sulfatoethyl) | |
| 295 | (IIa-7) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= Hydrogen | |
| | | R⁴⁰= Hydrogen | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 296 | (IIa-7) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 3-SO₂X= 3-SO₂(ß-sulfatoethyl) | |
| 297 | (IIa-7) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= 2-methoxy | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 5-SO₂X= 5-SO₂(ß-sulfatoethyl) | |

All examples of the following table are prepared as formulations as explained above using dyes of formula (IIa-8) and (Ia").

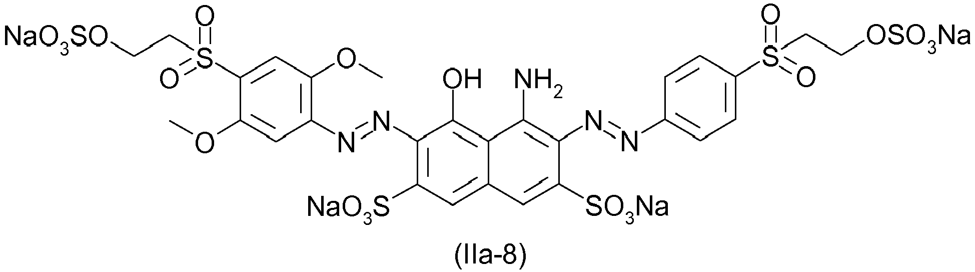

| Example | Component (II) | Component (Ia") | Component (Ia") | Ratio (II) : (Ia") : (Ia") |
|---|---|---|---|---|
| 298 | (IIa-8) | R³⁴= Hydrogen | R³⁴= Hydrogen | 48 : 30 : 22 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 4-SO₂X= 4-SO₂(ß-sulfatoethyl) | |
| 299 | (IIa-8) | R³⁴= Hydrogen | R³⁴= Hydrogen | 51 : 27 : 22 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= 2-SO₃M | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 300 | (IIa-8) | R³⁴= Hydrogen | R³⁴= Hydrogen | 50 : 26 : 24 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = naphthyl | |
| | | 4-SO₂X= 4-SO₂(ß-sulfatoethyl) | 5-SO₂X= 5-SO₂(ß-sulfatoethyl) | |
| 301 | (IIa-8) | R³⁴= Hydrogen | | 55 : 45 : -- |
| | | R³⁵= Hydrogen | | |
| | | A = phenyl | | |
| | | 4-SO₂X= 4-SO₂(ß-sulfatoethyl) | | |
| | | | | |
| | | R³⁹= Hydrogen | | |
| | | R⁴⁰= Hydrogen | | |
| | | C = phenyl | | |
| | | 4-SO₂X= 4-SO₂(ß-sulfatoethyl) | | |
| 302 | (IIa-8) | | R³⁴= Hydrogen | 50 : -- : 50 |
| | | | R³⁵= 2-SO₃M | |
| | | | A = phenyl | |
| | | | 4-SO₂X= 4-SO₂(ß-sulfatoethyl) | |
| | | | | |
| | | | R³⁹= Hydrogen | |
| | | | R⁴⁰= Hydrogen | |
| | | | C = phenyl | |
| | | | 4-SO₂X= 4-SO₂(ß-sulfatoethyl) | |
| 303 | (IIa-8) | R³⁴= 2-Methoxy | | 55 : 45 : -- |
| | | R³⁵= 5-Methoxy | | |
| | | A = phenyl | | |
| | | 4-SO₂X= 4-SO₂(ß-sulfatoethyl) | | |
| | | | | |
| | | R³⁹= Hydrogen | | |
| | | R⁴⁰= Hydrogen | | |
| | | C = phenyl | | |
| | | 4-SO₂X= 4-SO₂(ß-sulfatoethyl) | | |
| 304 | (IIa-8) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(-sulfatoethyl) | |
| | | R³⁹= Hydrogen | R³⁹= Hydrogen | |
| | | R⁴⁰= Hydrogen | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 305 | (IIa-8) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(-sulfatoethyl) | 3-SO₂X= 3-SO₂(ß-sulfatoethyl) | |
| 306 | (IIa-8) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 3-SO₃M | |
| | | C = phenyl | C = phenyl | |
| | | 4-SO₂X= 4-SO₂(ß-sulfatoethyl) | 5-SO₂X= 5-SO₂(ß-sulfatoethyl) | |
| 307 | (IIa-8) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 5-methyl | |
| | | C = phenyl | C = phenyl | |
| | | 4-SO₂X= 4-SO₂(ß-sulfatoethyl) | 4-SO₂X= 4-SO₂(ß-sulfatoethyl) | |
| 308 | (IIa-8) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 2-methoxy | |
| | | C = phenyl | C = phenyl | |
| | | 4-SO₂X= 4-SO₂(ß-sulfatoethyl) | 4-SO₂X= 4-SO₂(ß-sulfatoethyl) | |
| 309 | (IIa-8) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= Hydrogen | |
| | | R⁴⁰= Hydrogen | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 310 | (IIa-8) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 3-SO₂X= 3-SO₂(ß-sulfatoethyl) | |
| 311 | (IIa-8) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= 2-methoxy | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 5-SO₂X= 5-SO₂(ß-sulfatoethyl) | |

All examples of the following table are prepared as formulations as explained above using dyes of formula (IIc-1) and (Ia").

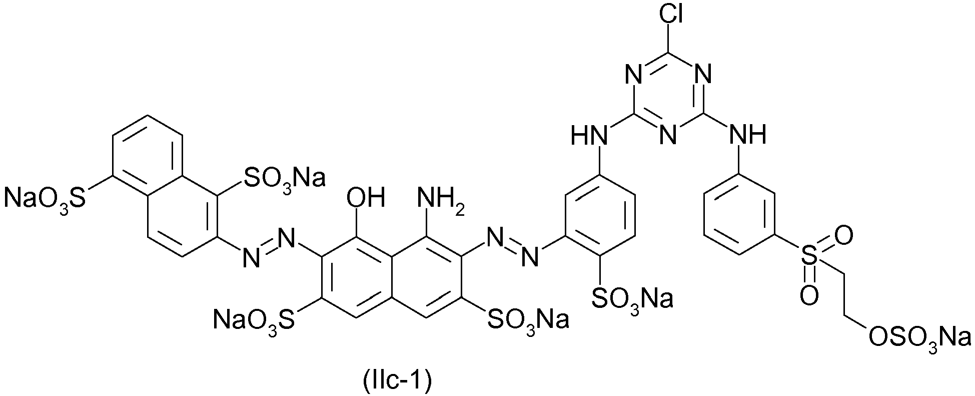

| Example | Component (II) | Component (Ia") | Component (Ia") | Ratio (II) : (Ia") : (Ia") |
|---|---|---|---|---|
| 312 | (IIc-1) | R³⁴= Hydrogen | R³⁴= Hydrogen | 70 : 5 : 25 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 4-SO₂X= 4-SO₂(ß-sulfatoethyl) | |
| 313 | (IIc-1) | R³⁴= Hydrogen | R³⁴= Hydrogen | 72 : 6 : 22 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= 2-SO₃M | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 314 | (IIc-1) | R³⁴= Hydrogen | R³⁴= Hydrogen | 70 : 5 : 25 |
| | | R³⁵= Hydrogen | R³⁵= 2-SO₃M | |
| | | A = phenyl | A = phenyl | |
| | | 4-SO₂X= 4-SO₂(-sulfatoethyl) | 4-SO₂X= 4-SO₂(-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = naphthyl | |
| | | 4-SO₂X= 4-SO₂(ß-sulfatoethyl) | 5-SO₂X= 5-SO₂(ß-sulfatoethyl) | |
| 315 | (IIc-1) | R³⁴= Hydrogen | | 75 : 25 : -- |
| | | R³⁵= Hydrogen | | |
| | | A = phenyl | | |
| | | 4-SO₂X= 4-SO₂(ß-sulfatoethyl) | | |
| | | | | |
| | | R³⁹= Hydrogen | | |
| | | R⁴⁰= Hydrogen | | |
| | | C = phenyl | | |
| | | 4-SO₂X= 4-SO₂(-sulfatoethyl) | | |
| 316 | (IIc-1) | | R³⁴= Hydrogen | 70 : -- : 30 |
| | | | R³⁵= 2-SO₃M | |
| | | | A = phenyl | |
| | | | 4-SO₂X= 4-SO₂(ß-sulfatoethyl) | |
| | | | | |
| | | | R³⁹= Hydrogen | |
| | | | R⁴⁰= Hydrogen | |
| | | | C = phenyl | |
| | | | 4-SO₂X= 4-SO₂(ß-sulfatoethyl) | |
| 317 | (IIc-1) | R³⁴= Hydrogen | | 75 : 25 : -- |
| | | R³⁵= Hydrogen | | |
| | | A = phenyl | | |
| | | 3-SO₂X= 3-SO₂(ß-sulfatoethyl) | | |
| | | | | |
| | | R³⁹= 2-SO₃M | | |
| | | R⁴⁰= Hydrogen | | |
| | | C = phenyl | | |
| | | 4-SO₂X= 4-SO₂(ß-sulfatoethyl) | | |
| 318 | (IIc-1) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | R³⁹= Hydrogen | R³⁹= Hydrogen | |
| | | R⁴⁰= Hydrogen | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 319 | (IIc-1) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(-sulfatoethyl) | 3-SO₂X= 3-SO₂(ß-sulfatoethyl) | |
| 320 | (IIc-1) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 3-SO₃M | |
| | | C = phenyl | C = phenyl | |
| | | 4-SO₂X= 4-SO₂(ß-sulfatoethyl) | 5-SO₂X= 5-SO₂(ß-sulfatoethyl) | |
| 321 | (IIc-1) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 5-methyl | |
| | | C = phenyl | C = phenyl | |
| | | 4-SO₂X= 4-SO₂(ß-sulfatoethyl) | 4-SO₂X= 4-SO₂(ß-sulfatoethyl) | |
| 322 | (IIc-1) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 2-methoxy | |
| | | C = phenyl | C = phenyl | |
| | | 4-SO₂X= 4-SO₂(ß-sulfatoethyl) | 4-SO₂X= 4-SO₂(ß-sulfatoethyl) | |
| 323 | (IIc-1) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= Hydrogen | |
| | | R⁴⁰= Hydrogen | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 324 | (IIc-1) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 3-SO₂X= 3-SO₂(ß-sulfatoethyl) | |
| 325 | (IIc-1) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= 2-methoxy | |
| | | R⁴⁰= Hydrogen | R⁴⁰= Hydrogen | |
| | | C = phenyl | C = phenyl | |
| | | 4-SO₂X= 4-SO₂(-sulfatoethyl) | 5-SO₂X= 5-SO₂(ß-sulfatoethyl) | |

All examples of the following table are prepared as formulations as explained above using dyes of formula (IIb-1) and (Ia").

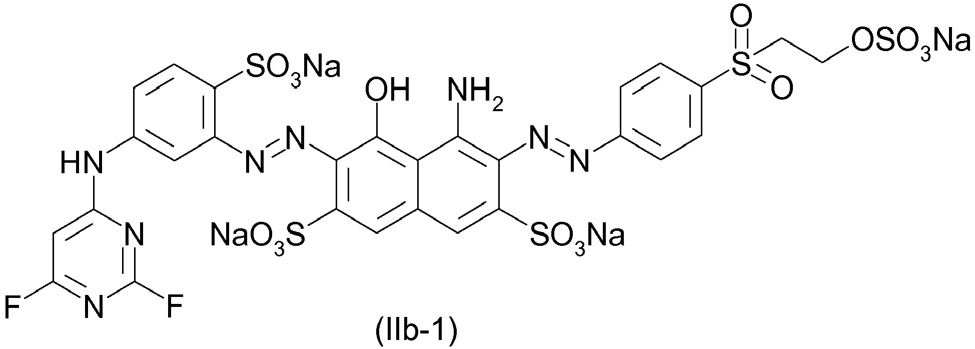

| Example | Component (II) | Component (Ia") | Component (Ia") | Ratio (II) : (Ia") : (Ia") |
|---|---|---|---|---|
| 326 | (IIb-1) | R³⁴= Hydrogen | R³⁴= Hydrogen | 60 : 10 : 30 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 4-SO₂X= 4-SO₂(ß-sulfatoethyl) | |
| 327 | (IIb-1) | R³⁴= Hydrogen | R³⁴= Hydrogen | 62 : 8 : 30 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= 2-SO₃M | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 328 | (IIb-1) | R³⁴= Hydrogen | R³⁴= Hydrogen | 60 : 8 : 32 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = naphthyl | |
| | | 4-SO₂X= 4-SO₂(ß-sulfatoethyl) | 5-SO₂X= 5-SO₂(ß-sulfatoethyl) | |
| 329 | (IIb-1) | R³⁴= Hydrogen | | 60 : 40 : -- |
| | | R³⁵= Hydrogen | | |
| | | A = phenyl | | |
| | | 4-SO₂X= 4-SO₂(ß-sulfatoethyl) | | |
| | | | | |
| | | R³⁹= Hydrogen | | |
| | | R⁴⁰= Hydrogen | | |
| | | C = phenyl | | |
| | | 4-SO₂X= 4-SO₂(ß-sulfatoethyl) | | |
| 330 | (IIb-1) | | R³⁴= Hydrogen | 65 : -- : 35 |
| | | | R³⁵= 2-SO₃M | |
| | | | A = phenyl | |
| | | | 4-SO₂X= 4-SO₂(ß-sulfatoethyl) | |
| | | | | |
| | | | R³⁹= Hydrogen | |
| | | | R⁴⁰= Hydrogen | |
| | | | C = phenyl | |
| | | | 4-SO₂X= 4-SO₂(ß-sulfatoethyl) | |
| 331 | (IIb-1) | R³⁴= Hydrogen | | 62 : 38 : -- |
| | | R³⁵ = Hydrogen | | |
| | | A = phenyl | | |
| | | 3-SO₂X= 3-SO₂(ß-sulfatoethyl) | | |
| | | | | |
| | | R³⁹= Hydrogen | | |
| | | R⁴⁰= Hydrogen | | |
| | | C = phenyl | | |
| | | 4-SO₂X= 4-SO₂(ß-sulfatoethyl) | | |
| 332 | (IIb-1) | R³⁴= Hydrogen | R³⁴= Hydrogen | 48 : 34 : 18 |
| | | R³⁵ = Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | R³⁹= Hydrogen | R³⁹= Hydrogen | |
| | | R⁴⁰= Hydrogen | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 333 | (IIb-1) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 3-SO₂X= 3-SO₂(ß-sulfatoethyl) | |
| 334 | (IIb-1) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 3-SO₃M | |
| | | C = phenyl | C = phenyl | |
| | | 4-SO₂X= 4-SO₂(ß-sulfatoethyl) | 5-SO₂X= 5-SO₂(ß-sulfatoethyl) | |
| 335 | (IIb-1) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 5-methyl | |
| | | C = phenyl | C = phenyl | |
| | | 4-SO₂X= 4-SO₂(ß-sulfatoethyl) | 4-SO₂X= 4-SO₂(ß-sulfatoethyl) | |
| 336 | (IIb-1) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹ = 2-methoxy | |
| | | R⁴⁰= Hydrogen | R⁴⁰= 2-methoxy | |
| | | C = phenyl | C = phenyl | |
| | | 4-SO₂X= 4-SO₂(ß-sulfatoethyl) | 4-SO₂X= 4-SO₂(ß-sulfatoethyl) | |
| 337 | (IIb-1) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= Hydrogen | |
| | | R⁴⁰= Hydrogen | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 338 | (IIb-1) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 3-SO₂X= 3-SO₂(ß-sulfatoethyl) | |
| 339 | (IIb-1) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= 2-methoxy | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 5-SO₂X= 5-SO₂(ß-sulfatoethyl) | |

All examples of the following table are prepared as formulations as explained above using dyes of formula (IIb-2) and (Ia").

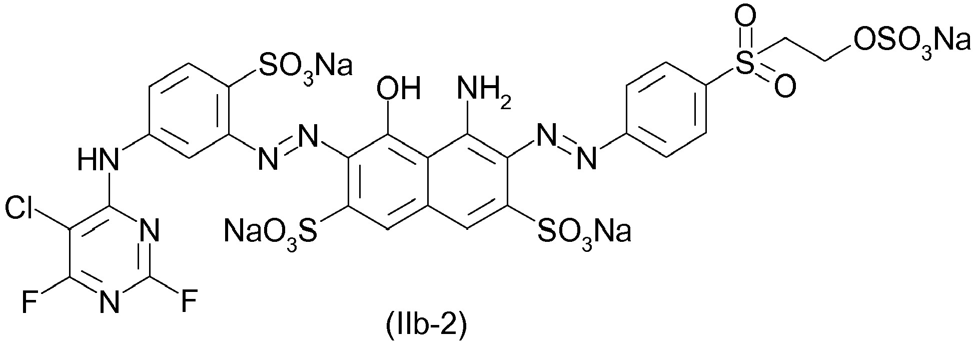

| Example | Component (II) | Component (Ia") | Component (Ia") | Ratio (II) : (Ia") : (Ia") |
|---|---|---|---|---|
| 340 | (IIb-2) | R³⁴= Hydrogen | R³⁴= Hydrogen | 60 : 10 : 30 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 4-SO₂X= 4-SO₂(ß-sulfatoethyl) | |
| 341 | (IIb-2) | R³⁴= Hydrogen | R³⁴= Hydrogen | 62 : 8 : 30 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= 2-SO₃M | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 342 | (IIb-2) | R³⁴= Hydrogen | R³⁴= Hydrogen | 60 : 8 : 32 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = naphthyl | |
| | | 4-SO₂X= 4-SO₂(ß-sulfatoethyl) | 5-SO₂X= 5-SO₂(ß-sulfatoethyl) | |
| 343 | (IIb-2) | R³⁴= Hydrogen | | 60 : 40 : -- |
| | | R³⁵= Hydrogen | | |
| | | A = phenyl | | |
| | | 4-SO₂X= 4-SO₂(ß-sulfatoethyl) | | |
| | | | | |
| | | R³⁹= Hydrogen | | |
| | | R⁴⁰= Hydrogen | | |
| | | C = phenyl | | |
| | | 4-SO₂X= 4-SO₂(ß-sulfatoethyl) | | |
| 344 | (IIb-2) | | R³⁴= Hydrogen | 65 : -- : 35 |
| | | | R³⁵= 2-SO₃M | |
| | | | A = phenyl | |
| | | | 4-SO₂X= 4-SO₂(ß-sulfatoethyl) | |
| | | | | |
| | | | R³⁹= Hydrogen | |
| | | | R⁴⁰= Hydrogen | |
| | | | C = phenyl | |
| | | | 4-SO₂X= 4-SO₂(ß-sulfatoethyl) | |
| 345 | (IIb-2) | R³⁴= Hydrogen | | 62 : 38 : -- |
| | | R³⁵= Hydrogen | | |
| | | A = phenyl | | |
| | | 3-SO₂X= 3-SO₂(ß-sulfatoethyl) | | |
| | | | | |
| | | R³⁹= Hydrogen | | |
| | | R⁴⁰= 2-SO₃M | | |
| | | C = phenyl | | |
| | | 4-SO₂X= 4-SO₂(ß-sulfatoethyl) | | |
| 346 | (IIb-2) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | R³⁹= Hydrogen | R³⁹= Hydrogen | |
| | | R⁴⁰= Hydrogen | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 347 | (IIb-2) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 3-SO₂X= 3-SO₂(ß-sulfatoethyl) | |
| 348 | (IIb-2) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 3-SO₃M | |
| | | C = phenyl | C = phenyl | |
| | | 4-SO₂X= 4-SO₂(ß-sulfatoethyl) | 5-SO₂X= 5-SO₂(ß-sulfatoethyl) | |
| 349 | (IIb-2) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 5-methyl | |
| | | C = phenyl | C = phenyl | |
| | | 4-SO₂X= 4-SO₂(ß-sulfatoethyl) | 4-SO₂X= 4-SO₂(ß-sulfatoethyl) | |
| 350 | (IIb-2) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹ = 2-methoxy | |
| | | R⁴⁰= Hydrogen | R⁴⁰= 2-methoxy | |
| | | C = phenyl | C = phenyl | |
| | | 4-SO₂X= 4-SO₂(ß-sulfatoethyl) | 4-SO₂X= 4-SO₂(ß-sulfatoethyl) | |
| 351 | (IIb-2) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= Hydrogen | |
| | | R⁴⁰= Hydrogen | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 352 | (IIb-2) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 3-SO₂X= 3-SO₂(ß-sulfatoethyl) | |
| 353 | (IIb-2) | R³⁴= Hydrogen | R³⁴= Hydrogen | 48 : 34 : 18 |
| | | R³⁵= Hydrogen | R³⁵ = Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= 2-methoxy | |
| | | R⁴⁰= Hydrogen | R⁴⁰ = Hydrogen | |
| | | C = phenyl | C = phenyl | |
| | | 4-SO₂X= 4-SO₂(ß-sulfatoethyl) | 5-SO₂X= 5-SO₂(ß-sulfatoethyl) | |

All examples of the following table are prepared as formulations as explained above using dyes of formula (IIb-3) and (Ia").

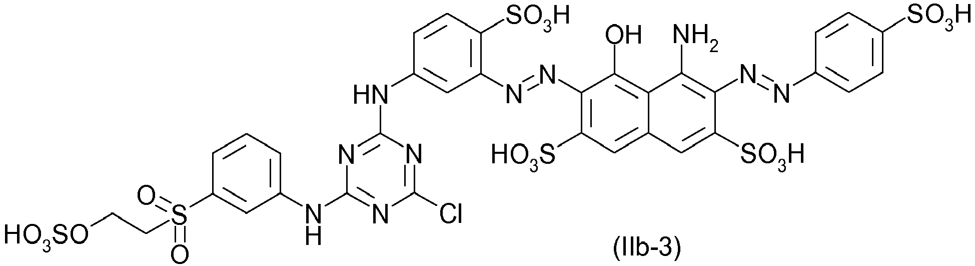

| Example | Component (II) | Component (Ia") | Component (Ia") | Ratio (II) : (Ia") : (Ia") |
|---|---|---|---|---|
| 354 | (IIb-3) | R³⁴= Hydrogen | R³⁴= Hydrogen | 60 : 10 : 30 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 4-SO₂X= 4-SO₂(ß-sulfatoethyl) | |
| 355 | (IIb-3) | R³⁴= Hydrogen | R³⁴= Hydrogen | 62 : 8 : 30 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= 2-SO₃M | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 356 | (IIb-3) | R³⁴= Hydrogen | R³⁴= Hydrogen | 60 : 8 : 32 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = naphthyl | |
| | | 4-SO₂X= 4-SO₂(ß-sulfatoethyl) | 5-SO₂X= 5-SO₂(ß-sulfatoethyl) | |
| 357 | (IIb-3) | R³⁴= Hydrogen | | 60 : 40 : -- |
| | | R³⁵= Hydrogen | | |
| | | A = phenyl | | |
| | | 4-SO₂X= 4-SO₂(ß-sulfatoethyl) | | |
| | | | | |
| | | R³⁹= Hydrogen | | |
| | | R⁴⁰= Hydrogen | | |
| | | C = phenyl | | |
| | | 4-SO₂X= 4-SO₂(ß-sulfatoethyl) | | |
| 358 | (IIb-3) | | R³⁴= Hydrogen | 65 : -- : 35 |
| | | | R³⁵= 2-SO₃M | |
| | | | A = phenyl | |
| | | | 4-SO₂X= 4-SO₂(ß-sulfatoethyl) | |
| | | | | |
| | | | R³⁹= Hydrogen | |
| | | | R⁴⁰= Hydrogen | |
| | | | C = phenyl | |
| | | | 4-SO₂X= 4-SO₂(ß-sulfatoethyl) | |
| 359 | (IIb-3) | R³⁴= 2-Methoxy | | 62 : 38 : -- |
| | | R³⁵= 5-Methyl | | |
| | | A = phenyl | | |
| | | 4-SO₂X= 4-SO₂(ß-sulfatoethyl) | | |
| | | | | |
| | | R³⁹= 2-Methoxy | | |
| | | R⁴⁰= 5-Methyl | | |
| | | C = phenyl | | |
| | | 4-SO₂X= 4-SO₂(ß-sulfatoethyl) | | |
| 360 | (IIb-3) | R³⁴= Hydrogen | R³⁴= Hydrogen | 48 : 34 : 18 |
| | | R³⁵= Hydrogen | R³⁵ = 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | R³⁹= Hydrogen | R³⁹= Hydrogen | |
| | | R⁴⁰= Hydrogen | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 361 | (IIb-3) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 3-SO₂X= 3-SO₂(ß-sulfatoethyl) | |
| 362 | (IIb-3) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 3-SO₃M | |
| | | C = phenyl | C = phenyl | |
| | | 4-SO₂X= 4-SO₂(ß-sulfatoethyl) | 5-SO₂X= 5-SO₂(ß-sulfatoethyl) | |
| 363 | (IIb-3) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 5-methyl | |
| | | C = phenyl | C = phenyl | |
| | | 4-SO₂X= 4-SO₂(ß-sulfatoethyl) | 4-SO₂X= 4-SO₂(ß-sulfatoethyl) | |
| 364 | (IIb-3) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹ = 2-methoxy | |
| | | R⁴⁰= Hydrogen | R⁴⁰= 2-methoxy | |
| | | C = phenyl | C = phenyl | |
| | | 4-SO₂X= 4-SO₂(ß-sulfatoethyl) | 4-SO₂X= 4-SO₂(ß-sulfatoethyl) | |
| 365 | (IIb-3) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= Hydrogen | |
| | | R⁴⁰= Hydrogen | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 366 | (IIb-3) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 3-SO₂X= 3-SO₂(ß-sulfatoethyl) | |
| 367 | (IIb-3) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹ = Hydrogen | R³⁹= 2-methoxy | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 5-SO₂X= 5-SO₂(ß-sulfatoethyl) | |

All examples of the following table are prepared as formulations as explained above using dyes of formula (IIf-1) and (Ia").

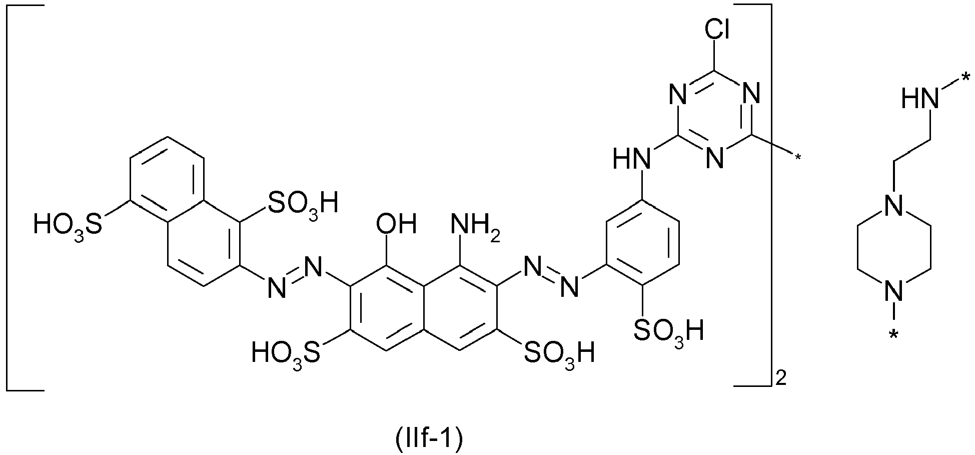

| Example | Component (II) | Component (Ia") | Component (Ia") | Ratio (II) : (Ia") : (Ia") |
|---|---|---|---|---|
| 368 | (IIf-1) | R³⁴= Hydrogen | R³⁴= Hydrogen | 60 : 10 : 30 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 4-SO₂X= 4-SO₂(ß-sulfatoethyl) | |
| 369 | (IIf-1) | R³⁴= Hydrogen | R³⁴= Hydrogen | 62 : 8 : 30 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= 2-SO₃M | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 370 | (IIf-1) | R³⁴= Hydrogen | R³⁴= Hydrogen | 60 : 8 : 32 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = naphthyl | |
| | | 4-SO₂X= 4-SO₂(ß-sulfatoethyl) | 5-SO₂X= 5-SO₂(ß-sulfatoethyl) | |
| 371 | (IIf-1) | R³⁴= Hydrogen | | 60 : 40 : -- |
| | | R³⁵= Hydrogen | | |
| | | A = phenyl | | |
| | | 4-SO₂X= 4-SO₂(ß-sulfatoethyl) | | |
| | | | | |
| | | R³⁹= Hydrogen | | |
| | | R⁴⁰= Hydrogen | | |
| | | C = phenyl | | |
| | | 4-SO₂X= 4-SO₂(ß-sulfatoethyl) | | |
| 372 | (IIf-1) | | R³⁴= Hydrogen | 65 : -- : 35 |
| | | | R³⁵ = 2-SO₃M | |
| | | | A = phenyl | |
| | | | 4-SO₂X= 4-SO₂(ß-sulfatoethyl) | |
| | | | | |
| | | | R³⁹= Hydrogen | |
| | | | R⁴⁰= Hydrogen | |
| | | | C = phenyl | |
| | | | 4-SO₂X= 4-SO₂(ß-sulfatoethyl) | |
| 373 | (IIf-1) | R³⁴= Hydrogen | | 62 : 38 : -- |
| | | R³⁵= Hydrogen | | |
| | | A = phenyl | | |
| | | 4-SO₂X= 4-SO₂(ß-sulfatoethyl) | | |
| | | | | |
| | | R³⁹ = 2-Methoxy | | |
| | | R⁴⁰= 5-Methoxy | | |
| | | C = phenyl | | |
| | | 4-SO₂X= 4-SO₂(ß-sulfatoethyl) | | |
| 374 | (IIf-1) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(S-sulfatoethyl) | |
| | | R³⁹= Hydrogen | R³⁹= Hydrogen | |
| | | R⁴⁰= Hydrogen | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 375 | (IIf-1) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 3-SO₂X= 3-SO₂(ß-sulfatoethyl) | |
| 376 | (IIf-1) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 3-SO₃M | |
| | | C = phenyl | C = phenyl | |
| | | 4-SO₂X= 4-SO₂(ß-sulfatoethyl) | 5-SO₂X= 5-SO₂(ß-sulfatoethyl) | |
| 377 | (IIf-1) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 5-methyl | |
| | | C = phenyl | C = phenyl | |
| | | 4-SO₂X= 4-SO₂(ß-sulfatoethyl) | 4-SO₂X= 4-SO₂(ß-sulfatoethyl) | |
| 378 | (IIf-1) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹ = 2-methoxy | |
| | | R⁴⁰= Hydrogen | R⁴⁰= 2-methoxy | |
| | | C = phenyl | C = phenyl | |
| | | 4-SO₂X= 4-SO₂(ß-sulfatoethyl) | 4-SO₂X= 4-SO₂(ß-sulfatoethyl) | |
| 379 | (IIf-1) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= Hydrogen | |
| | | R⁴⁰= Hydrogen | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 380 | (IIf-1) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 3-SO₂X= 3-SO₂(ß-sulfatoethyl) | |
| 381 | (IIf-1) | R³⁴= Hydrogen | R³⁴= Hydrogen | 48 : 34 : 18 |
| | | R³⁵ = Hydrogen | R³⁵ = Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= 2-methoxy | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 5-SO₂X= 5-SO₂(ß-sulfatoethyl) | |

All examples of the following table are prepared as formulations as explained above using dyes of formula (IId-1) and (Ia").

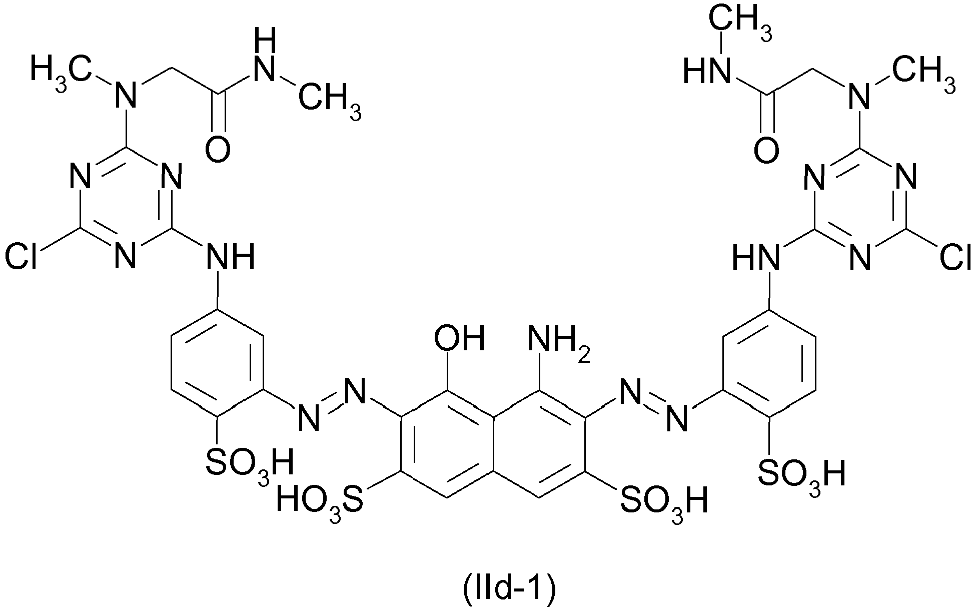

| Example | Component (II) | Component (Ia") | Component (Ia") | Ratio (II) : (Ia") : (Ia") |
|---|---|---|---|---|
| 382 | (IId-1) | R³⁴= Hydrogen | R³⁴= Hydrogen | 60 : 10 : 30 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 4-SO₂X= 4-SO₂(ß-sulfatoethyl) | |
| 383 | (IId-1) | R³⁴= Hydrogen | R³⁴= Hydrogen | 62 : 8 : 30 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= 2-SO₃M | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 384 | (IId-1) | R³⁴= Hydrogen | R³⁴= Hydrogen | 60 : 8 : 32 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = naphthyl | |
| | | 4-SO₂X= 4-SO₂(ß-sulfatoethyl) | 5-SO₂X= 5-SO₂(ß-sulfatoethyl) | |
| 385 | (IId-1) | R³⁴= Hydrogen | | 60 : 40 : -- |
| | | R³⁵= Hydrogen | | |
| | | A = phenyl | | |
| | | 4-SO₂X= 4-SO₂(ß-sulfatoethyl) | | |
| | | | | |
| | | R³⁹= Hydrogen | | |
| | | R⁴⁰= Hydrogen | | |
| | | C = phenyl | | |
| | | 4-SO₂X= 4-SO₂(ß-sulfatoethyl) | | |
| 386 | (IId-1) | | R³⁴= Hydrogen | 65 : -- : 35 |
| | | | R³⁵= 2-SO₃M | |
| | | | A = phenyl | |
| | | | 4-SO₂X= 4-SO₂(ß-sulfatoethyl) | |
| | | | | |
| | | | R³⁹= Hydrogen | |
| | | | R⁴⁰= Hydrogen | |
| | | | C = phenyl | |
| | | | 4-SO₂X= 4-SO₂(ß-sulfatoethyl) | |
| 387 | (IId-1) | R³⁴= 2-Methoxy | | 62 : 38 : -- |
| | | R³⁵= Hydrogen | | |
| | | A = phenyl | | |
| | | 5-SO₂X= 4-SO₂(ß-sulfatoethyl) | | |
| | | | | |
| | | R³⁹= 2-Methoxy | | |
| | | R⁴⁰= Hydrogen | | |
| | | C = phenyl | | |
| | | 5-SO₂X= 4-SO₂(ß-sulfatoethyl) | | |
| 388 | (IId-1) | R³⁴= Hydrogen | R³⁴= Hydrogen | 48 : 34 : 18 |
| | | R³⁵ = Hydrogen | R³⁵ = 2-SO₃M | |
| | | A = phenyl | A = phenyl | |
| | | 4-SO₂X= 4-SO₂(ß-sulfatoethyl) | 4-SO₂X=4-SO₂(ß-sulfatoethyl) | |
| | | | | |
| | | R³⁹= Hydrogen | R³⁹= Hydrogen | |
| | | R⁴⁰= Hydrogen | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 389 | (IId-1) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 3-SO₂X= 3-SO₂(ß-sulfatoethyl) | |
| 390 | (IId-1) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 3-SO₃M | |
| | | C = phenyl | C = phenyl | |
| | | 4-SO₂X= 4-SO₂(ß-sulfatoethyl) | 5-SO₂X= 5-SO₂(ß-sulfatoethyl) | |
| 391 | (IId-1) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 5-methyl | |
| | | C = phenyl | C = phenyl | |
| | | 4-SO₂X= 4-SO₂(ß-sulfatoethyl) | 4-SO₂X= 4-SO₂(ß-sulfatoethyl) | |
| 392 | (IId-1) | R³⁴= Hydrogen | R³⁴= Hydrogen | 48 : 34 : 18 |
| | | R³⁵= Hydrogen | R³⁵= 2-SO₃M | |
| | | A = phenyl | A = phenyl | |
| | | 4-SO₂X= 4-SO₂(ß-sulfatoethyl) | 4-SO₂X= 4-SO₂(ß-sulfatoethyl) | |
| | | | | |
| | | R³⁹= Hydrogen | R³⁹= 2-methoxy | |
| | | R⁴⁰= Hydrogen | R⁴⁰= 2-methoxy | |
| | | C = phenyl | C = phenyl | |
| | | 4-SO₂X= 4-SO₂(ß-sulfatoethyl) | 4-SO₂X= 4-SO₂(ß-sulfatoethyl) | |
| 393 | (IId-1) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= Hydrogen | |
| | | R⁴⁰= Hydrogen | R⁴⁰= 2-SO₃M | |
| | | C = phenyl | C = phenyl | |
| | | 4-SO₂X= 4-SO₂(ß-sulfatoethyl) | 4-SO₂X= 4-SO₂(ß-sulfatoethyl) | |
| 394 | (IId-1) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= Hydrogen | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 3-SO₂X= 3-SO₂(ß-sulfatoethyl) | |
| 395 | (IId-1) | R³⁴= Hydrogen | R³⁴= Hydrogen | 48 : 34 : 18 |
| | | R³⁵= Hydrogen | R³⁵= Hydrogen | |
| | | A = phenyl | A = phenyl | |
| | | 4-SO₂X= 4-SO₂(ß-sulfatoethyl) | 3-SO₂X= 3-SO₂(ß-sulfatoethyl) | |
| | | | | |
| | | R³⁹= Hydrogen | R³⁹= 2-methoxy | |
| | | R⁴⁰= Hydrogen | R⁴⁰= Hydrogen | |
| | | C = phenyl | C = phenyl | |
| | | 4-SO₂X= 4-SO₂(ß-sulfatoethyl) | 5-SO₂X= 5-SO₂(ß-sulfatoethyl) | |

### USE EXAMPLE 1

3 parts of a dye mixture obtained according to example 1-3 are dissolved in 2000 parts of water and 1 part of levelling assistant (based on condensation product of a higher aliphatic amine and ethylene oxide) is added. The pH is then adjusted to 3.8∼4.2 using acetic acid (60%). The dyebath is entered with 100 parts of a woven wool fabric. The temperature is raised to 40°C over the course of 30 minutes, maintained at this temperature for 15 minutes and then increased to 98°C over the course of 58 minutes and dyeing is carried out at this temperature for 90 minutes. This is followed by cooling to 90°C and removal of the dyed material. The wool fabric is washed with hot and cold water, alkaline-treated and then spun and dried. The grey to dark black dyeings obtained show superior fastness properties over commercially available products such as reactive black 5.

### USE EXAMPLE 2

2 parts of a dye mixture obtained according to example 1-3 and 60 parts of sodium chloride are dissolved in 1000 parts of water, and 12 parts of sodium carbonate and 0.5 part of a wetting agent are added. This dyebath is entered with 100 parts of a cotton fabric. The temperature of the dye bath is raised to 30°C at a gradient of 0.5°C/minute and held at this temperature for 30 minutes, and then increased to 60°C over 30 minutes, this temperature being maintained for a further 60 minutes. Thereafter the dyed goods are initially rinsed with tapwater for 5 minutes. The dyed goods are neutralized at 50°C using 60% strength acetic acid for 30∼40 minutes. The goods are rinsed with tapwater at boil for 30∼40 minutes followed by a final rinse at 40∼50°C for 20 minutes and dried. The strong dark brown to black dyeings obtained have good overall fastness properties.

### USE EXAMPLE 3

1 part of a dye mixture obtained according to example 1-3 is dissolved in 2000 parts of water and 1 part of levelling assistant (based on condensation product of a higher aliphatic amine and ethylene oxide) and 6 parts of sodium acetate are added. The pH is then adjusted to 4.5 using acetic acid (80%). The dyebath is heated to 50°C for 10 minutes and then entered with 100 parts of a woven polyamide fabric. The temperature is raised to 110°C over the course of 50 minutes and then dyeing is carried out at this temperature for 60 minutes. This is followed by cooling to 60°C and removal of the dyed material. The polyamide fabric is washed with hot and cold water, soaped and then spun and dried. The strong dark brown to black dyeings obtained have good overall fastness properties and good levelness in the fibre.

### USE EXAMPLE 4

A textile fabric consisting of mercerized cotton is padded with liquor containing 35 g/I of calcium sodium carbonate, 100 g/I of urea and 150 g/I of a low-viscosity sodium alginate solution (6%), and then dried. The liquor pickup is 70%. The textile thus pretreated is printed with an aqueous ink containing 2% of a dye mixture obtained according to example 1-3, 20% of sulfolane, 0.01% of Mergal K9N and 77.99% of water using a drop-on-demand (bubblejet) ink-jet printing head. The print is fully dried. It is fixed by means of saturated steam at 102°C for 8 minutes. The print is then rinsed warm, subject to a fastness wash with hot water at 95°C, rinsed warm and then dried. The obtained print has good overall fastness properties.

## Claims

1. Dye mixture(s) comprising at least one dye of general formula (I) 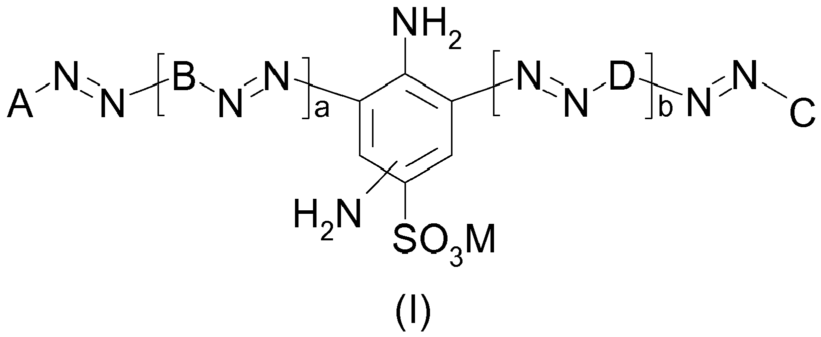 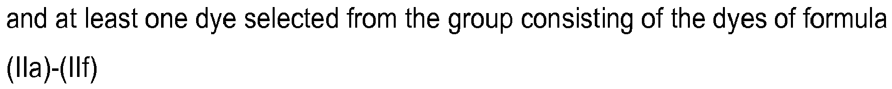 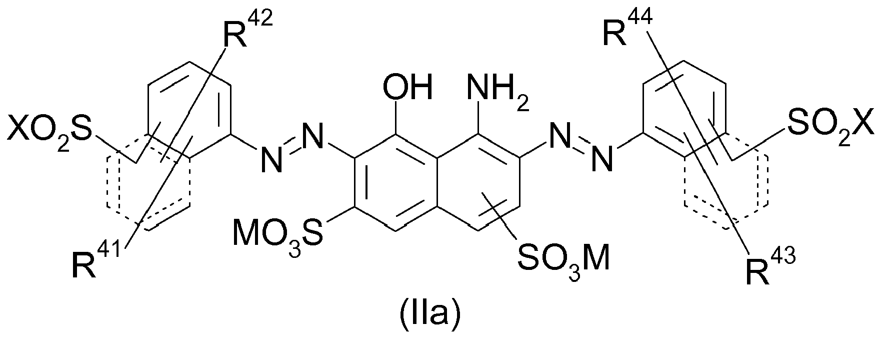 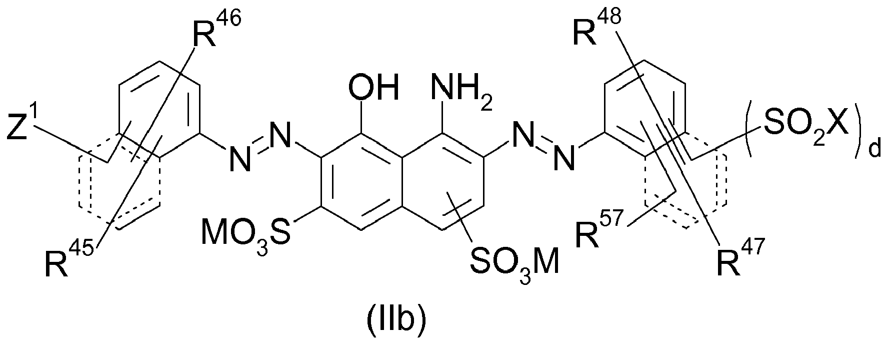 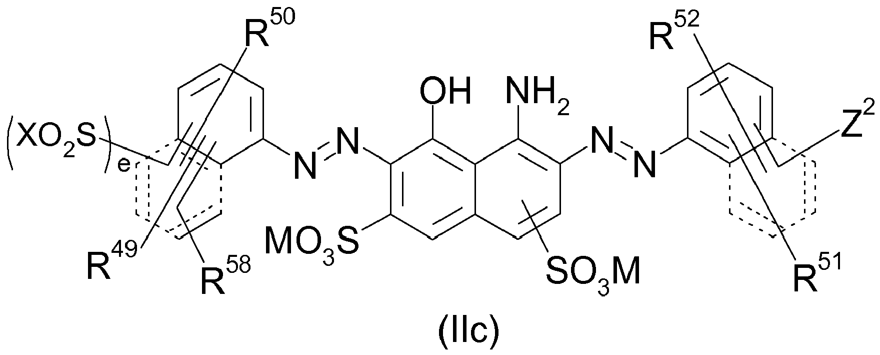 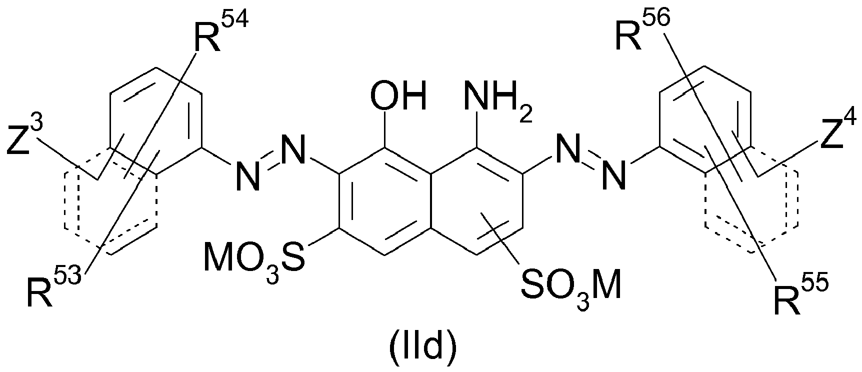 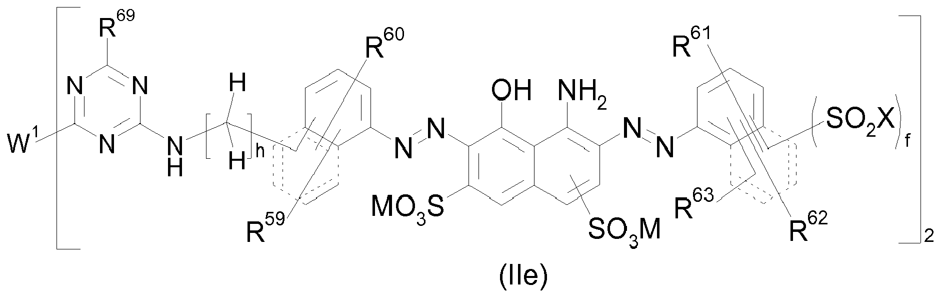 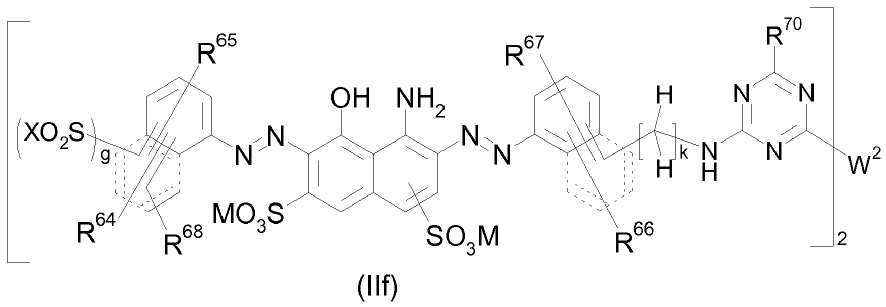 wherein
each of A and C, independent of each other is a radical of general formula (1 a) 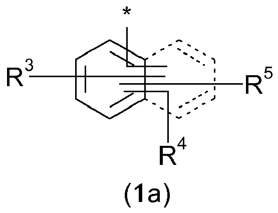 wherein
each of R³ to R⁵, independent of each other is hydrogen, halogen, alkyl, N-acylamino, alkoxy, thioalkoxy, hydroxy, cyano, nitro, alkoxycarbonyl, alkoxythiocarbonyl, acyl, thioacyl, aryloyl, trifluoromethyl, acyloxy, aryloyloxy, cycloalkyl, aryl, heteroaryl, heterocycloalkyl, N-cinnamoylamino, SO₃M or COOM, or
is alkyl substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy and aryloyloxy, or
is alkyl interrupted by one or more heteroatoms and substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy and aryloyloxy, or
is SO₂-X, where X is vinyl or a radical -CH₂CH₂-Y and Y is a group removable under alkaline conditions, or
is a group of general formula (2a) 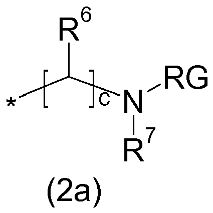 wherein
R⁶ is hydrogen, halogen, alkyl, N-acylamino, alkoxy, thioalkoxy, hydroxy, cyano, alkoxycarbonyl, alkoxythiocarbonyl, acyl, thioacyl, aryloyl, trifluoromethyl, acyloxy, aryloyloxy, cycloalkyl, aryl, heteroaryl, heterocycloalkyl, SO₃M or COOM, or
is alkyl substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy and aryloyloxy, or
is alkyl interrupted by one or more heteroatoms such as oxygen or sulphur and substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy and aryloyloxy,
R⁷ is hydrogen, alkyl, cycloalkyl or aryl, or
is alkyl substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy and aryloyloxy, or
is alkyl interrupted by one or more heteroatoms and substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy and aryloyloxy,
c is an integer of 0 to 6,
RG is a reactive anchor of general formula (3a), (3b) or (3c), 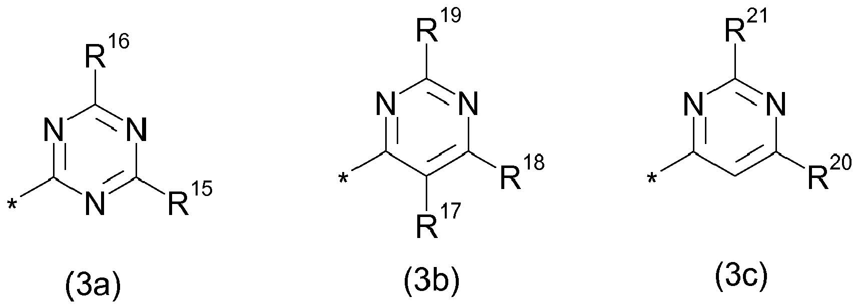 wherein
each of R¹⁶ to R²¹, independent of each other is halogen, R¹⁶ can also be a rest of formula (4a) 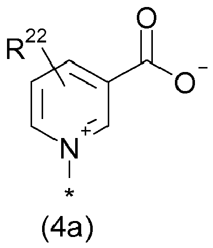 wherein
R²² is hydrogen, halogen, alkyl, alkoxy, thioalkoxy, hydroxy, cycloalkyl, aryl, heteroaryl, heterocycloalkyl, SO₃M or COOM, or
is alkyl substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy and aryloyloxy,
R¹⁵ is one of the groups selected from general formula (5a) or (5b), 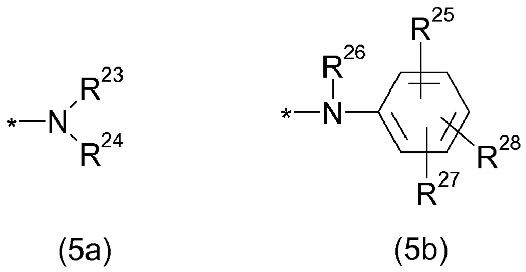 wherein
each of R²³, R²⁴ and R²⁶, independent of each other is hydrogen, alkyl, cycloalkyl or aryl, or
is alkyl substituted by one or more substituents selected from the group consisting of hydroxy, aryl, cycloalkyl, alkoxy, thioalkoxy, N-acylamino, N-alkylaminocarbonyl, N,N-dialkylaminocarbonyl, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy and aryloyloxy, or is alkyl interrupted by one or more heteroatoms and substituted by one or more substituents selected from the group consisting of hydroxy, aryl, cycloalkyl, alkoxy, thioalkoxy, N-acylamino, N-alkylaminocarbonyl, N,N-dialkylaminocarbonyl, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy and aryloyloxy,
each of R²⁵, R²⁷ and R²⁸, independent of each other is hydrogen, halogen, alkyl, N-acylamino, N-alkylaminocarbonyl, N,N-dialkylaminocarbonyl, alkoxy, thioalkoxy, hydroxy, cyano, alkoxycarbonyl, alkoxythiocarbonyl, acyl, thioacyl, aryloyl, sulfamoyl, trifluoromethyl, acyloxy, aryloyloxy, cycloalkyl, aryl, heteroaryl, heterocycloalkyl, SO₃M or COOM, or
is alkyl substituted by one or more substituents selected from the group consisting of hydroxy, aryl, cycloalkyl, alkoxy, thioalkoxy, N-acylamino, N-alkylaminocarbonyl, N,N-dialkylaminocarbonyl, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy and aryloyloxy, or is alkyl interrupted by one or more heteroatoms and substituted by one or more substituents selected from the group consisting of hydroxy, aryl, cycloalkyl, alkoxy, thioalkoxy, N-acylamino, N-alkylaminocarbonyl, N,N-dialkylaminocarbonyl, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy and aryloyloxy,
R²⁴ can also be -CH₂CH₂-SO₂-X, where X is vinyl or a radical -CH₂CH₂-Y where Y is a group removable under alkaline conditions, and
R²⁸ can also be -SO₂-X where X is the same as defined above,
each of B and D, independent of each other is a radical of general formula (6a) 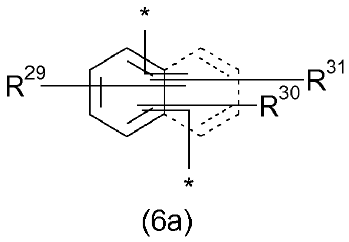 wherein
each of R²⁹ to R³¹, independent of each other is hydrogen, halogen, alkyl, N-acylamino, alkoxy, thioalkoxy, hydroxy, cyano, nitro, alkoxycarbonyl, alkoxythiocarbonyl, acyl, thioacyl, aryloyl, trifluoromethyl, acyloxy, aryloyloxy, cycloalkyl, aryl, heteroaryl, heterocycloalkyl, N-cinnamoylamino, SO₃M or COOM, or
is alkyl substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy and aryloyloxy, or
is alkyl interrupted by one or more heteroatoms and substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy and aryloyloxy, or
is SO₂-X, where X is vinyl or a radical -CH₂CH₂-Y and Y is a group removable under alkaline conditions such as OSO₃M, SSO₃M, OCOCH₃, OPO₃M or halogen, or
is a group of general formula (2a) as defined above,
each of a and b, independent of each other is an integer of 0 or 1 whereby a
+ b is not 0 and dyes of general formula (I) contain at least two reactive anchors,
M is hydrogen, lithium, sodium, potassium, ammonium or mono-, di-, tri- or tetra-(C₁-C₄)-alkylammonium, one equivalent of an alkali earth metal, or a monovalent organic cation,
each of R⁴¹ to R⁶⁸, independent of each other is hydrogen, halogen, alkyl, N-acylamino, alkoxy, thioalkoxy, hydroxy, cyano, nitro, alkoxycarbonyl, alkoxythiocarbonyl, acyl, thioacyl, aryloyl, trifluoromethyl, acyloxy, aryloyloxy, cycloalkyl, aryl, heteroaryl, heterocycloalkyl, N-cinnamoylamino, SO₃M or COOM, or
is alkyl substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy and aryloyloxy, or
is alkyl interrupted by one or more heteroatoms and substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy and aryloyloxy,
each of R⁶⁹ and R⁷⁰ independent of each other is Cl or F,
each of d, e, f and g independent of each other is an integer of 0 or 1,
each of h and k independent of each other is an integer of 0 to 6,
each of Z¹ to Z⁴, independent of each other is a group of general formula (2a), where (2a) is the same as defined above,
each of W¹ and W², independent of each other is a linking group of general formula (7a), (7b) or (7c), 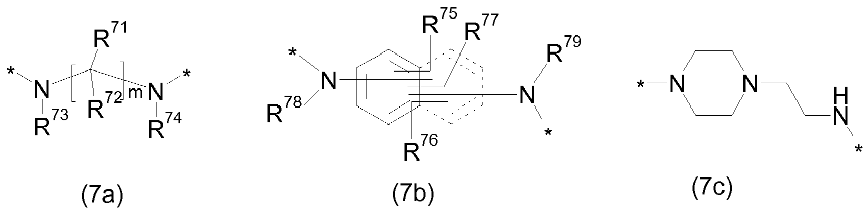 wherein
each of R⁷¹, R⁷², R⁷⁵, R¹⁶ and R⁷⁷, independent of each other is hydrogen, halogen, alkyl, N-acylamino, N,N-dialkylamino, alkoxy, thioalkoxy, hydroxy, cyano, alkoxycarbonyl, alkoxythiocarbonyl, acyl, thioacyl, aryloyl, trifluoromethyl, acyloxy, aryloyloxy, cycloalkyl, aryl, heteroaryl, heterocycloalkyl, SO₃M or COOM, or
is alkyl substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy and aryloyloxy, or
is alkyl interrupted by one or more heteroatoms and substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy and aryloyloxy, and
each of R⁷³, R⁷⁴, R⁷⁸ and R⁷⁹, independent of each other is hydrogen, alkyl, cycloalkyl or aryl, or
is alkyl substituted by one or more substituents selected from the group consisting of hydroxy, aryl, cycloalkyl, alkoxy, thioalkoxy, N-acylamino, N,N-dialkylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy and aryloyloxy, or
is alkyl interrupted by one or more heteroatoms and substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy and aryloyloxy,
R⁷¹ or R⁷² can form rings with R⁷³,
m is an integer of 1 to 6,
M and X are the same as defined above and
* means point of attachment.

2. Mixture(s) according to claim 1, comprising at least one dye of general formula (Ia) 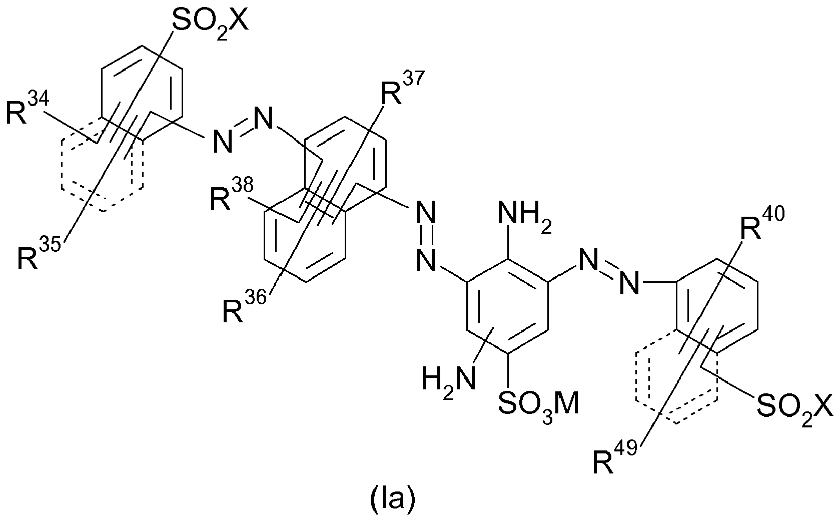 and at least one dye of general formula (IIa) or (IIb) 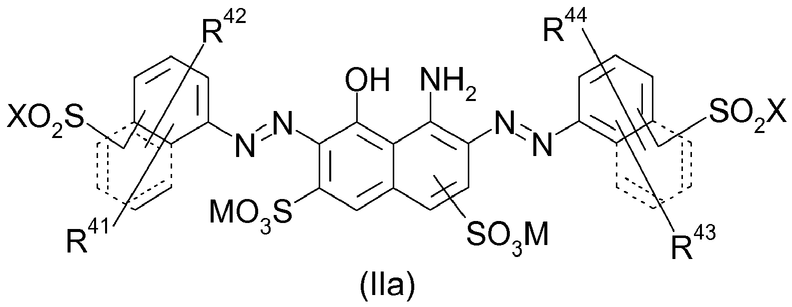 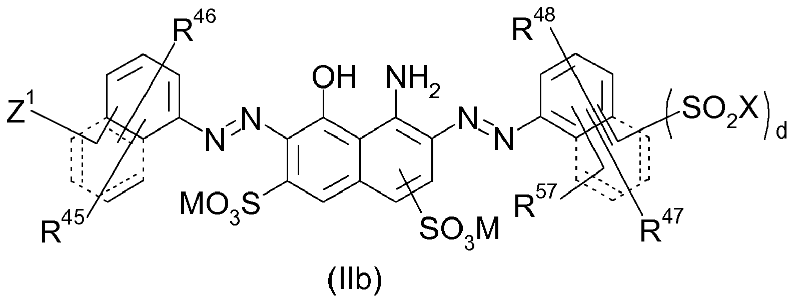 wherein
each of R³⁴ to R⁴⁰, independent of each other is hydrogen, halogen, alkyl, N-acylamino, alkoxy, hydroxy, cyano, nitro, alkoxycarbonyl, acyl, aryloyl, trifluoromethyl, acyloxy, aryloyloxy, cycloalkyl, aryl, heteroaryl, heterocycloalkyl, N-cinnamoylamino, SO₃M or COOM,
X and M are the same as in claim 1,
in formula (Ia)
each of R³⁴ to R⁴⁰, independent of each other is hydrogen, (C₁-C₄)alkyl, (C₁-C₄)alkoxy, halogen, acyl, N-acylamino or SO₃M,
X is vinyl or β-sulfatoethyl,
in formula (IIa) and (IIb)
each of R⁴¹ to R⁴⁸ and R⁵⁷, independent of each other is hydrogen, (C₁-C₄)alkyl, (C₁-C₄)alkoxy, halogen, acyl, N-acylamino or SO₃M,
Z¹ is defined as in claim 1 whereby
c is 0 or 1,
R⁶ and R⁷ is hydrogen or alkyl,
R¹⁶ to R²¹ independent of each other is halogen,
R²² is hydrogen,
each of R²³, R²⁴ and R²⁶ independent of each other is hydrogen, alkyl, or aryl, each of R²⁵, R²⁷ and R²⁸ independent of each other is hydrogen, halogen, alkyl, N-acylamino, alkoxy, hydroxy, acyl, aryloyl, trifluoromethyl, acyloxy, cycloalkyl, aryl, heteroaryl, SO₃M or COOM,
R²⁴ can also be -CH₂CH₂-SO₂-X, where X is vinyl or a radical -CH₂CH₂-Y where Y is a group removable under alkaline conditions, and
R²⁸ can also be -SO₂-X where X is the same as defined above,
X is most preferred to be vinyl or β-sulfatoethyl.

3. Dye mixture acoording to claim 1 or 2, comprising at least one dye of general formula (Ib) 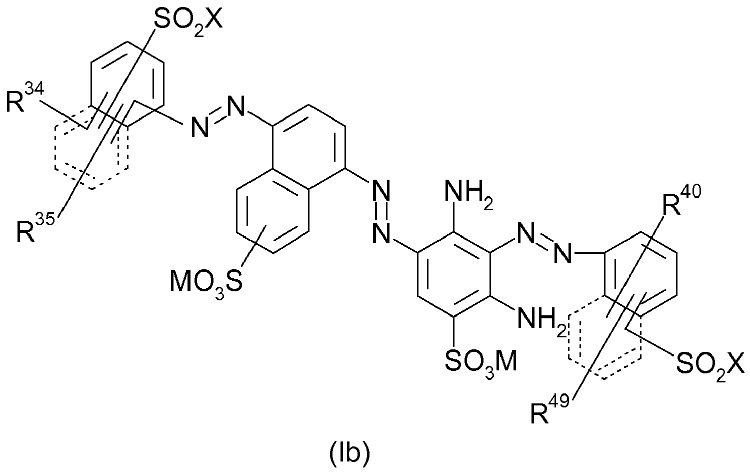 wherein
each of R³⁴, R³⁵, R³⁹ and R⁴⁰ independent of each other is hydrogen, (C₁-C₄)alkyl (C₁-C₄)alkoxy, SO₃M or COOM,
M is the same as defined in claim 1 and
X is vinyl or β-sulfatoethyl.

4. Dye mixture(s) acoording to any one of claims 1 to 3, comprising at least one dye of the general formula (IIa) or (IIb) 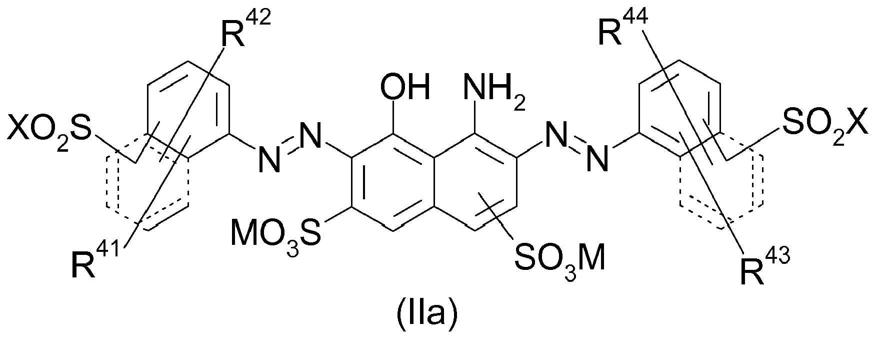 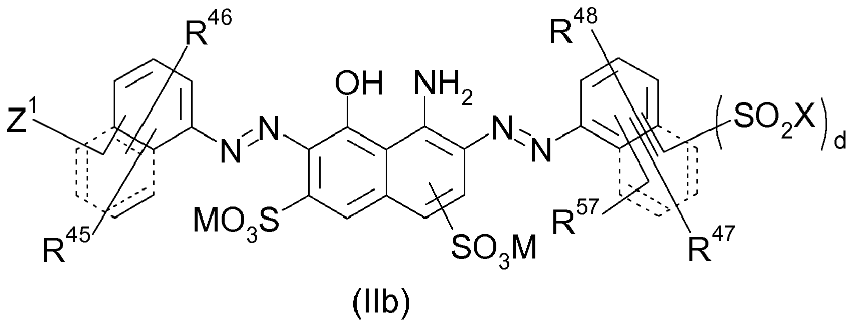 wherein, in the formula (IIa) or (IIb),
each of R⁴¹ to R⁴⁸ and R⁵⁷, independent of each other is hydrogen, (C₁-C₄)alkyl, (C₁-C₄)alkoxy or SO₃M,
Z¹ is defined as in claim 1 whereby
c is 0 or 1,
R⁶ and R⁷ are hydrogen,
R¹⁶ to R²¹, independent of each other is halogen,
R²² is hydrogen,
each of R²³, R²⁴ and R²⁶ independent of each other is hydrogen, (C₁-C₄)alkyl, (C₁-C₄)alkoxy, SO₃M or COOM or aryl,
each of R²⁵, R²⁷ and R²⁸ independent of each other is hydrogen, (C₁-C₄)alkyl, (C₁-C₄)alkoxy, SO₃M or COOM,
R²⁴ can also be -CH₂CH₂-SO₂-X, where X is vinyl or a radical -CH₂CH₂-Y where Y is a group removable under alkaline conditions, and
R²⁸ can also be -SO₂-X where X is the same as defined above,
X is vinyl or β-sulfatoethyl.

5. Dye mixture(s) according to any one of claims 1 to 4, which comprise at least one dye of formula (Ib) 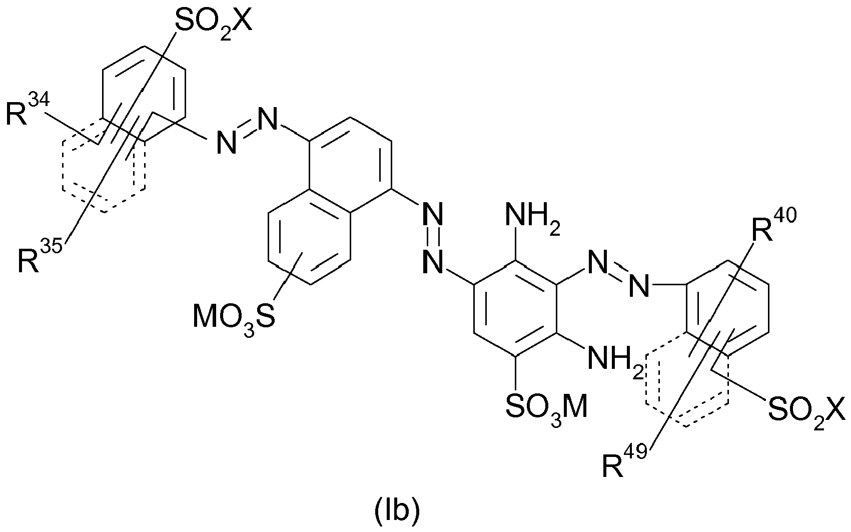 and at least one dye of general formula (IIa) or (IIb) 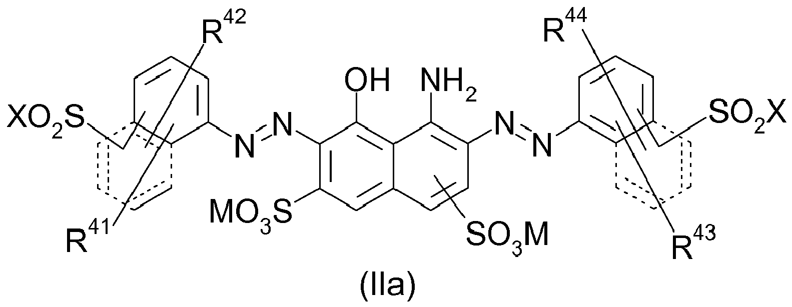 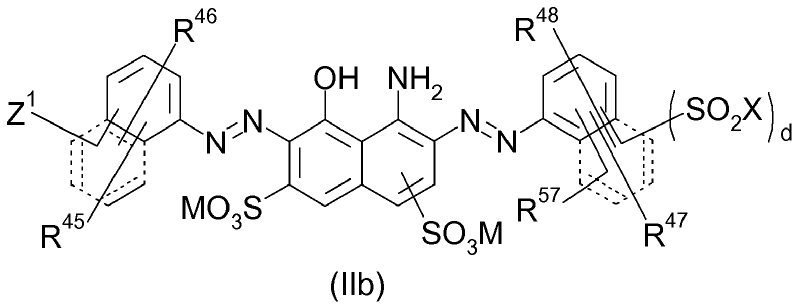 wherein,
each of R³⁴, R³⁵, R³⁹ and R⁴⁰, independent of each other is hydrogen, (C₁-C₄)alkyl, (C₁-C₄)alkoxy, SO₃M or COOM,
M is the same as defined in claim 1,
X is vinyl or β-sulfatoethyl,
in the formula (IIa) or (IIb),
each of R⁴¹ to R⁴⁸ and R⁵⁷ independent of each other is hydrogen, (C₁-C₄)alkyl, (C₁-C₄)alkoxy or SO₃M,
Z¹ is defined as in claim 1 with
c is 0 or 1,
R⁶ and R⁷ are hydrogen,
R¹⁶ to R²¹ independent of each other is halogen,
R²² is hydrogen,
each of R²³, R²⁴ and R²⁶ independent of each other is hydrogen, (C₁-C₄)alkyl, (C₁-C₄)alkoxy, SO₃M or COOM or aryl,
each of R²⁵, R²⁷ and R²⁸ independent of each other is hydrogen, (C₁-C₄)alkyl, (C₁-C₄)alkoxy, SO₃M or COOM,
R²⁴ can also be -CH₂CH₂-SO₂-X, where X is vinyl or a radical -CH₂CH₂-Y where Y is a group removable under alkaline conditions,
R²⁸ can also be -SO₂-X where X is the same as defined above,
X is vinyl or β-sulfatoethyl.

6. Process for dyeing or printing carboxamido- and/or hydroxyl-containing material, comprising contacting the carboxamido- and/or hydroxyl-containing material with a dye mixture according to any one of claims 1 to 5.

7. Ink for digital textile printing, comprising a dye mixture according to any one of claims 1 to 5.

8. Use of a dye mixture according to any one of claims 1 to 5 for dying fibers, as well as blends of such fibres selected from the group consisting of: synthetic fiber materials, nylon materials, nylon-6, nylon-6.6 and aramid fibres, vegetable fibres, seed fibres, cotton, organic cotton, kapok, coir from coconut husk; bast fibers, flax, hemp, jute, kenaf, ramie, rattan; leaf fibres, sisal, henequen, banana; stalk fibres, bamboo; fibres from animals, wool, organic wool, silk, cashmere wool, alpaca fiber, mohair, Angora fibre as well as fur and leather materials; manufactured, regenerated and recycled fibres, cellulosic fibres; paper fibres, cellulosic regenerated fibres, viscose rayon fibres, acetate and triacetate fibers and Lyocell fibers.

9. Fiber and blends containing such fiber selected from the group consisting of:
synthetic fiber materials, nylon materials, nylon-6, nylon-6.6 and aramid fibres, vegetable fibres, seed fibres, cotton, organic cotton, kapok, coir from coconut husk; bast fibers, flax, hemp, jute, kenaf, ramie, rattan; leaf fibres, sisal, henequen, banana; stalk fibres, bamboo; fibres from animals, wool, organic wool, silk, cashmere wool, alpaca fiber, mohair, Angora fibre as well as fur and leather materials; manufactured, regenerated and recycled fibres, cellulosic fibres; paper fibres, cellulosic regenerated fibres, viscose rayon fibres, acetate and triacetate fibers, and Lyocell fibers comprising a dye mixture according to any one of claims 1 to 5 either in chemically and/or physically bound form.
